# EUROPEAN PATENT SPECIFICATION

(11) **EP 1 134 554 B1**
(45) Date of publication and mention of the grant of the patent: **18.02.2009**
(21) Application number: 01106316.1
(22) Date of filing: 15.03.2001
(51) Int. Cl.: G01C 21/36

(54) **Map display device and navigation device**
Kartenanzeige- und Navigationsvorrichtung
Dispositif d'affichage de plans et de navigation

(30) Priority: 17.03.2000 JP 2000077293
(43) Date of publication of application: 19.09.2001
(73) Proprietor: Panasonic Corporation, Kadoma-shi Osaka 571-8501 (JP)
(72) Inventor: Sakamoto, Kiyomi, Ikoma-shi, Nara-ken (JP); Hamada, Hiroyuki, Yawata-shi, Kyoto-fu (JP); Ata, Teruaki, Osaka-shi, Osaka-fu (JP); Yamashita, Atsushi, Osaka-shi, Osaka-fu (JP)
(74) Representative: Lang, Johannes

(56) References cited:
- EP-A- 0 749 103
- EP-A- 0 932 132
- EP-A- 0 965 970

## Description

### BACKGROUND OF THE INVENTION

### Field of the Invention

The present invention relates to map display devices and navigation devices and, more specifically, to a map display device and a navigation device for analyzing information externally provided through a communications part, and converting the information into applicable object models for display on a map.

### Description of the Background Art

In a conventional type of map display device and navigation device, information about traffic and road regulations from any existing information communications system, and information from the Internet are not displayed on a navigation map but on a separately-provided schematic map. That is, such information is not converted into applicable object models for display on the navigation map.

Here, the existing information communications system includes VICS (Vehicle Information and Communication System), wherefrom road information about traffic jam and accidents is sent out in real time through FM multiplex broadcasting, radio beacon, optical beacon, and the like.

The information about traffic jam often includes link numbers assigned to roads to specify which road is jammed. To represent such information, the conventional navigation device uses a schematic map additionally provided for the purpose.

If represented on the navigation map, such information is not converted into object models applicable for display thereon, but a jammed road is accordingly changed merely in color. This is because object models prepared for map display are unchangeable, and thus color change is the only way left for the conventional navigation device to display such information without newly creating object models.

In the recent type of navigation device, an Internet browser is additionally installed, and information therefrom is displayed on a separately-provided map. Accordingly, with an communications part internally provided in the device, usually-isolated drivers in vehicles can become communicate with outside through the Internet.

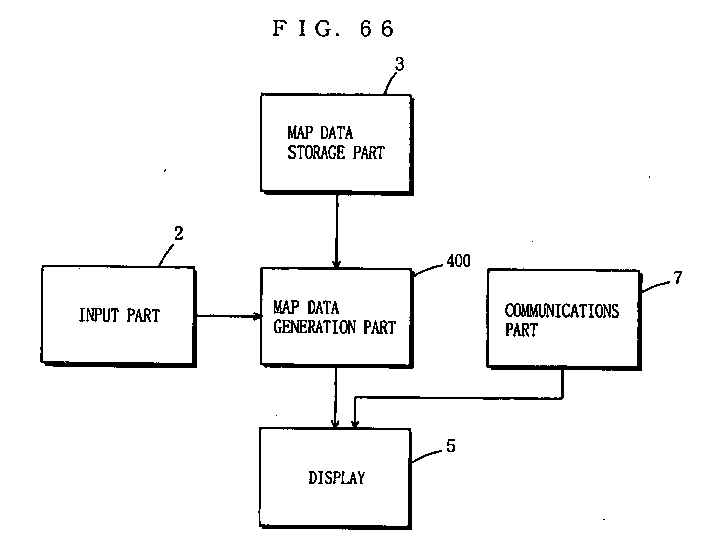

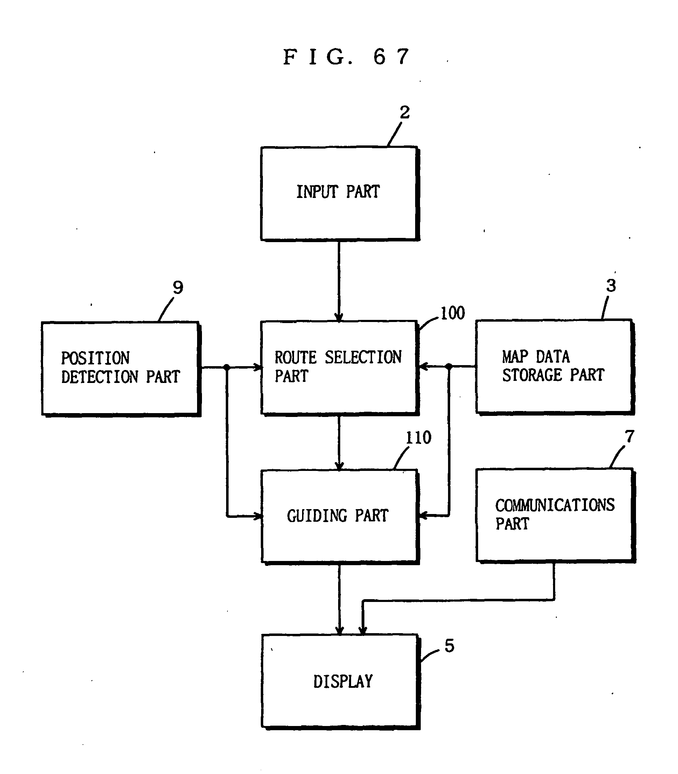

With reference to FIGS. 66 and 67, described next is the structure and operation of such conventional map display device and navigation device. FIG. 66 is a block diagram showing the structure of the conventional map display device, which includes an input part 2, a map data storage part 3, a map data generation part 400, a display 5, and a communications part 7.

The input part 2 is provided for functional selection and point settings in this map display device. Outputted from the input part 2 is instruction information, which is forwarded to the map data generation part 400.

The map data storage part 3 in advance stores 2D or 3D map data indicating a specific area by geographical features, and in the area, intersections and road connections are defined by coordinates, shape, attribute, regulation information, and the like. The map data stored in the map data storage 3 is read as appropriate by the map data generation part 400 for usage.

The communications part 7 transmits/receives information to/from an external communications system through telephone lines, DAB (Digital Audio Broadcast), and ground wave digital broadcasting, for example. From the communications part 7, information is forwarded to the display 5 without any change.

The map data generation part 400 generates a map image based on the map data stored in the map data storage part 3. Thus generated map image is displayed on the display 5. Here, displayed on the display 5 is not only the map image but also information derived through the Internet, VICS, and the like. Typically, such information is not displayed together with the map image but separately.

FIG. 67 is a block diagram showing the structure of the conventional navigation device, which includes the input part 2, a position detection part 9, the map data storage part 3, a route selection part 100, a guiding part 110, the communications part 7, and the display 5. Here, the navigation device is presumably a vehicle-mounted type.

The input part 2 is user-operable, and used for functional selection (e.g., processing item change, map switching, hierarchical level change) and point settings, for example. Outputted from the input part 2 is instruction information, which is forwarded to the route selection part 100. The position detection part 9 detects where the vehicle is currently positioned. Thus detected information about the vehicle's current position is provided to both the route selection part 100 and the guiding part 110.

The map data storage part 3 in advance stores 2D or 3D map data indicating a specific area by geographical features, and in the area, intersections and road connections are defined by coordinates, shape, attribute, regulation information, and the like. The map data stored in the map data storage 3 is read as appropriate by the route selection part 100 and the guiding part 110 for usage.

The communications part 7 transmits/receives various types of information to/from an external system such as the Internet through telephone lines, DAB, and ground wave digital broadcasting, for example. From the communications part 7, information is forwarded to the display 5 without any change.

The route selection part 100 reads the map data from the map data storage part 3 only for a required area according to the instruction information provided by the input part 2. The route selection part 100 then determines a starting point and a destination based particularly on point information included in the instruction information, and information about the vehicle's current position provided by the position detection part 9. Thereafter, the route selection part 100 searches for a route minimum in cost between the starting point and the destination. A result obtained thereby is outputted to the guiding part 110 as route information.

Based on all of the route information from the route selection part 100, the information about the vehicle's current position from the position detection part 9, and the map data from the map data storage part 3, the guiding part 110 generates a 2D or 3D landscape map image for output to the display 5.

The display 5 displays thus generated map image not together but separately from information derived through the Internet, VICS, and the like.

As such, with the above-structured map display device and navigation device, the latest information about traffic information and parking lot, for example, is easily accessible. Accordingly, with such information being latest, the conventional map display device and navigation device advantageously have a user correctly understand what is going on on the way to his/her destination.

The issue here is, the conventional navigation device basically displays information displayed on the Internet browser separately from a navigation map image. As for VICS, traffic jam information therefrom is not represented on the navigation map image but on a separately-provided schematic map image. As a result, the user becomes busy moving his/her eyes between two images for information comparison and relevance finding, which preferredly requires the user to stop his/her vehicle. Therefore, when the vehicle is in motion, such advantages as described above are not fully used. This is always true even if the navigation device is a take-it-with-you type or a type equipped in some other mobile unit, for example.

For the conventional navigation device, however, displaying various types of information all together on a navigation map image without newly creating object models is quite difficult, except changing the color of roads and other object models.

Considered here is such structure that any image and 3D polygon data necessary for creating new object models are provided via communications part. The map display device and the navigation device then appropriately arrange those on a map image for display. With such structure, however, the amount of information is consequently increased, and thus this structure is not economically practical.

In another possible structure, the map display device and the navigation device previously store data necessary for object models varied in type each corresponding to information. With such structure, however, a storage medium for object model is required to be large in capacity, resulting in low cost-effectiveness.

Document EP 0 749 103 A1 discloses an automotive navigation apparatus and recording medium storing program therefor. A map searching unit reads from a map storing unit map data adjacent to the current position of a vehicle calculated by a position calculator or a map data having a range of a map to be displayed specified by an input unit. A processing unit performs a perspective transformation of eye point and focus point coordinates inputted from the input unit, maps the map data on the transformed coordinates, performs clipping, and then makes an output unit display on the map after mapping. Although it is possible to have a three-dimensional displaying of a terrain, it is not possible to get quite easy any time related information.

Therefore, the problem of the present invention is to provide a map display device a navigation device and a map display method helping a user intuitively understand information without busily moving his/her eyes. The problem is solved by the features of claim 1 for a map display device, by the features of claim 24 for a navigation device and by the features of claim 45 for a map display method. The dependent claims 2-23, 25-44, 46-49 will develop the features of the independent claims 1, 24 and 45. It is advantageous regarding the solution of the problem that the information includes time varying information about regulations, traffic jam, and various information accessible through the Internet, which are all arranged on a map image for display.

Another advantage of the present invention is, in the map display device and the navigation device, to reduce the capacity of a storage medium for object model while reducing the amount of incoming information.

The present invention has the following features which will now mentioned and explained in further detail.

A first aspect of the present invention is directed to a map display device for converting externally provided communications information into an applicable object model for arrangement on a map image, the device comprising:
an input part for receiving a user's instruction;
a map data storage part for previously storing map data;
an object model display information storage part for storing object model display information for displaying the object model on said map image;
a communications part for receiving the communications information;
a map data arranging part for creating the object model by interpreting the communications information and the object model display information provided by the object model display information storage part, and arranging the object model on the map; and
a display part for displaying a resultant map image obtained by the map data arranging part.

As described above, according to the first aspect, object models are appropriately arranged on a map space for display based on map data stored in the map data storage part, information provided by the communications part, and another information stored in the object model display information storage part. Therefore, the user has no need to busily moving his/her eyes to understand various time-varying information about regulations and traffic jam, for example, and information provided via the Internet. Further, since such information is represented in a manner aiming for the user's intuitive understanding, better viewability is offered to the user.

Here, stored in a recording medium in advance is object model display information, which requires real time change in display conditions and contents. Therefore, if conditions are satisfied at time of execution, object model creation and deletion can be immediately done. Accordingly, the recording medium can be reduced in capacity, and further, even if the object model display information is updated or object model addition/deletion is done via the communications part, the capacity is also reduced. Thus, the map display device can be economically practical.

Also in the first aspect of the present invention, the communications information may include time-varying information, and if so, such time-varying information may be plurally included. Also, the communications information may include traffic information, advertisement information, and position information corresponding to a specific position on the map image.

By externally receiving such time-varying communications information, which is different from landmark information usually unchangeably included in general type of map data, and by converting such information into applicable object models in real time, the user can easily and intuitively understand the latest information about traffic, availability level of parking lots, and the like.

Also in the first aspect of the present invention, the object model display information may include information about shape of the object model, and information about behavior in time and space of the object model.

If this is the case, information to be stored in the object model display information storage part includes both information about shape and behavior in time and space. Therefore, the information can be easily controlled especially when the object model display information is entirely or partially replaced with a new version.

The information about behavior in time and space for the object model may be described in an object-oriented interpreter language having no need for compilation.

If so, information stored in the object model display information can be described in a script which can be immediately executed and easily created, making the object model display information independent of the map display device. Accordingly, the operation on the side of a server from which the object model display information is provided can be less loaded. Also, by using a standard script language such as JAVA, for example, the object model display information becomes widely accessible through a network, improving the object model display information in availability and reusability.

Here, the information about behavior in time and space may include an execution condition and an execution function.

If so, there is no need to fixedly set execution conditions. Accordingly, object models are not limited in their response to the user's input and information provided by the communications part, rendering the object models appear in an unexpected and flexible manner.

Also in the first aspect of the present invention, the map data arranging part may arrange a newly created object model appropriately on a road image in the map image, or the object model may plurally created for arrangement along the road image. By doing so, the user can easily and intuitively understand information relevant to the road, for example, information about accident and traffic jam.

Also, the map data arranging part may include an object model display information execution part for interpreting and executing the communications information and the corresponding object model display information provided by the object model display information storage part, an object creation part for creating an object model responsively to a result obtained by the object model display information execution part, and a data arranging part for arranging the object model on the map image. Further, possibly included therein are a 3D map image generation part for generating a 3D map image based on 2D map data provided by the map data storage part, and a 2D/3D coordinate transformation part for transforming a 2D object model created by the object model creation part into a 3D object model.

With such structure, generated based on the 2D data are a 3D object model and a map image. Therefore, the recording medium for storing the object model display information and map data can be reduced in capacity.

Next, in a second aspect of the present invention, the map display device further comprises a time information storage part for storing time information corresponding to a position of a mobile unit which moves according to schedule on a predetermined route, and the map data arranging part refers to the time information to create the object model corresponding to the mobile unit for arrangement on the map image. Also, the map data arranging part refers to the time information to select only the object model corresponding to the mobile unit to be displayed on the map image, and calculates a position of the object model on the map image for data arrangement.

With such structure, the user will see a map image displaying an object model corresponding to the time information, for example, a train object on the move. Since such information is represented in a manner aiming for the user's intuitive understanding, better viewability is offered to the user. For example, the user in an actual train can understand more intuitively, together with the map image, where his/her train is now and to which direction it is heading.

Next, in a third aspect of the present invention, the communications part receives the communication information including information for specifying a faregate to be passed through, and if necessary, transmits charge information for a charge processing, and the map data arranging part creates, if necessary, the object model corresponding to the communications information for arrangement on the map image, and generates the charge information. Also, the map data arranging part generates the charge information by referring to the communications information related to the faregate placed at an entrance and an exit for a predetermined chargeable section, and creates an object model including a fare for the chargeable section for arrangement on the map image. Also, the map display device may further comprises a ticket information storage part for storing ticket information corresponding to a ticket used for paying the fare for the chargeable section. Here, the ticket information may include information about an expiration date of the ticket, and the map data arranging part may refer to such information to create a message, if necessary, for display on the display part.

With such structure, the map display device operates as a terminal of an automated fare-collection system so that better usability is offered to the user, and further, represents various information such as fare in more intuitive manner so that better viewability is also offered to the user.

In a fourth aspect of the present invention, the communications part receives the communications information including position information about any available vehicle, and when the user desires to take one of the available vehicles, transmits selected vehicle information including information for specifying which vehicle the user desires to take, and the map data arranging part creates the object model corresponding to the communications information for arrangement on the map image, and when the user desires to take one of the available vehicles, generates the selected vehicle information. Here, the available vehicles may be located within a predetermined area range close to a current position, and may move according to schedule on a predetermined route. Also, the communications part may transmit a request for vehicle information including the current position for an externally provided information center, and receives the communications information including the position information of the available vehicles selected by the information center. Further, the map data arranging part may refer to the communications information, create the object model each corresponding to the available vehicle, and if necessary, create an object model each including information about the available vehicles for arrangement on the map image.

With such structure, the map display device operates as an information terminal about any available vehicle, for example, taxis and buses, and offers better usability to the user. Further, various information are represented in more intuitive manner about where the taxis and buses are currently located and fares therefor so that better viewability is also offered to the user.

In a fifth aspect of the present invention, a navigation device for converting externally provided communications information into an applicable object model for arrangement on a map image, and making a guidance to a destination comprises, in addition to the map display devices of the first to third aspects, a position detection part for detecting a current position; a route selection part for selecting a route to the destination based on the instruction provided by the input part, the current position detected by the position detection part, and the map data stored in the map data storage part; and a guiding part for making the guidance to the destination in response to the communications information received by the communications part, the route selected by the route selection part, the current position detected by the position detection part, and the map data provided by the map data storage part, and outputs a resultant map image obtained by the map data arranging part.

As described above, in the fifth aspect of the present invention, realized is a navigation device similarly effective to the map display device of the above described first to fourth aspects.

A sixth aspect (compare claim 45) of the present invention is such map display method as to functionally realize the map display device of the first to fourth aspects. With such map display method, externally provided communications information is arranged on the map image in the form of applicable object models.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a map display device according to a first embodiment of the present invention;
FIG. 2 is a diagram showing the structure of a map display device, which is realized in a general computer system;
FIG. 3 is a flowchart showing the operation of a map data arranging part 4 in the map display device of FIG. 1;
FIG. 4 is a diagram showing, in a tree structure, the contents of information transmitted from a communications part 7;
FIG. 5 is a flowchart showing the detailed process of subroutine step S13 in FIG. 3;
FIG. 6 is a diagram exemplarily demonstrating the contents of object model display information;
FIG. 7 is a diagram showing a specific example of object model display information corresponding to miscellaneous information as shown in FIG. 4;
FIG. 8 is a diagram in assistance of demonstrating when to carry out methods in information about behavior in time and space in FIG. 7,
FIG. 9 exemplarily shows function names and contents thereof, corresponding to traffic information, stored in object model display information storage part 6;
FIG. 10 exemplarily shows function names and contents, corresponding to emergency information, parking lot information, and vehicle-to-vehicle communications information, stored in the object model display information storage part 6;
FIG. 11 is a diagram exemplarily showing what the traffic jam information provided from VICS, for example, via the communications part 7 carries in what order;
FIG. 12 is a flowchart showing the procedure when a function to present traffic jam information is executed;
FIG. 13 shows an interrelation table indicating the relation to map data stored in the map data arranging part 4;
FIG. 14 shows a schematic map viewed from above for showing a relation between vehicle polygons and roads;
FIG. 15 shows the same map as FIG. 14 but viewed from an interpolation point number 544 at ground level;
FIG. 16 shows an exemplary map image generated by the map display device of the first embodiment;
FIG. 17 is a block diagram showing the detailed structure of the map data arranging part 4;
FIG. 18 is a block diagram showing the detailed structure of an execution part 41;
FIG. 19 is a flowchart showing the detailed process of subroutine step S133;
FIG. 20 is a block diagram showing the detailed structure of a display data arranging part 42, a resultant map image generated thereby is of 2D landscape;
FIG. 21 is a block diagram showing the detailed structure of the display data arranging part 42, a resultant map image generated thereby is of a bird's eye view;
FIG. 22 is a diagram demonstrating a technique for creating a bird's eye view by subjecting 2D map data to perspective transformation;
FIG. 23 shows an exemplary map image of a bird's eye view generated by the display data arranging part 42;
FIG. 24 is a block diagram showing the detailed structure of the display data arranging part 42, a resultant image data generated thereby is of a 3D landscape different from a bird's eye view;
FIG. 25 is a block diagram showing the detailed structure of a 3D map data generation part 147;
FIG. 26 is a block diagram showing the detailed structure of the display data arranging part 42, which receives 2D data from the execution part 41 and 3D map data from the map data storage part 3, and generates a map image of 3D landscape;
FIG. 27 is a diagram exemplarily showing several image files prepared as 2D shape information in object model display information;
FIG. 28 shows an exemplary map image of 3D landscape generated by the display data arranging part 42 of FIG. 26:
FIG. 29 is an exemplary map image of 3D landscape on which 2D object models indicative of traffic jam are arranged;
FIG. 30 is another exemplary map image of 3D landscape on which 2D objects indicative of accident are arranged;
FIG. 31 is still another exemplary map image of 3D landscape on which 2D objects indicative of construction are arranged;
FIG. 32 shows the same map image as FIG. 31, but the viewpoint is different;
FIG. 33 is a block diagram showing the structure of a navigation device according to a second embodiment of the present invention;
FIG. 34 is a diagram showing the structure of a navigation device, which is realized in a general computer system;
FIG. 35 is a flowchart showing a basic flow of processing in the navigation device of the second embodiment;
FIG. 36 is a block diagram showing the structure of a map display device according to a third embodiment of the present invention;
FIG. 37 shows exemplary time information stored in a time information storage part 8;
FIG. 38 is a flowchart showing the operation of the map data arranging part 4 in the map display device of the third embodiment ;
FIG. 39 is a flowchart showing the detailed process of subroutine step S42 in FIG. 38;
FIG. 40 is a diagram showing which train reaches at what station at what time;
FIG. 41 is a block diagram showing the structure of a map display device of a map display device according to a fourth embodiment of the present embodiment;
FIG. 42 is a flowchart showing the processing carried out by the map data arranging part 4, which operates as a terminal of an automated fare-collection system;
FIG. 43 is a diagram showing predetermined symbols to be displayed in step S615;
FIG. 44 is a flowchart showing the detailed process of subroutine step S616 in FIG. 42;
FIG. 45 is a diagram showing exemplary ticket information stored in the ticket information storage part 12;
FIG. 46 is a diagram showing information transmitted by the automated fare-collection center in a case where a user uses a train with the map display device carried along;
FIG. 47 is a block diagram showing the structure of a navigation device of a fifth embodiment of the present invention:
FIG. 48 is a flowchart showing the processing in the navigation device, operating as a terminal in an automated toll-collection system;
FIG. 49 is a diagram showing predetermined symbols to be displayed in step S627 in FIG. 48;
FIG. 50 is a diagram showing information transmitted by the automated toll-collection center in a case where the present navigation device is used as an ETC terminal;
FIG. 51 is a diagram showing the entire structure of a taxi call system including a navigation device operating as a taxi call terminal;
FIG. 52 is a flowchart showing the operation of a central processing part 40 in a taxi center 2000 for dispatching a taxi;
FIG. 53 is a flowchart showing the processing executed by a navigation device of a sixth embodiment of the present invention;
FIG. 54 is a flowchart showing the detailed process in subroutine step S87;
FIG. 55 is a diagram showing a specific example of taxi object model display information;
FIG. 56 is a diagram exemplarily showing a function name and contents thereof for taxi call;
FIG. 57 is a diagram showing the operation of the navigation device of the sixth embodiment;
FIG. 58 is a diagram showing the entire structure of a bus riding system including a navigation device 1050 operating as a terminal for notifying buses of a user's intention of riding;
FIG. 59 is a flowchart showing the operation of a central processing part 45 in a bus center 4000;
FIG. 60 is a flowchart showing the processing executed by a navigation device operating as a terminal for examining bus information;
FIG. 61 is a flowchart showing the detailed process in subroutine step S970;
FIG. 62 is a diagram showing a specific example of bus object model display information;
FIG. 63 is a diagram exemplarily showing a function name and contents thereof for bus call;
FIG. 64 is a diagram showing the operation of a navigation device of a seventh embodiment;
FIG. 65 shows an exemplary map image having other users' positions each displayed on the map image;
FIG. 66 is a block diagram showing the structure of a conventional map display device; and
FIG. 67 is a block diagram showing the structure of a conventional navigation device.

### DESCRIPTION OF THE PREFERRED EMBODIMENTS

### (Basic Concept of the Invention)

Prior to describing the present invention in detail with embodiments, a basic concept thereof is described for easy understanding.

Devices according to embodiments of the present invention each receive external information, convert the information into applicable object models equal in dimension to a map space (e.g., 3D map space) displayed thereon, and arrange the resultant object models in the map space for display. Accordingly, a user can intuitively understand time-varying information about regulations and traffic jam, and various information available from the Internet without busily moving his/her eyes. The devices of the following embodiments thus can offer better viewability and usability to the user.

If being 3D, the map surely looks rather realistic, but the amount of information is increased if polygon data corresponding to 3D object models is transmitted as it is. Further, in such case, data arrangement is not carried out on a terminal side, and thus data is not customized to suit the circumstances for display. Conversely, with devices of the present invention, data is transmitted after compressed, and a user interface can be flexibly built to suit the circumstances and the user's preferences.

Note herein that, the present devices are each described as a vehicle-mounted type or a take-it-with-you type. This is not restrictive, and if described as the vehicle-mounted type, the device also may be the take-it-with-you type or a type equipped in some other mobile unit, for example.

Here, the foregoing description of the basic concept shall be applicable only for easy understanding of the present invention, and shall not be applied for unreasonably narrow interpretation of the scope of the invention.

### (First Embodiment)

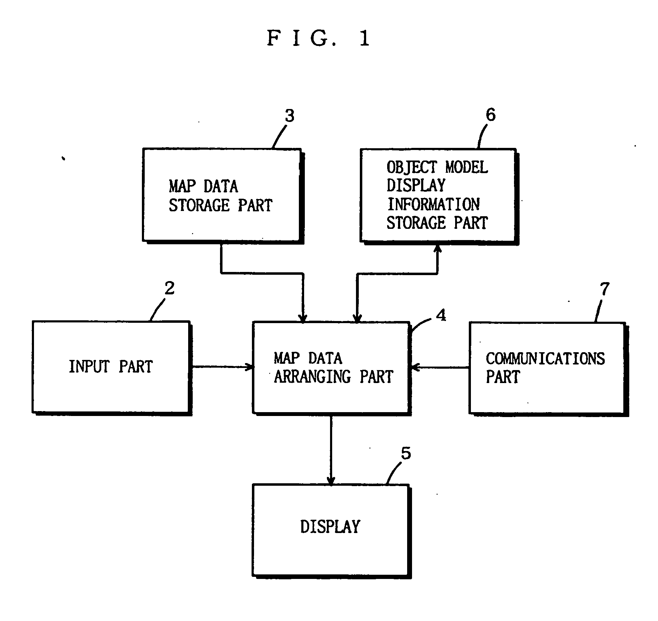

FIG. 1 is a block diagram showing the structure of a map display device according to a first embodiment of the present invention. In FIG. 1, the map display device includes the input part 2, the map data storage part 3, a map data arranging part 4, the display 5, an object model display information storage part 6, and the communications part 7. Here, any constituent found in FIGS. 66 and 67 is denoted by the same reference numeral.

The input part 2 is user-operable and composed of a remote controller, touch sensor, keyboard, mouse, and the like. With the input part 2, functional selection and point settings for the map display device (processing item change, map switching, hierarchical level change), for example, are done. Outputted from the input part 2 is instruction information, which is forwarded to the map data arranging part 4.

The map data storage part 3 is composed of an optical disk (e.g., CD, DVD), hard disk, semiconductor memory card (e.g., SD card), and the like. Stored in the map data storage part 3 is 2D or 3D map data indicating a specific area by geographical features, and in the area, intersections and road connections are defined by coordinates, shape, attribute, regulation information, and the like. The map data stored in the map data storage 3 is read as appropriate by the map data arranging part 4 for usage.

The communications part 7 transmits/receives information to/from an external system typically through the Internet, and generally through telephone lines, DAB, and ground wave digital broadcasting, for example.

As is the map data storage part 3, the object model display information storage part 6 is also composed of an optical disk (e.g., CD, DVD), hard disk, semiconductor memory card (e.g., SD card), and the like. Stored therein is information about a technique for presenting 2D or 3D object models on a map image according to the information provided by the communications part 7 or the input part 2. About the technique and the details of the information are left for later description.

The map data arranging part 4 arranges object models in a map space. This arrangement is done based all on the map data stored in the map data storage part 3, the information provided by the communications part 7, and the information stored in the object model display information storage part 6. Here, the map data arranging part 4 may be functionally realized in the form of software controlled by a CPU. If so, a storage medium accordingly storing a program for controlling the software is implemented in the map display device. The program may be the one transmitted over a communications circuit.

The display 5 is composed of a display device (e.g., liquid crystal display, CRT display), speaker, and the like, and displays a resultant map image provided by the map data arranging part 4. Alternatively, the display 5 may output sounds for guidance with or without performing display.

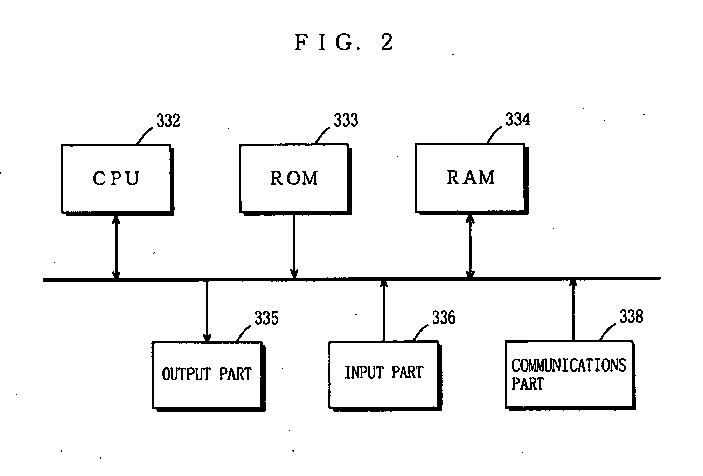

Such structured map display device of FIG. 1 can be realized in a general computer system. The structure of a map display device realized as such is shown in FIG. 2.

In FIG. 2, the map display device includes a CPU 332, ROM 333, RAM 334, an output part 335, an input part 336, and a communications part 338, all of which are interconnected by a system bus. Here, presumably, the ROM 333 possibly includes a storage device such as read-only memory provided inside the computer and an external storage medium (e.g., optical disk (CD, DVD, for example), semiconductor memory card). Similarly, the RAM 334 is presumed to possibly include a storage device such as readable/writable memory provided inside the computer and a readable/writable external storage medium (e.g., optical disk (CD-R/W, DVD-RAM, for example), hard disk, semiconductor memory card).

In FIG. 2, the CPU 332 operates in accordance with a program stored in either or both of the ROM 333 and the RAM 334. The map data arranging part 4 is functionally realized by the program. In such case, a recording medium typically storing such program is implemented in the map display device. The program may be the one transmitted over a communications circuit.

The ROM 333 typically includes the map data storage part of FIG. 1, or the RAM 334 may do so entirely or partially. Similarly, the RAM 334 typically includes the object model display information storage part 6, or the ROM 333 may do so.

As such, differences are rather apparent between the map display device of FIG. 1 and the conventional map display device of FIG. 66. In detail, the object model display information storage part 6 is newly provided, and the map data arranging part 4 is provided as an alternative to the map data generation part 400, which receives an output from the communications part 7. Described next is the operation of those.

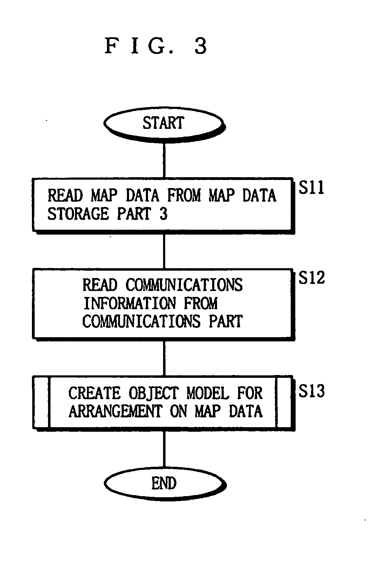

FIG. 3 is a flowchart showing the operation of the map data arranging part 4 in the map display device of FIG. 1. With reference to FIG. 3, the operation of the map data arranging part 4 is described.

In step S11 of FIG. 3, the map data arranging part 4 first reads, from the map data storage part 3, map data corresponding to a map number, a display command, and the like, provided by the input part 2.

Next, in step S12, the map data arranging part 4 reads time-varying communications information from the communications part 7. As is time-varying, the communications information needs to be read at least once from an external information source via the communications part 7. In this sense, the communications information is unlike general landmark information only about location and shape of landmark buildings.

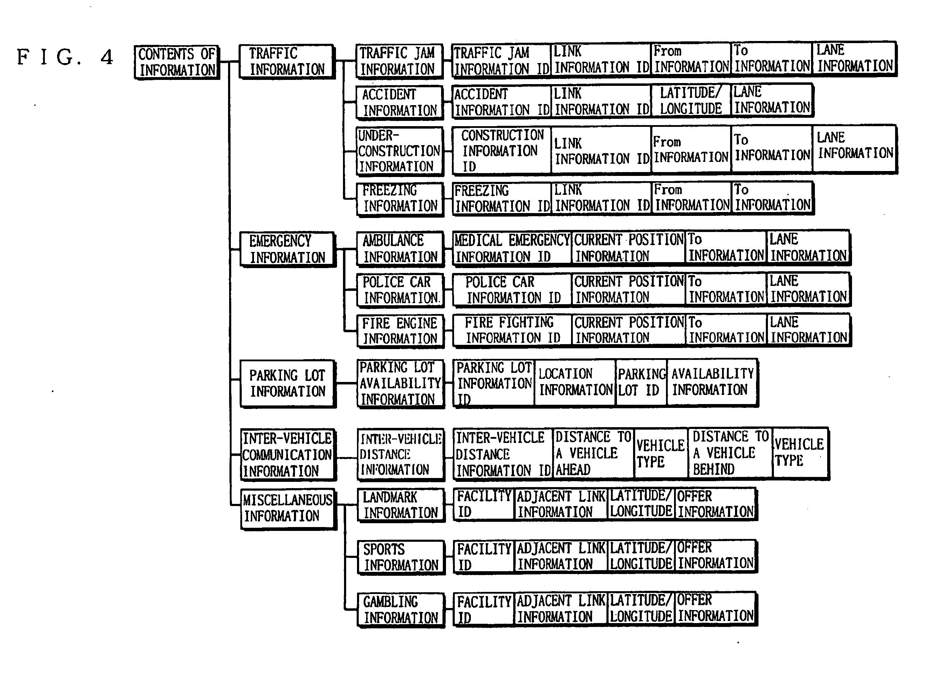

The information provided from the communications part 7 includes such information as shown in FIG. 4, for example. FIG. 4 is a diagram showing, in a tree structure, the information transmitted from the communications part 7. As shown in FIG. 4, the information is mainly classified into traffic information, emergency information, parking lot information, vehicle-to-vehicle communications information, and miscellaneous information. Here, the information in FIG. 4 is merely an example, and may not necessarily include all of those information or may include other information.

In FIG. 4, the traffic information includes traffic jam information, accident information, under-construction information, and freezing information. Specifically, the traffic jam information is composed of a traffic jam information ID and link data. Here, a link is a unit for positionally specifying a specific part of a road. The link data typically includes link information, *From* information, *To* information, and lane information. Here, the traffic jam information ID is an information identification number for identifying that the accompanying link data is the traffic jam information. The link information is a link number corresponding to each road to specify which road is jammed. The *From* information indicates, exemplarily by interpolation point number, a starting point of the traffic jam on the link, while the *To* information an ending point. The lane information indicates, exemplarily by lane number, which lane is jammed. Here, the link data included in the traffic jam information may be plural.

The accident information is composed of an accident information ID and link data. The link data typically includes link information, latitude/longitude, and lane information. Here, the accident information ID is an information identification number for identifying that the accompanying link data is the accident information. The link information is a link number corresponding to each road to specify on which road the accident occurred. The latitude/longitude shows the applicable link by latitude and longitude. The lane information indicates, exemplarily by lane number, on which lane the accident occurred.

The under-construction information is composed of an under-construction information ID and link data. The link data typically includes link information, *From* information, *To* information, and lane information. Here, the under-construction information ID is an information identification number for identifying that the accompanying link data is the under-construction information. The link information is a link number corresponding to each road to specify which road is under construction. The *From* information indicates, exemplarily by interpolation point number, a starting point of the construction on the link, while the *To* information an ending point. The lane information indicates, exemplarily by lane number, which lane is under construction. Here, the link data included in the under-construction information may be plural.

The freezing information is composed of a freezing information ID and link data. The link data typically includes link information, *From* information, and *To* information. Here, the freezing information ID is an information identification number for identifying that the accompanying link data is the freezing information. The link information is a link number corresponding to each road to specify which road is frozen. The *From* information indicates, exemplarily by interpolation point number, a starting point of freezing on the link, while the *To* information an ending point. The lane information indicates, exemplarily by lane number, which lane is frozen. Here, the link data included in the freezing information may be plural.

Next, the emergency information includes ambulance information, police car information, and fire engine information. Specifically, the ambulance information is composed of a medical emergency information ID and link data. The link data typically includes current position information, *To* information, and route information. Here, the medical emergency information ID is an information identification number for identifying that the accompanying link data is the ambulance information. The current position information indicates where the ambulance currently is. The *To* information indicates a destination of the ambulance, and may be a location where an injured or sick person is waiting, a location or a facility number of a hospital, and the like. The route information is about an estimated route through which the ambulance is expected to pass. Here, the route information may be calculated by route search carried out based on the current position information and *To* information.

The police car information composed of a police car information ID and link data. The link data typically includes current position information, *To* information, and route information. The police car information ID is an information identification number for identifying that the accompanying link data is the police car information. The current position information indicates where the police car currently is. The *To* information indicates a destination of the police car, and may be a location where an incident occurred, a location or a facility number of a police station, and the like. The route information is about an estimated route through which the police car is expected to pass. Here, the route information may be calculated by route search carried out based on the current position information and *To* information.

The fire engine information is composed of a fire fighting information ID and link data. The link data typically includes current position information, *To* information, and route information. The fire fighting information ID is an information identification number for identifying that the accompanying link data is the fire engine information. The current position information indicates where the fire engine currently is. The *To* information indicates a destination of the fire engine, and may be a location where a fire broke out, a location or a facility number of a hospital, and the like. The route information is about an estimated route through which the fire engine is expected to pass. Here, the route information may be calculated by route search carried out based on the current position information and *To* information.

The parking lot information includes parking lot availability information, and the like. The parking lot availability information is composed of a parking lot information ID and link data, for example. The link data typically includes location information, a parking lot ID, and availability information. The parking lot information ID is an information identification number for identifying that the accompanying link data is the parking lot information. The location information indicates where the parking lot is located. The parking lot ID is a facility number assigned to the parking lot. The availability information indicates the availability level of the parking lot.

The vehicle-to-vehicle communications information includes inter-vehicle distance information, and the like. The inter-vehicle distance information is composed of an inter-vehicle distance information ID and link data, for example. The link data typically includes information about an inter-vehicle distance to a vehicle ahead, a vehicle type thereof, an inter-vehicle distance to a vehicle behind, and a vehicle type thereof. The inter-vehicle distance information ID is an information identification number for identifying that the accompanying link data is the inter-vehicle information.

Lastly, the miscellaneous information includes landmark information, sports information, and gambling information. Specifically, the landmark information is composed of a facility ID and link data, for example. The landmark information herein includes offer information about landmark buildings, specifically about shop type, advertisement, and the like. To be specific, the advertisement information includes text or image information for advertising the shop and merchandise, for example, what services are available, when is a sale, and what type of event is expected. The link data typically includes adjacent link information, latitude/longitude, and the offer information as above described. The facility ID is an information identification number for identifying that the accompanying link data is information about a landmark building, for example. The adjacent link information is about a link closest to the landmark building. The latitude/longitude indicates the location of the landmark building by latitude and longitude.

The sports information is composed of a facility ID and link data, for example. The link data typically includes adjacent link information, latitude/longitude, and offer information. The facility ID is an information identification number for identifying that the accompanying link data is information about a sports facility, for example. The adjacent link information is about a link closest to the sports facility. The latitude/longitude indicates the location of the sports facility by latitude and longitude. The offer information is about a game result, for example.

The gambling information is composed of a facility ID and link data, for example. The link data typically includes adjacent link information, latitude/longitude, and offer information. The facility ID is an information identification number for identifying that the accompanying link data is information about a gambling facility, for example. The adjacent link information is about a link closest to the gambling facility. The latitude/longitude indicates the location of the gambling facility by latitude and longitude. The offer information is about a gambling result, for example.

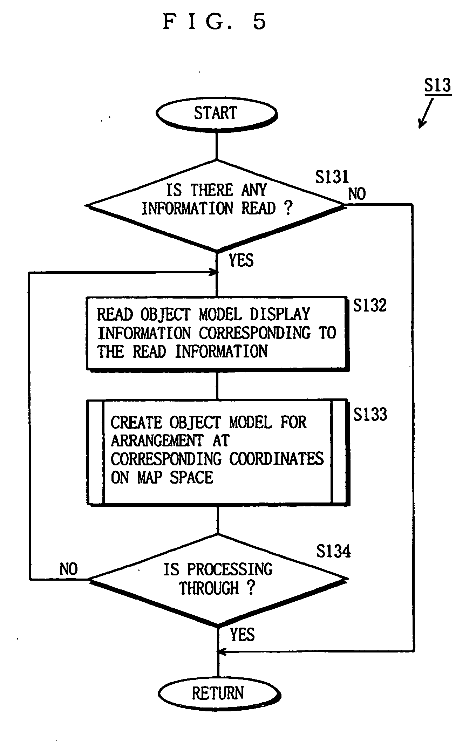

Next, in subroutine step S13 in FIG. 3, the map data arranging part 4 refers to both the communications information read by the communications part 7 and the information stored in the object model display information storage part 6 so as to create a 2D or 3D object model. Thus created object model is arranged on the map data read from the map data storage part 3. The details of subroutine step S13 are described in detail next with reference to FIG. 5.

FIG. 5 is a flowchart showing the detailed process of the subroutine step S13 in FIG. 3. In step S131 in FIG. 5, the map data arranging part 4 determines whether there is any communications information read by the communications part 7, and if any, determines whether a map image covers corresponding coordinates included in the communications information. If there is no communications information, or if the map image does not cover such coordinates, this is the end of subroutine step S13, and the procedure returns to the main routine. Conversely, if there is any communications information, and if the map covers the corresponding coordinates, the procedure goes to step S132.

In step S132, the map data arranging part 4 reads, from the object model display information storage part 6, object model display information corresponding to the communications information. Here, the object model display information may be entirely or partially included in the communications information.

Here, when creating an object model, the map data arranging part 4 typically assigns parameters of the communications information read by the communications part 7 to a corresponding function in the object model display information. Thus created object model is so arranged on the map image as to positionally match in a map space. A resultant map image is displayed on the display 5 (subroutine step S133).

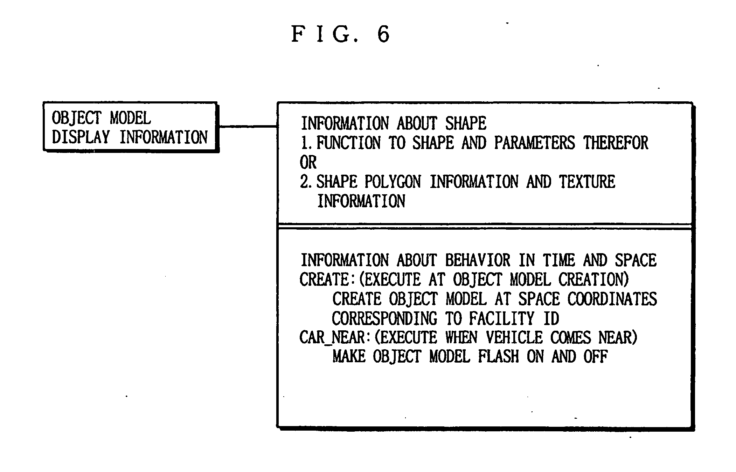

Described next is about the object model display information. FIG. 6 is a diagram exemplarily showing the contents of the object model display information, which is typically classified into information about shape and behavior in time and space.

The information about shape is directly represented by a description specifying polygon information and a texture mapped thereto, or indirectly represented by a description specifying a function and parameters.

The information about behavior in time and space is represented in such manner as a predetermined processing is carried out with a predetermined condition satisfied. With such representation, there is no need to fixedly set execution conditions. Accordingly, object models are not limited in their response to the user's input and information provided by the communications part 7, rendering the object models appear in an unexpected and flexible manner. This is described in more detail below. Note that, the information about behavior in time and space can also be represented in a format simply including a function name and contents thereof.

The information about behavior in time and space of FIG. 6 typically includes CREATE and CAR_NEAR. Specifically, CREATE describes a method carried out at time of object model creation, while CAR_NEAR a method carried out when a vehicle comes close to a predetermined distance range.

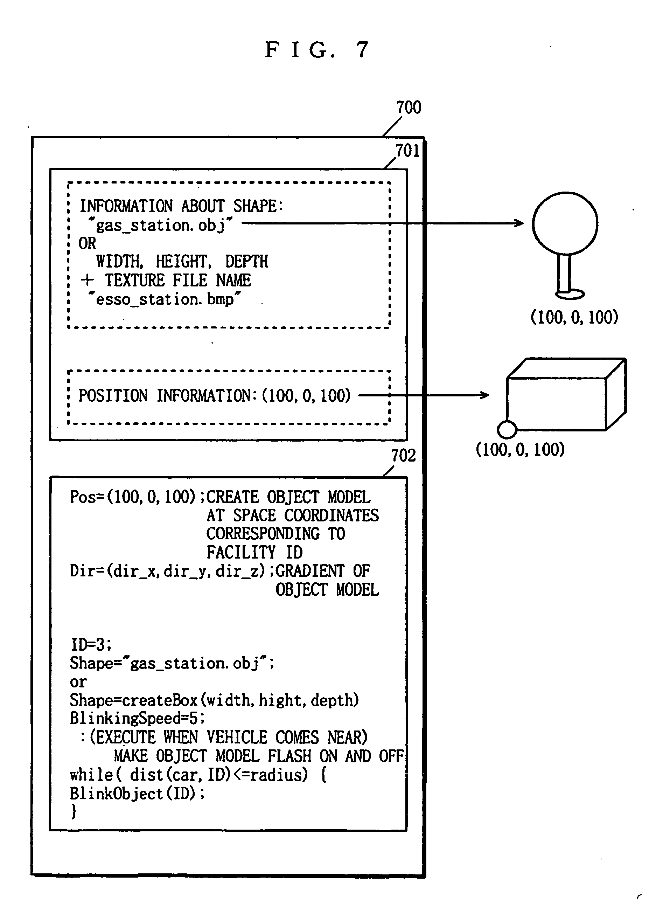

Here, with reference to FIG. 7, such object model display information is described with a detailed specific example.

In FIG. 7, object model display information 700 includes information about shape 701 and information about behavior in time and space 702. The information about shape 701 may be 3D information stored in a file named "gas_station.obj", for example. Or, the information about shape 701 may include information for defining a polygon by width, height, and depth, and a file named "esso_station.bmp" specifying a texture mapped to the polygon, for example. Here, the information about shape 701 includes position information. In FIG. 7, the position information is 3D coordinates at which an object model is displayed. Two graphics on the right upper side are examples drawn according to the information exemplified in FIG. 7.

The information about behavior in time and space 702 is not limited in description language, but typically described in an object-oriented interpreter language (e.g., Sun Microsystems' Java Language). Since there is no need for compilation, a script in such language can be immediately executed and easily created. Therefore, such script is suited with this embodiment.

In the information about behavior in time and space 702 of FIG. 7, a *Pos* method creates an object model at space coordinates corresponding to a facility ID. A *Dir* method represents a gradient of the object model in a 3D space. A Shape method draws the object model. *A BlinkObject* method makes a specific object model flash on and off when a distance r between the object model and a vehicle becomes a predetermined value or smaller. As such, the information about behavior in time and space 702 is so described as to make a specific object flash on and off when the vehicle comes close within the distance *r*.

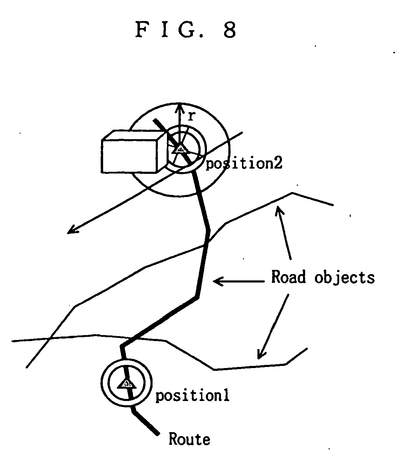

FIG. 8 is a diagram in assistance of demonstrating when to carry out the methods in the information about behavior in time and space 702. In FIG. 8, *Road objects* each denote a road on a map, and a box on the upper side denotes an object drawn on the map. Here, presumably, the vehicle runs along a *Route* in a bold line. When the vehicle is at *position 1*, the object model shows no change, but at *position 2,* the vehicle comes within the distance *r* and thus the object starts blinking on and off with the methods in the information about behavior in time and space 702 carried out.

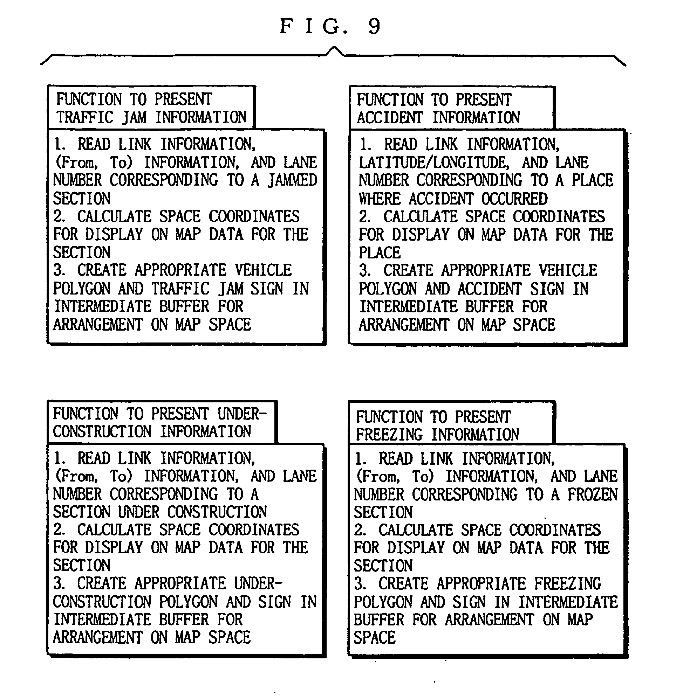

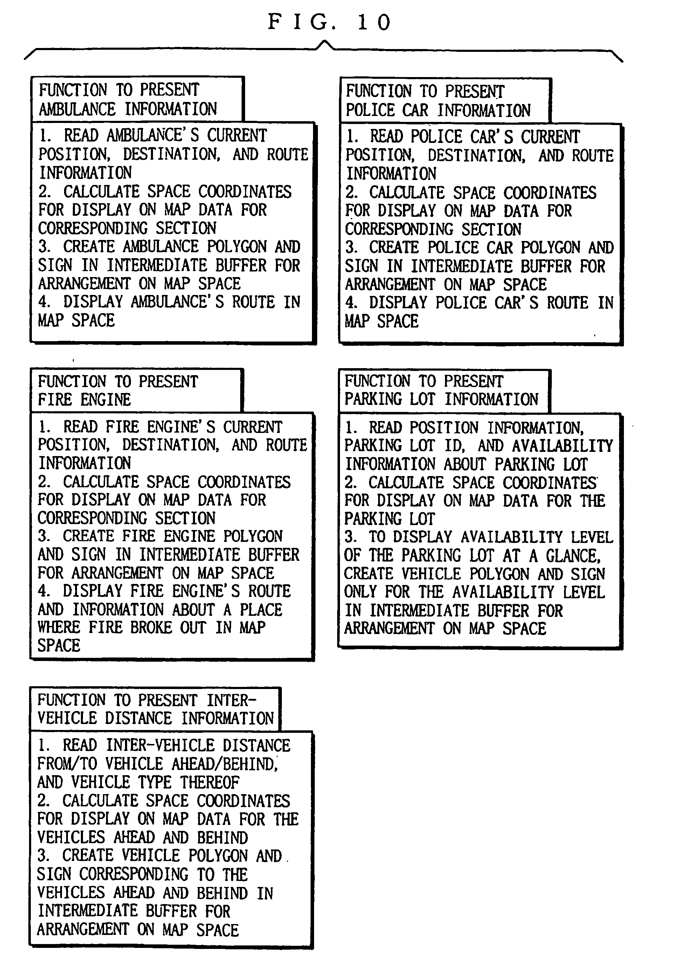

Next, with reference to FIGS. 9 and 10, described is the case that the information 702 is represented in a format including a function name and contents thereof. FIG. 9 exemplarily shows function names and contents, corresponding to the above-described traffic information, stored in the object model display information storage part 6. FIG. 10 exemplarily shows function names and contents, corresponding to the above-described emergency information, parking lot information, and vehicle-to-vehicle communications information, stored in the object model display information storage part 6.

In FIG. 9, assuming that the traffic jam information comes from VICS, for example, via the communications part 7, and if a map image covers corresponding coordinates, the map data arranging part 4 executes a function to present traffic jam information in a manner described. In detail, a first step is reading road information (e.g., a table for defining roads by element) corresponding to the link information, *From* information, and *To* information read by the communications part 7. A second step is calculating space coordinates for a section corresponding to the information read in the first step. Lastly, a third step is creating an object model such as vehicle polygon and "jammed" sign in an intermediate buffer for arrangement in the map space. After those steps, an object model in the shape of vehicle, for example, is created and arranged along the road. In this manner, the user can intuitively understand that the road is jammed without busily moving his/her eyes.

Here, such processing is similarly done to other communications information, and executed thereby is a corresponding function stored in the object model display information storage part 6. As for the functions, see FIGS. 9 and 10.

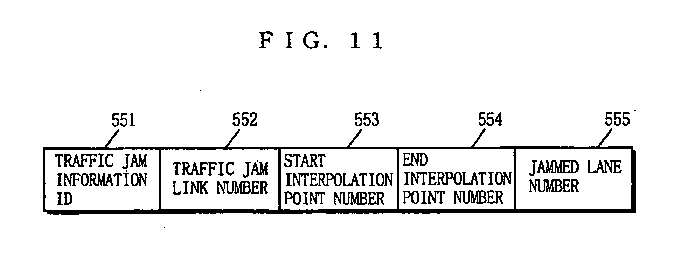

Described next is the processing when the function to present traffic jam information is executed in more detail. By referring to FIG. 11, described first is the traffic jam information, which is read from the communications part 7 by the map data arranging part 4.

FIG. 11 is a diagram exemplarily showing what the traffic jam information provided from VICS, for example, via the communications part 7 carries in what order. The traffic jam information of FIG. 11 includes a traffic jam information ID 551, a traffic jam link number 552, a start interpolation point number 553, an end interpolation point number 554, and a jammed lane number 555, respectively corresponding to the traffic jam information ID, link information, *From* information, *To* information, and lane information in the traffic jam information of FIG. 4.

The traffic jam information ID 551 is an information identification number for identifying that the accompanying link data is the traffic jam information. The traffic jam link number 552 is a link number indicating which road is jammed. For example, when the traffic jam link number 552 indicates 1010, it means that a road having a link number 1010 is jammed. Known with the start and end interpolation points numbers 553 and 554 is what specific part of the road is jammed. For example, if the start and end interpolation point numbers 553 and 554 show 1 and 2, respectively, it means a section between interpolation points 1 and 2 is jammed on the road. The jammed lane number 555 shows, by lane number, which lane is jammed. Here, as stated above, the link data may be plurally included in the traffic jam information.

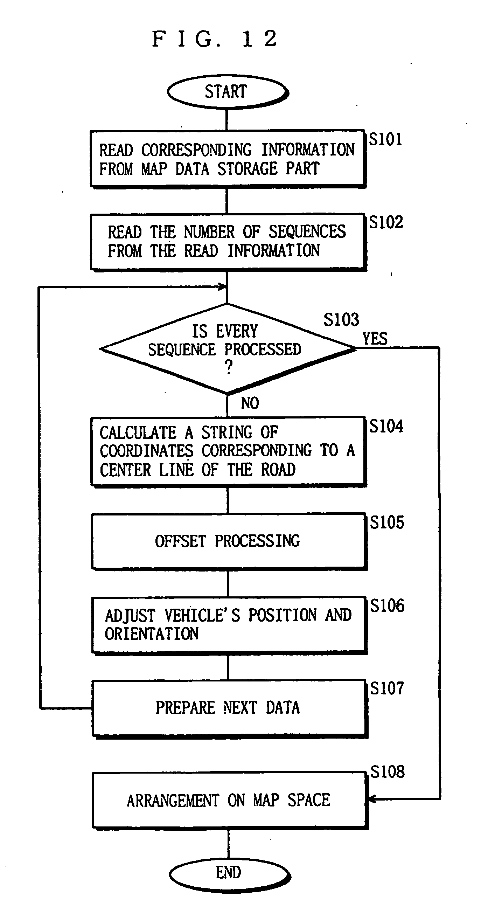

Described next is the procedure when the function to present traffic jam information is executed. FIG. 12 is a flowchart showing such procedure. In step S101 in FIG. 12, once such function is executed, the map data arranging part 4 reads, from the map data storage part 3, information showing the relation between the traffic jam information and corresponding map data (hereinafter, such information is referred to as interrelation table).

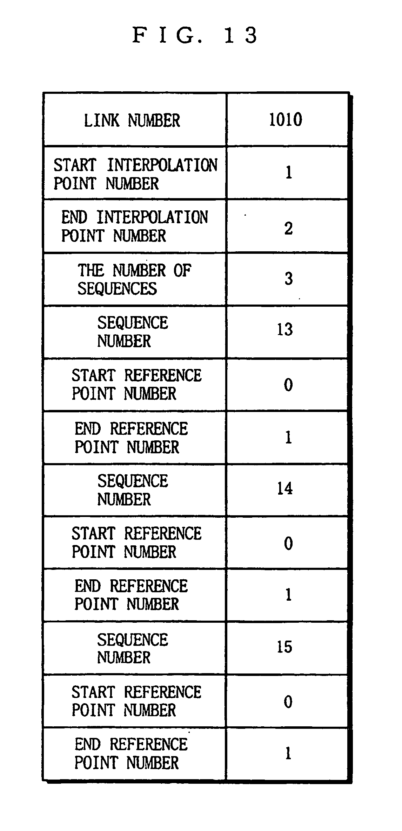

FIG. 13 shows an exemplary interrelation table stored in the map data arranging part 4. Included in the table of FIG. 13 are a link number, a start interpolation point number, an end interpolation point number, the number of sequences, and one or more sets of sequence number, a start reference point number, and an end reference point number.

Here, a sequence is a minimum unit of the road found in the map data stored in the map data storage part 3, and the number of sequences indicates with how many sequences the road is structured by. The sequence is drawn by a linear line, broken line, curve, and the like, and a reference point is for controlling the sequence. The number of reference points provided to one sequence is two or more, and numbers assigned thereto are consecutive. Accordingly, with a set of sequence number and start and end reference point numbers, an arbitrary sequence in the map data can be uniquely indicated.

Here, such set as described above varies depending on the data structure of map data. Also, the exemplified set is not restrictive, and any data will do as long as an arbitrary sequence in the map data is uniquely indicated.

Next, in step S102 in FIG. 12, the map data arranging part 4 refers to the interrelation table to find the number of sequences in the map data. In the example of FIG. 13, the number of sequences is 3.

In step S103, the map data arranging part 4 then compares thus found number of sequences with a number indicating how many sequences are so far processed. If those two numbers are equal, the map data arranging part 4 determines that the processing is now completed, and the procedure jumps to step S108. Otherwise, the procedure goes to step S104.

In step S104, the map data arranging part 4 searches the map data storage part 3 for 3D coordinates corresponding to a predetermined set (the first set in initial value) among from those read in step S101. Here, the coordinates that are searched for may be 2D, and stored in a predetermined table provided in the map data storage part 3 or calculated from the map data.

Next, in step S104, the map data arranging part 4 carries out offset processing for adjusting the 3D coordinates read in step S103. Since a string of those coordinates corresponds to a center line of the road, there needs to calculate and adjust the string to come to a middle line of a lane indicated by the jammed lane number 555.

In step S104, the map data arranging part 4 also defines, by position, size, number, orientation, and the like, a 3D vehicle polygon specified by the currently executing function, as appropriate.

After such processing for one specific road is completed, in step S105, the map data arranging part 4 increments the number of sequences so far processed, and then selects another set among from those read in step S103. The procedure then returns to step S103.

After every sequence is processed, in step S108, the map data arranging part 4 reads the data about vehicle polygon from the map data storage part 3 or the object model display information storage part 6. Next, the map data arranging part 4 stores, in the intermediate buffer, the vehicle polygon appropriately defined in step S104 by position, size, number, orientation, and the like. Then, the vehicle polygon is arranged on the map data for display on the display 5. Here, the vehicle polygon is not restricted to be 3D, and the vehicle may be represented in 2D or an actual image.

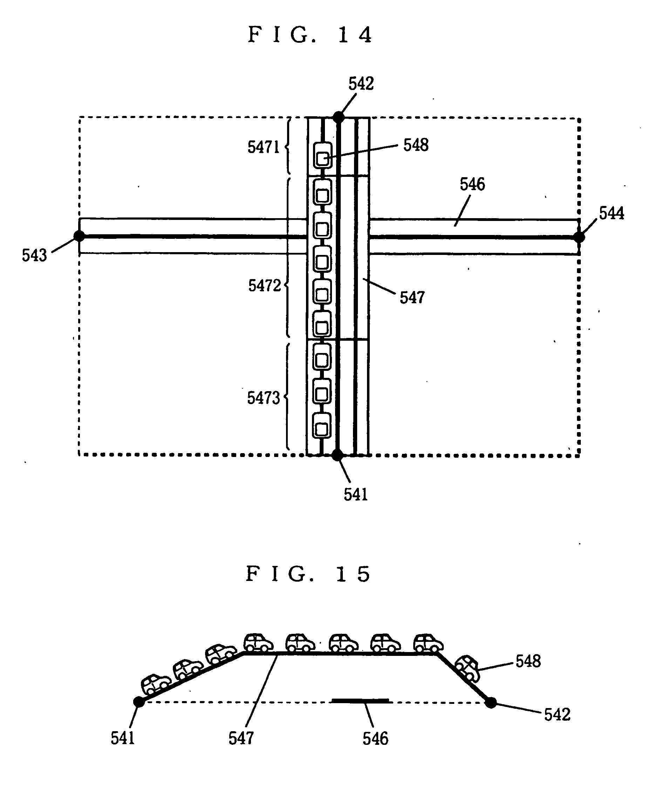

FIG. 14 shows a schematic map viewed from above for showing a relation between vehicle polygons and roads. In FIG. 14, a reference numeral 546 denotes a road having assigned a link number 1000 and including interpolation point numbers 541 and 542. A reference numeral 547 denotes a road having assigned the link number 1010 and including interpolation point numbers 543 and 544. As the interrelation table of FIG. 13 shows, the road 547 is structured by 3 sequences, corresponding to sequences 5471 to 5473 in FIG. 14. To be specific, as for the sequence 5471, a sequence number is 15, a start reference point number 0, and an end reference point number 1. Similarly, as for the sequence 5472, those numbers are, in order, 14, 0, and 1, and as for the sequence 5473, 13, 0, and 1. The same map as FIG. 14 is also shown in FIG. 15, viewed from the interpolation point number 544 at ground level.

By referring to both FIGS. 14 and 15, it is known that the road 547 crosses over the road 546, and a left lane of the road 547 is jammed. Here, both the map and vehicle models 548 may be two- and three-dimensionally displayed.

The above processing done to the function to present traffic jam information is similarly done to other functions shown in FIGS. 9 and 10. By taking the function to present under-construction information as an example, referred to is the under-construction information ID, and arranged on the road is a polygon such as sign and figure indicative of construction.

In step S134, the map data arranging part 4 checks whether every information read by the communications part 7 is now through. If Yes, this is the end of subroutine step S13, and the procedure returns to the main routine of FIG. 3. If not yet, the procedure returns to step S132 to repeat the processing. After subroutine step S13 is through, the map data arranging part 4 forwards the resultant map data to the display 5. Then, the display 5 accordingly displays a resultant map image thereon.

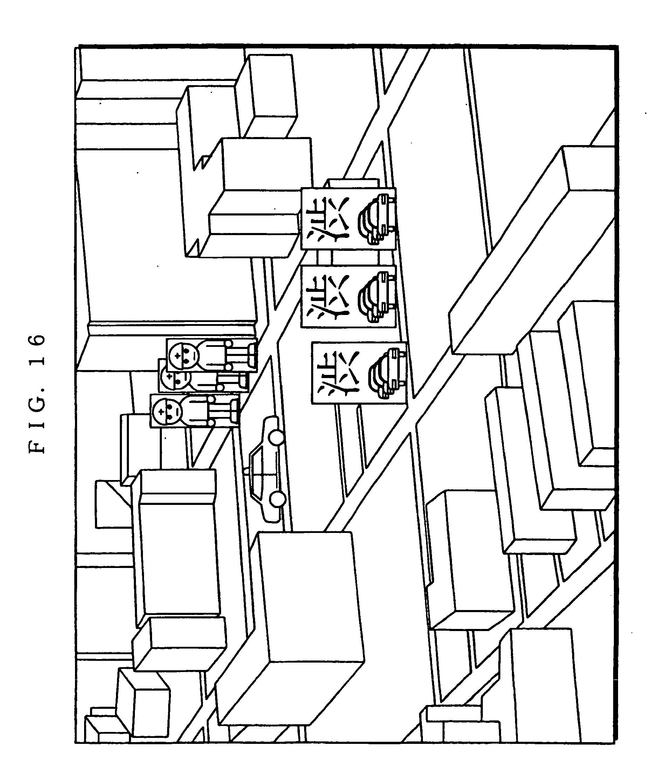

FIG. 16 shows an exemplary map image generated through such processing as above described. In FIG. 16, there include a police car polygon, "jammed" signs, and cartoon-like figures indicative of construction appropriately placed on a 3D landscape with buildings. With such map image, the user can intuitively grasp various types of information without busily moving his/her eyes.

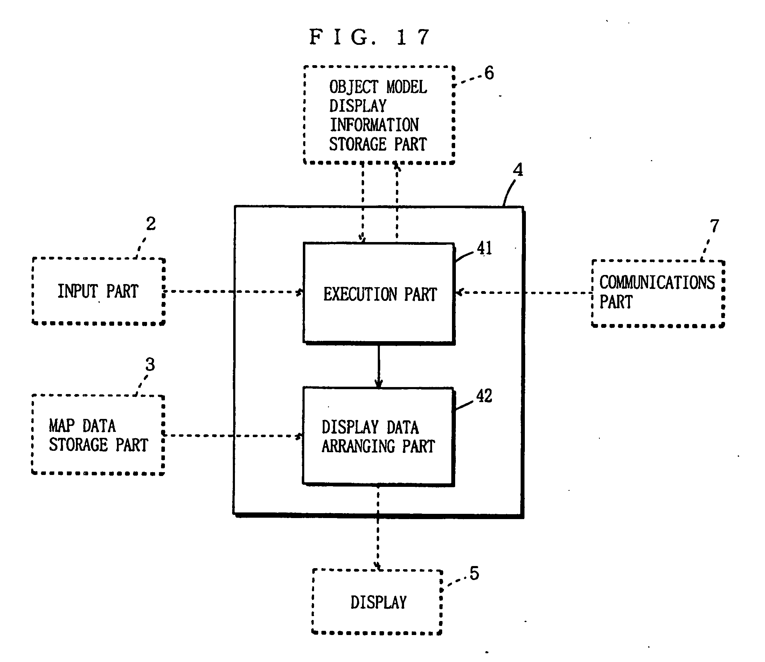

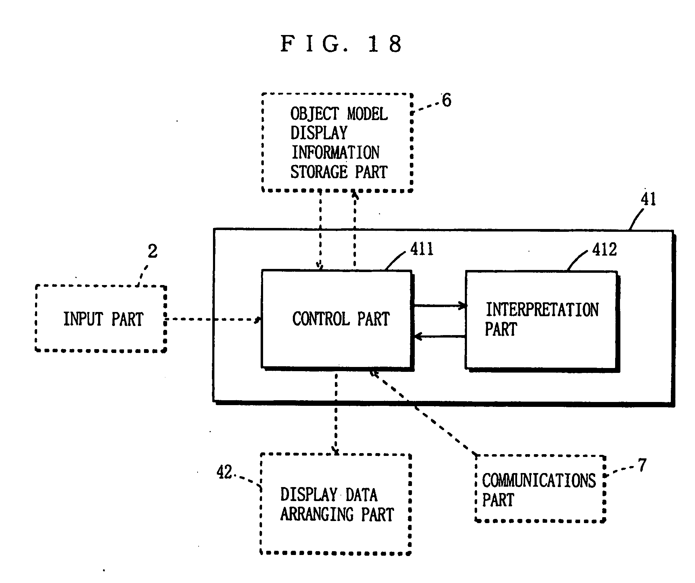

Here, prior to describing subroutine step S133 about the detailed processing of the map data arranging part 4, the detailed structure thereof is described with reference to FIGS. 17 and 18.

FIG. 17 is a block diagram showing the detailed structure of the map data arranging part 4. In FIG. 17, the map data arranging part 4 includes an execution part 41 and a display data arranging part 42. The execution part 41 receives information each from the object model display information storage part 6, the input part 2, and the communications part 7, and executes the object model display information. The display data arranging part 42 receives map data both from the execution part 41 and the map data storage part 3 for data arrangement.

The execution part 41 detects any interrupt event, and executes each corresponding command. Also, the execution part 41 executes the object model display information so that object data is generated and forwarded to the display data arranging part 42. The display data arranging part 42 accordingly arranges the object data on the map data for display on the display 5.

Described next is the detailed structure of the execution part 41. FIG. 18 is a block diagram showing such structure, including a control part 411, and an interpretation part 412.

The control part 411 receives information each from the object model display information storage part 6, the input part 2, and the communications part 7, and performs control responsively to each event. By the interpretation part 412, responding to an object model creation request or an object model attribute change request forwarded from the control part 411, the object model display information is interpreted and object data is generated. Thus generated object data is outputted to the control part 411.

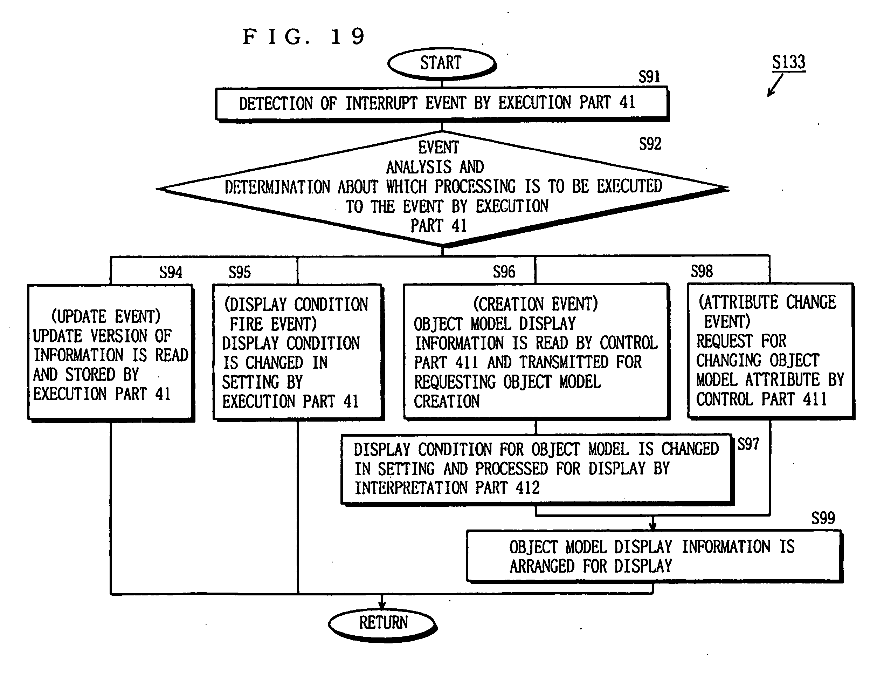

Described next is subroutine step S133 in FIG. 5 about the detailed processing in the map data arranging part 4. A flowchart of FIG. 19 is now referred to.

In step S91 in FIG. 19, the execution part 41 detects an interrupt event from the communications part 7, the input part 2, or a timer. Typically, the procedure repeats step S91, unless otherwise interrupted, until the execution part 41 detects any interrupt event.

Once detected, in step S92, the execution part 41 analyzes the detected event, and executes processing corresponding thereto. In this example, an event is classified into four; update, display condition fire, creation, and attribute change. If the event is analyzed as being an update event, the procedure goes to step S94. Similarly, the procedure goes to step S95 with a display condition fire event, to step S96 with a creation event, and to step S98 with an attribute change event.

In step S94 (update event), the execution part 41 reads an updated version of the object model display information from the communications part 7 for storage into the object model display information storage part 6. The updated version may entirely or partially correspond to the stored object model display information. With the processing completed, this is the end of subroutine step S133, and the procedure returns to the flow of FIG. 5.

In step S95 (display condition fire event), the execution part 41 analyzes the contents of the display condition fire event, and accordingly changes the display condition in setting. With this processing completed, this is the end of subroutine step S133, and the procedure returns to the flow of FIG. 5.

In step S96 (creation event), the control part 411 reads the object model display information about the corresponding object model from the object model display information storage part 6, and transmits the information to the interpretation part 412 to ask for object model creation. Then, in step S97, the control part 411 has the interpretation part 412 interpret thus transmitted information about object model shape and behavior in time and space (typically, information described in simplified language and functions). Thereafter, the object model display condition is set and a display processing is carried out. Such object model display information is already described in structure and manner to be executed.

Next, in step S99, the execution part 41 forwards an interpretation result about the object model display information for arrangement on the map data. With this processing completed, this is the end of subroutine step S133, and the procedure returns to the flow of FIG. 5.

In step S98 (attribute change event), the control part 411 asks the interpretation part 412 to perform processing to change the object model attribute such as position and size. Then, in step S99, the execution part 41 performs such processing as described above. With such processing completed, this is the end of subroutine step S133, and the procedure returns to the flow of FIG. 5.

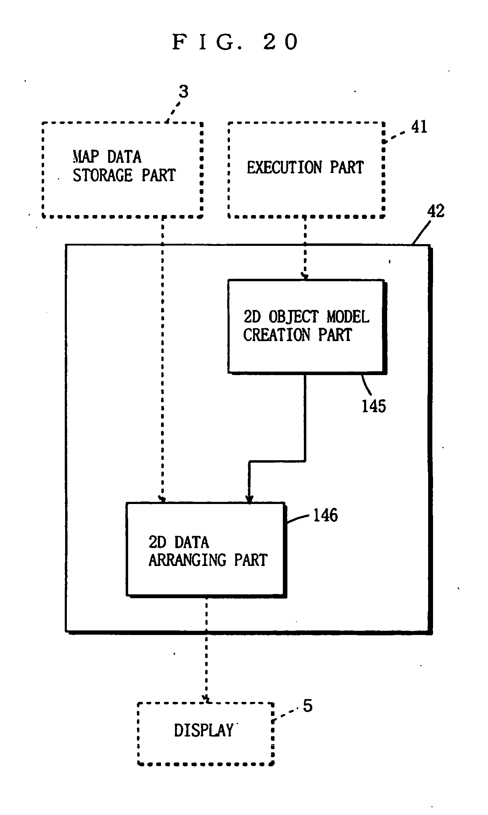

Described next is step S99 in FIG. 19 about how the display data arranging part 42 generates a map image. First, described is a case where a resultant map image is of a 2D landscape. FIG. 20 is a diagram showing the detailed structure of the display data arranging part 42 for such case. In FIG. 20, the display data arranging part 42 includes a 2D object model creation part 145, and a 2D data arranging part 146.

The 2D object model creation part 145 receives the object model display information from the execution part 41, and creates a 2D object model. The 2D data arranging part 146 receives thus created 2D object model and 2D map data from the map data storage part 3, and generates a map image by arranging those in accordance with 2D coordinates included in each of those.

Described next is a case where a resultant map image is of a 3D landscape. In such case, there is no need for an object model created from the object model display information and map data stored in the map data storage part 3 to be 3D. Exemplified now is a case where the data provided by the execution part 41 to the display data arranging part 42 is 3D, and the data by the map data storage part 3 is 2D, and a resultant map image is of a 3D landscape.

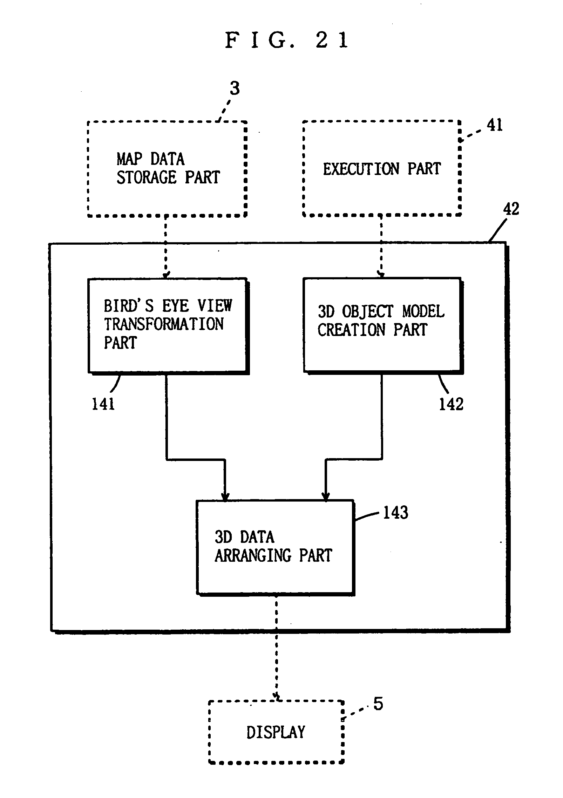

FIG. 21 is a block diagram showing the detailed structure of the display data arranging part 42, which receives 3D data from the execution part 41 and 2D map data from the map data storage part 3. A resultant map image generated thereby is of a bird's eye view.

In FIG. 21, the display data arranging part 42 includes a bird's eye view transformation part 141, a 3D object model creation part 142, and a 3D data arranging part 143.

The bird's eye view transformation part 141 receives the 2D map data from the map data storage part 3, and then transforms the data to a bird's eye view. A technique for transforming 2D data to a bird's eye view is disclosed in detail in "Development of a Car Navigation System with a Bird's-eye View Map Display" (Society of Automotive Engineers of Japan, Inc, Papers, 962 1996-5), for example. Next below, a technique for transforming 2D data to a bird's eye view is described.

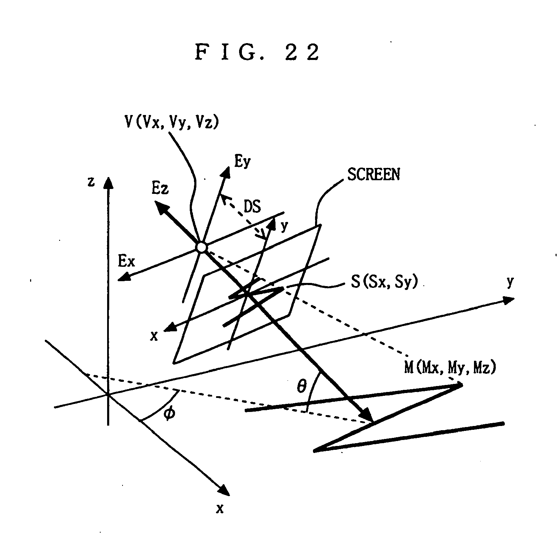

FIG. 22 is a diagram demonstrating a technique for creating a bird's eye view by subjecting 2D map data to perspective transformation. In FIG. 22, a point V(Vx, Vy, Vz) indicates viewpoint coordinates. A point S(Sx, Sy) indicates coordinates of a bird's eye view image on a monitor, and a point M(Mx, My, Mz) indicates coordinates on a 2D map image. Here, since the map data is 2D data, Mz is 0. Points Ex, Ey, and Ez each indicate a relative position to the point M in the viewpoint coordinates system. A reference character *θ* denotes a look-down angle, while *φ* indicates a direction angle of viewpoint. A reference character DS indicates a theoretical distance between the viewpoint and the image.

Here, with the viewpoint coordinates V(Vx, Vy, Vz), look-down angle *θ*, and direction angle *φ* specified in value, the coordinates S(Sx, Sy) of the bird's eye view image can be calculated with respect to the coordinates M(Mx, My, Mz) on the 2D map image. An equation (1) therefor is as follows:$\begin{matrix}E = \left[\begin{matrix}1 & 0 & 0 \\ 0 & sin θ & cos θ \\ 0 & - cos θ & sin θ\end{matrix}\right] ⁢ \left[\begin{matrix}sin φ & - cos φ & 0 \\ cos φ & sin φ & 0 \\ 0 & 0 & 1\end{matrix}\right] \\ S = \frac{DS}{- Ez} \left(\begin{matrix}Ex \\ Ey\end{matrix}\right)\end{matrix}$

With the above equation (1), for example, the bird's eye view transformation part 141 transforms the 2D map data provided by the map data storage part 3 to a bird's eye view. The bird's eye view of 3D data is forwarded to the 3D data arranging part 141.

The 3D object model creation part 142 receives the 3D data, and then creates a 3D object model with the processing in subroutine step S133 in FIG. 5. Thus created 3D object model is forwarded to the 3D data arranging part 143.

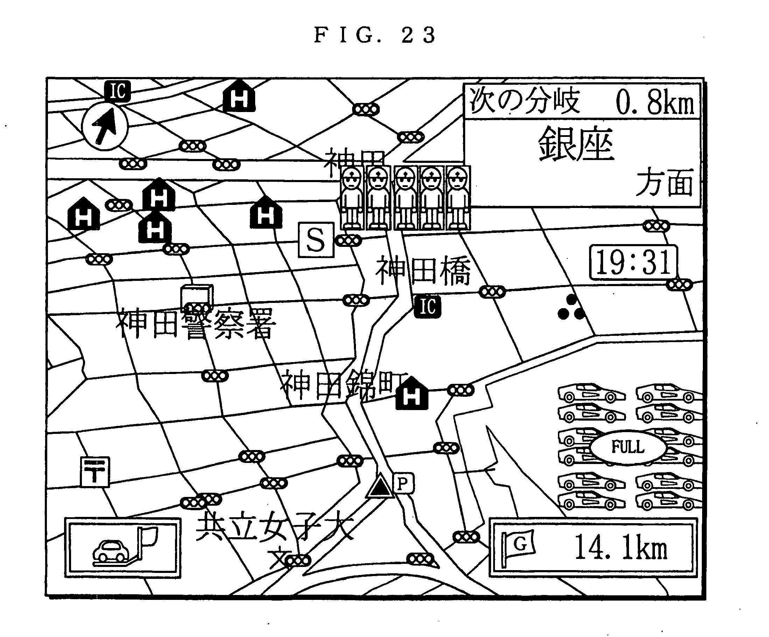

The 3D data arranging part 143 arranges thus received 3D data and object model data together for output to the display 5. FIG. 23 shows exemplary data thus generated and displayed on the display 5.

In FIG. 23, there include 3D objects indicative of construction and a parking lot being full. In FIG. 23, presumably, these object models are 3D of a type changing in shape with varying viewpoints even if looked as 2D.

Exemplified now is a case where the data provided by the execution part 41 is 3D, and the data by the map data storage part 3 is 2D, and a resultant map image is of a 3D landscape, which looks different from the bird's eye view.

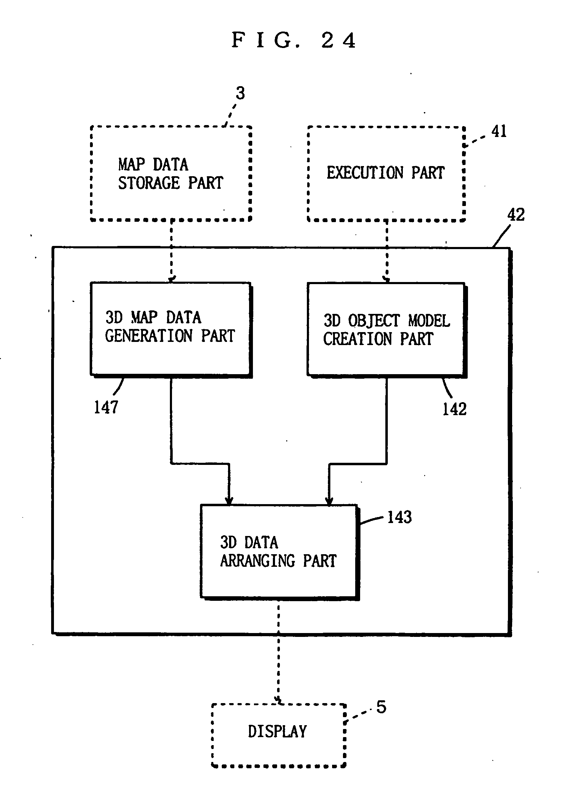

FIG. 24 is a block diagram showing the detailed structure of the display data arranging part 42, which receives 3D data from the execution part 41 and 2D map data from the map data storage part 3. A resultant map image generated thereby is of a 3D landscape, which is different from a bird's eye view.

In FIG. 24, the display data arranging part 42 includes a 3D map data generation part 147, the 3D object model creation part 142, and the 3D data arranging part 143.

In FIG. 24, the 3D object model creation part 142 and the 3D data arranging part 143 are similar in structure and operation to those in FIG. 21. Thus, the 3D map data generation part 147 is mainly described in structure and operation below.

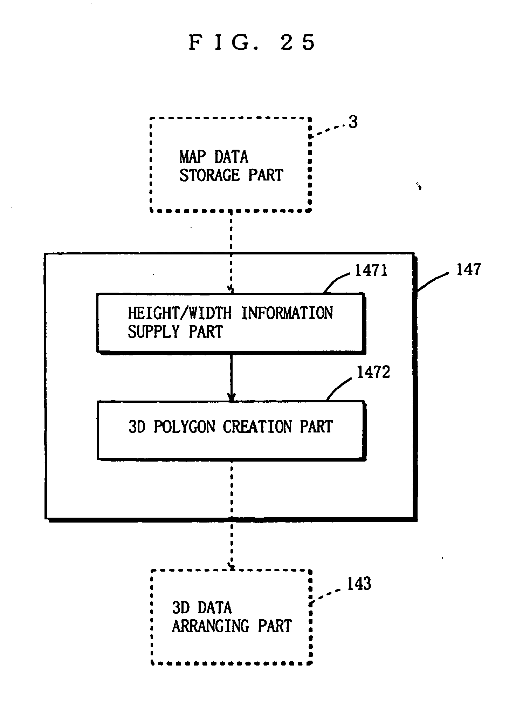

FIG. 25 is a block diagram showing the detailed structure of the 3D map data generation part 147. In FIG. 25, the 3D map data generation part 147 includes a height/width information supply part 1471, and a 3D polygon creation part 1472.

The height/width information supply part 1471 supplies information about height and width to the 3D polygon creation part 1472 responding to 2D map data provided by the map data storage part 3. The 3D polygon creation part 1472 then creates a 3D object model.

The height/width information supply part 1471 analyzes the 3D shape of a road, for example, with the help of the link type (e.g., side-road link, elevated link) and information about branching node included in the 2D map data, typically by applying a predetermined pattern. With the analyzed result, the height/width information supply part 1471 adds information about height and width to the 2D data of the road, for example, so as to generate 3D map data.

The 3D polygon creation part 1472 receives thus generated 3D map data, and creates a 3D object model with a general technique therefor. In the above manner, the display data arranging part 42 of FIG. 24 generates a map image of 3D landscape, which looks different from a bird's eye view.

Exemplified next is a case where the data provided by the execution part 41 to the display data arranging part 42 is 2D, and the data by the map data storage part 3 is 3D, and a resultant map image is of a 3D landscape.

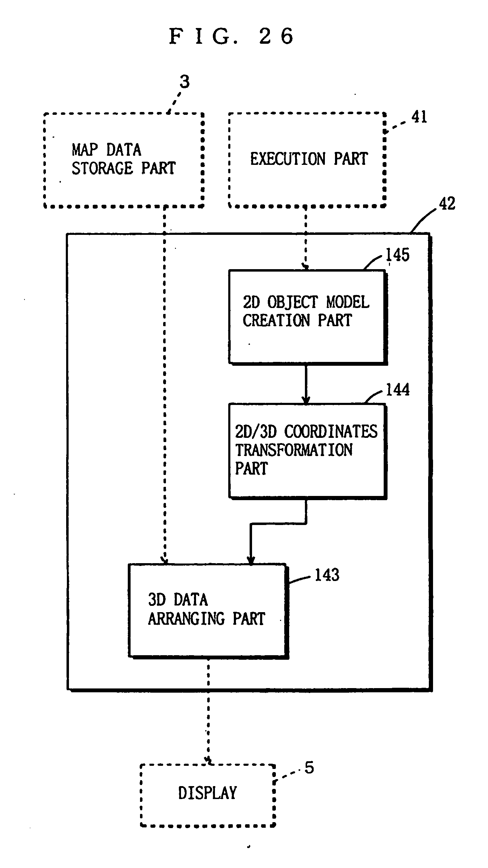

FIG. 26 is a block diagram showing the detailed structure of the display data arranging part 42, which receives 2D data from the execution part 41 and 3D map data from the map data storage part 3. A resultant map image generated thereby is a map image of 3D landscape.

In FIG. 26, the display data arranging part 42 includes a 2D object model creation part 145, a 2D/3D coordinate transformation part 144, and the 3D data arranging part 143.

In FIG. 26, the 2D object model creation part 145 receives 2D data from the execution part 41, and then creates a 2D object model by going through subroutine step S133 in FIG. 5.

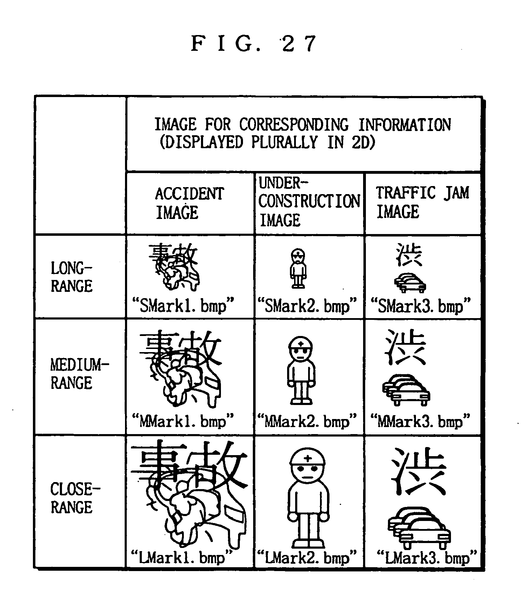

To be specific, as already described, a plurality of image files are prepared as 2D shape information included in the object model display information. FIG. 27 is a diagram exemplarily showing several image files prepared as such. In FIG. 27, images are classified into "accident", "under-construction", and "jammed". Such image type corresponds to the object model display information, and further classified into "close-range", "medium-range", and "long-range".

The 2D object model creation part 145 first determines the image type by referring to the object model display information. The 2D object model creation part 145 then selects a distance range for the determined image type among from those "close-range", "medium-range", and "long-range". Here, as described above, the object model display information includes position information indicating the position of the object model by 3D coordinates. In FIG. 27, selecting a distance range for each image is based on a distance between such 3D coordinates and viewpoint coordinates. Therefore, typically, the 2D object model creation part 145 calculates such distance to determine to which distance range thus calculated distance applies.

As for a resultant 2D object model, the 2D/3D coordinate transformation part 144 transforms 2D coordinates thereof to 3D coordinates based on the corresponding position information. Then, the resultant 3D object data is inputted into the 3D data arranging part 143.

The 3D data arranging part 143 receives 3D map data from the map data storage part 3. The 3D data arranging part 143 then arranges the map data together with the 3D object model data provided by the 2D/3D coordinate transformation part 144 to generate a map image of 3D landscape. Thus generated map image is forwarded to the display 5.

Here, in the display data arranging part 42 as above structured, the 2D object model created by the 2D object model creation part 145 is transformed to 3D data by the 2D/3D coordinate transformation part 144, and then arranged together with the 3D map data in the 3D data arranging part 143. This is not restrictive, and the 2D/3D coordinate transformation part 144 may be omitted, and a 2D/3D image arranging part may be provided as an alternative to the 3D data arranging part 143. If this is the case, the 2D/3D image arranging part pastes a 2D object model created by the 2D object model creation part 145 onto a map image of 3D landscape. In more detail, the 2D/3D image arranging part first generates a map image of 3D landscape by transforming 3D map data to screen coordinates, calculates screen coordinates of a 2D object model, and arranges 2D data as it is on a resultant map image of 3D landscape. With such modified structure, an object model looks the same even if viewed from various positions, and is displayed always the same. Therefore, better viewability is offered.

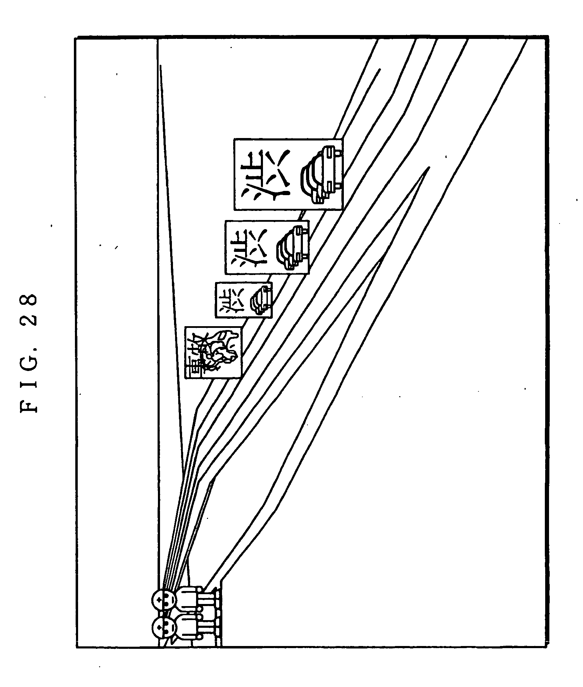

FIG. 28 shows an exemplary map image of 3D landscape generated by the display data arranging part 42 of FIG. 26. In FIG. 28, the map image has object models indicative of construction displayed on the left side, an object model indicative of accident in the middle, and object models indicative of traffic jam on a road. As to those objects indicative of traffic jam, the size thereof is changed based on a distance from the viewpoint coordinates as described above, thereby adding depth to the map image of 3D landscape even if the object models are 2D.

Lastly, exemplified is a case where the data provided by the execution part 41 to the display data arranging part 42 is 2D, and the map data by the map data storage part 3 is 2D, and a resultant map image is of a 3D landscape.

If this is the case, the display data arranging part 42 of FIG. 26 is additionally provided with the bird's eye view transformation part 141 of FIG. 21, or the 3D map data generation part 147 of FIG. 24, both of which convert 2D map data into 3D map data. Here, the components included therein operate similarly to those described above.

In such case as a map image of 3D landscape being generated from 2D data, the 2D data stored in the object model display information storage part 6 is less in amount than 3D data. Therefore, if storing object model data varying in type, the object model display information storage part 6 can store the larger number of types, and if storing the same type of object model data, the capacity thereof can be reduced.

Further, in such case as a map image of 3D landscape being generated from 2D data, the user can intuitively understand information even if object models are 2D. For example, the user does not have to stop his/her vehicle to understand what is going on on the way to his/her destination as he/she can easily and intuitively understand what the displayed object models indicate.

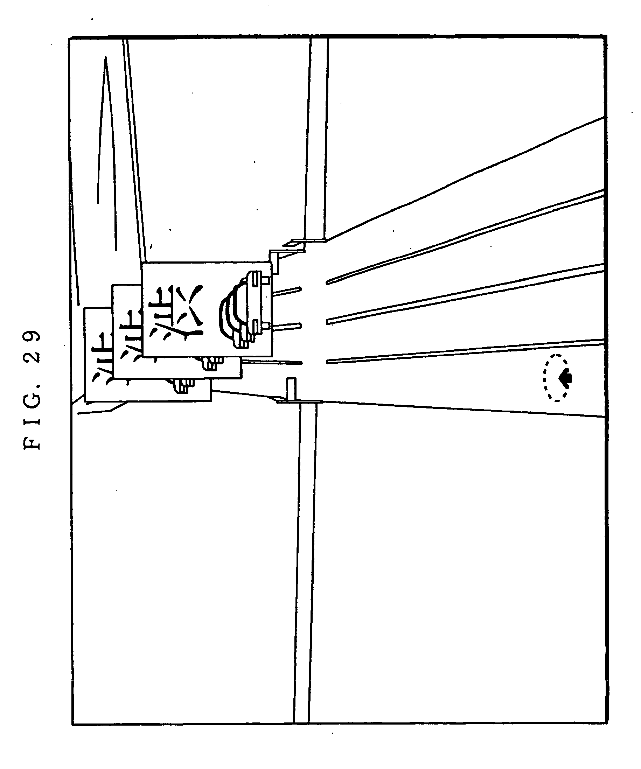

FIG. 29 is an exemplary map image of 3D landscape on which 2D object models indicative of traffic jam are arranged. As shown in FIG. 29 , with a plurality of object models indicative of traffic jam, the user can intuitively grasp that the road ahead is jammed.

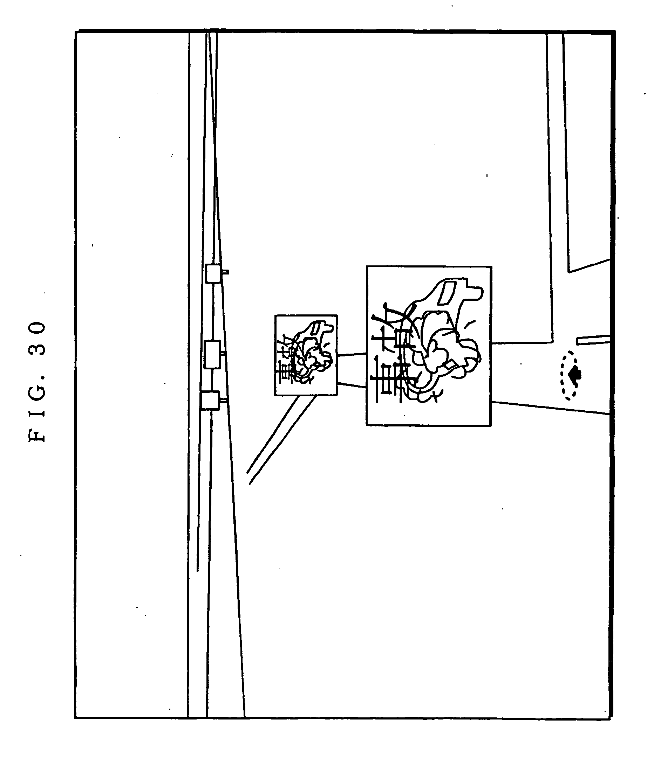

FIG. 30 is another exemplary map image of 3D landscape on which 2D objects indicative of accident are arranged. As shown in FIG. 30, with a plurality of object models indicative of accident, the user can intuitively grasp that accidents are occurred on the road ahead.

Similarly, with object models indicative of construction displayed on the map image of 3D landscape, the user can intuitively grasp that the road ahead is under construction. Typically, by changing the size of those objects on the map image, the user intuitively understands how far the construction work continues.

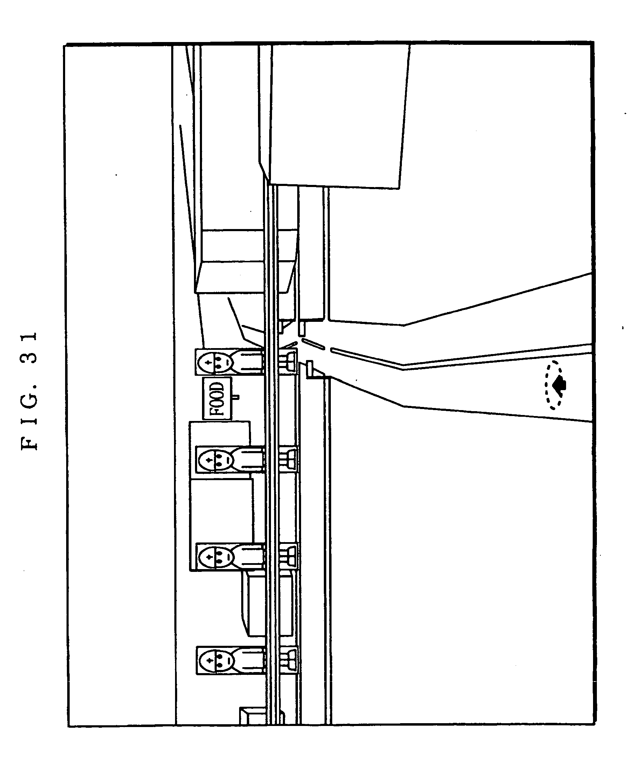

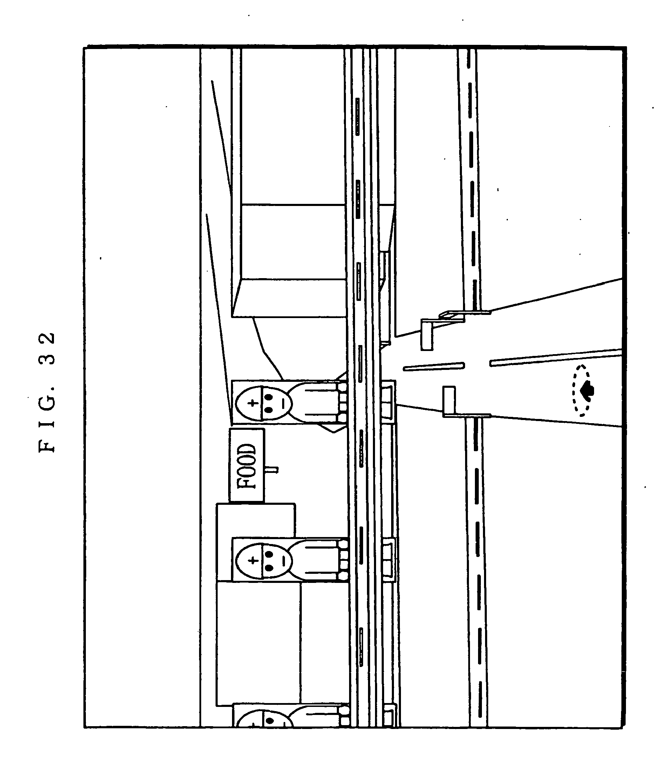

FIG. 31 is still another exemplary map image of 3D landscape on which 2D objects indicative of construction are arranged. FIG. 32 shows the same map image as FIG. 31, but the viewpoint is different and closer. As such, by changing the size of object models in the map image as the viewpoint changes, the user can easily specify which road is now under construction.

### (Second Embodiment)

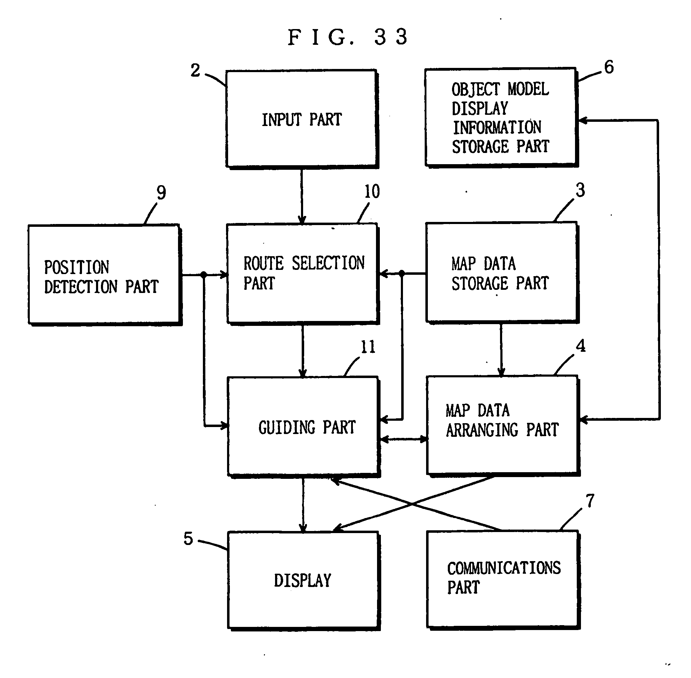

FIG. 33 is a block diagram showing the structure of a navigation device according to a second embodiment of the present invention. In FIG. 33, the navigation device includes the input part 2, the map data storage part 3, the map data arranging part 4, the display 5, the object model display information storage part 6, the communications part 7, the position detection part 9, a route selection part 10, and a guiding part 11.

Herein, the input part 2, the map data storage part 3, the map data arranging part 4, the display 5, the object model display information storage part 6, and the communications part 7 operate almost similarly to those in the map display device of FIG. 1. Also, the position detection part 9, the route selection part 10, and the guiding part 11 herein operate similarly to those in the navigation device of FIG. 67.

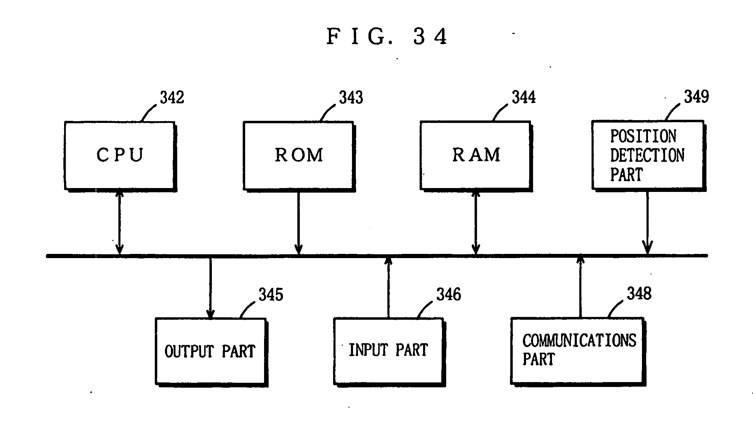

Such structured navigation device of FIG. 33 can be realized in a general computer system as is the map display device of FIG. 1. The structure of a navigation device realized as such is shown in FIG. 34.

In FIG. 34, the navigation device includes a CPU 342, ROM 343, RAM 344, an output part 345, an input part 346, a position detection part 349, and a communications part 338, all of which are interconnected by a bus. Here, presumably, the ROM 343 and the RAM 344 possibly include a storage device with an external storage medium similarly to the ROM 333 and the RAM 334 of FIG. 2.

The position detection part 349 is composed of a GPS, radio beacon receiver, vehicle-speed sensor, angular velocity sensor, absolute azimuth sensor, and the like. In the case that the position detection part 349 is composed of a radio or optical beacon receiver, and a radio or optical beacon signal includes any external information, the communications part 338 may be omitted. If so, the position detection part 349 functionally substitutes therefor.

In FIG. 34, the CPU 342 operates in accordance with a program stored in the ROM 343 and/or the RAM 344. Thus, the map data arranging part 4, the route selection part 10, and the guiding part 11 of FIG. 33 may be functionally realized by each corresponding program. In such case, a storage medium typically storing such program is implemented in the navigation device. The program may be the one transmitted over a communications circuit.

The ROM 343 typically includes the map data storage part of FIG. 33, or the RAM 344 may do so entirely or partially. Similarly, the RAM 344 typically includes the object model display information storage part 6, or the ROM 343 may do so.

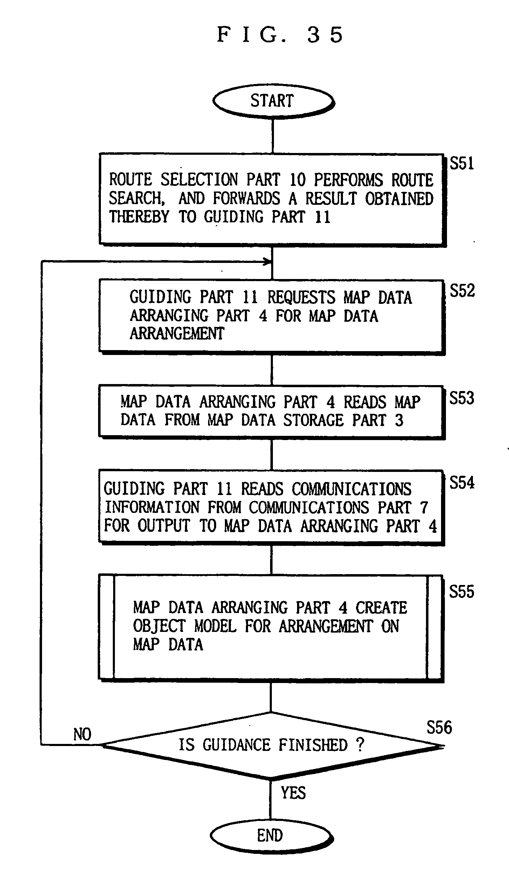

As such, the navigation device of FIG. 33 according to the second embodiment operates almost similarly to the map display device of FIG. 1 according to the first embodiment, except for some component similarly operating to those in the conventional navigation device. Next below, by referring to FIG. 35, the navigation device is described about its basic operation.

FIG. 35 is a flowchart showing a basic flow of processing in the navigation device of this embodiment. In step S51 of FIG. 35, with user-designated destination and map region provided by the input part 2, and with a vehicle position provided by the position detection part 9, the route selection part 10 accordingly performs route search. A result obtained thereby is outputted to the guiding part 11.

Next, in step S52, the guiding part 11 requests the map data arranging part 4 for map data arrangement to display a map which covers an area corresponding to the vehicle position detected by the position detection part 9. In step S53, the map data arranging part 4 reads map data from the map data storage part 3. In step S54, the guiding part 11 reads communications information from the communications part 7 for output to the map data arranging part 4. In subroutine step S55, the map data arranging part 4 creates an object model according to the received communications information and information stored in the object model display information storage 6 for arrangement on the map data.

Here, the processing in step S53 to subroutine step S55 in FIG. 35 roughly corresponds to that in step S11 to subroutine step S13 in FIG. 3. Accordingly, the processing in subroutine step S55 in FIG. 35 also corresponds to the processing in FIG. 5. Thus, such processing is not described here again.

Lastly, in step S56 in FIG. 35, the guiding part 11 keeps providing guidance until the user reaches his/her destination. Thus, the procedure returns to step S52 to repeat the processing until the guiding part 11 determines the user having reached his/her destination.

As is known from the above, the navigation device of the second embodiment is also capable, at time of guidance, of making the user intuitively understand information without busily moving his/her eyes. Further, in the navigation device, the capacity of a storage medium for object model is reduced with less amount of incoming information.

### (Third Embodiment)

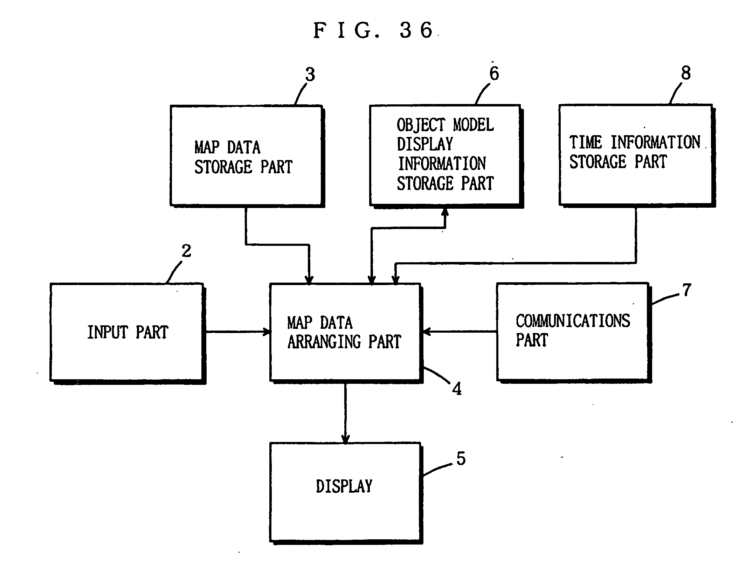

FIG. 36 is a block diagram showing the structure of a map display device of a third embodiment according to the present invention. In FIG. 36, the map display device includes the input part 2, the map data storage part 3, the map data arranging part 4, the display 5, the object model display information storage part 5, the communications part 7, and a time information storage part 8 . The map display device of FIG. 36 is additionally provided with the time information storage part 8 compared with the one in FIG. 1. Described next below is the time information storage part 8 about its structure and operation.

The time information storage part 8 is composed of an optical disk (e.g., CD, DVD), hard disk, semiconductor memory card (e.g., SD card), and the like, and stores time information having time and place interrelated therein. That is, the time information indicates a mobile unit, for example, locating where at what time in a table or equations. Such time information includes a timetable (e.g., train, bus, airline, ferry), service schedule, diagram, and the like. The time information storage part 8 may store in advance such time information, or may receive time information via the communications part 7 for storage or for update the previously stored time information therewith.

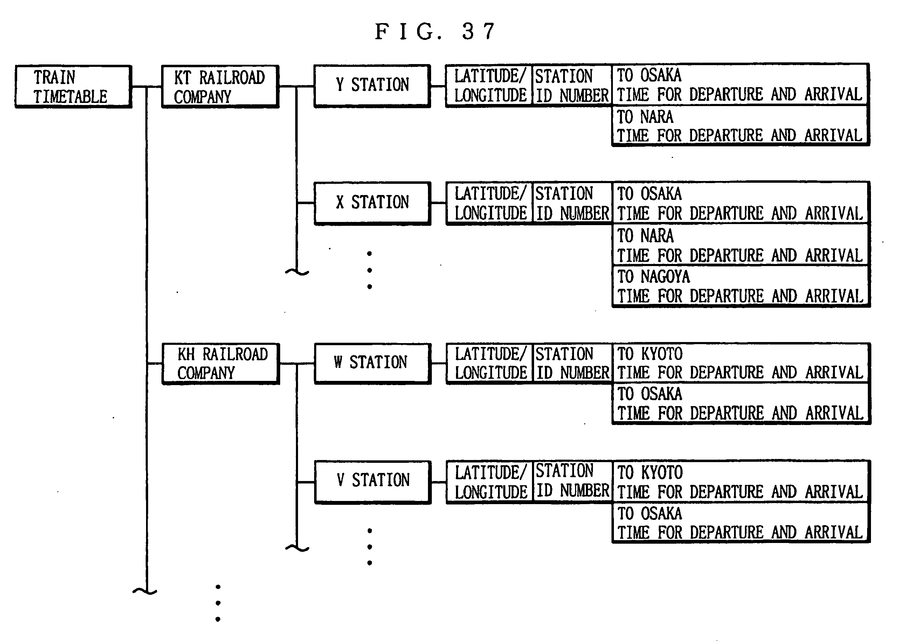

FIG. 37 shows exemplary time information stored in the time information storage part 8 of FIG. 36. The time information in FIG. 37 is about a train timetable, and data therein is represented in a tree structure. The train timetable data herein covers data about two railway companies of *KT* and *KH*, specifically indicating which train arrives at and departs from which station on the way to its destination. Each station is assigned a station ID number, and positionally defined by latitude and longitude. And, each train is indicated by arrival and departure times together with its destination. The time information storage part 8 outputs data requested by the map data arranging part 4.

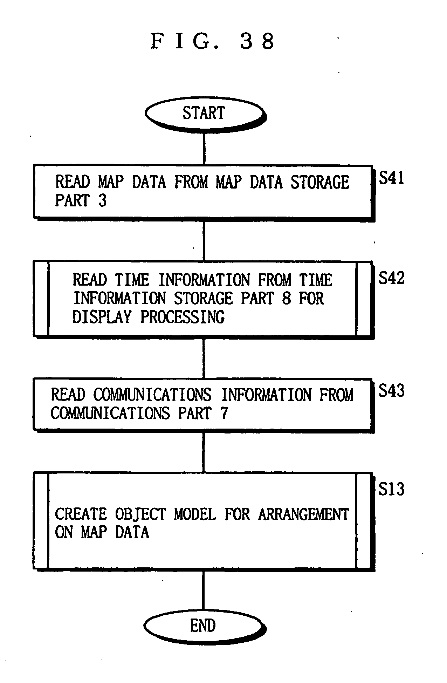

FIG. 38 is a flowchart showing the operation of the map data arranging part 4 of FIG. 36. Here, steps S41, S43, and S13 in FIG. 38 are almost the same as steps S11 and S12, and subroutine S13 in FIG. 3, respectively. Therefore, any step different from that in FIG. 3 is now mainly described.

In subroutine step S42 in FIG. 38, the map data arranging part 4 reads time information from the time information storage part 8, and goes through processing to display the time information. Described next is the process of subroutine step S42.

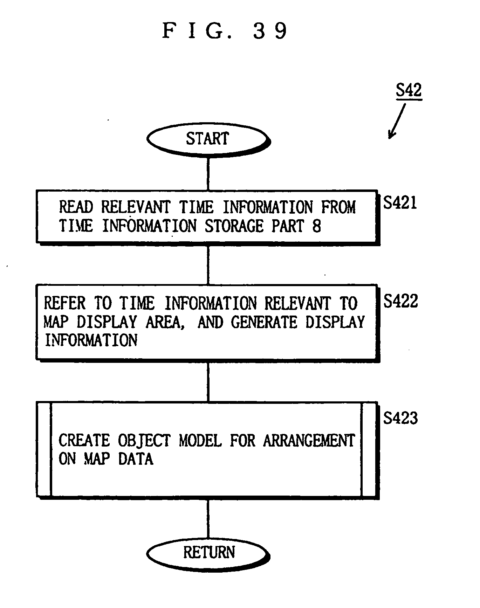

FIG. 39 is a flowchart showing the detailed process of subroutine step S42 in FIG. 38. In step S421 in FIG. 39, the map data arranging part 4 reads time information relevant to a map display area from the time information storage part 8. In more detail; the map data arranging part 4 may see which station is included in the map display area on the basis of latitude and longitude so as to extract only relevant time information. Or, any station ID number found in the map display area is referred to for extracting only applicable time information. For example, in the train timetable of FIG. 37, the map display area covers *Z, X,* and *Y* stations of the *KT* railway company.

Next, in step S422, the map data arranging part 4 selects any train to be displayed by referring to time information currently relevant to the map display area. The map data arranging part 4 specifically refers to time information which is in a predetermined time range from the current time. Then, the map data arranging part 4 specifies every applicable train passing through the map display area during the time range.

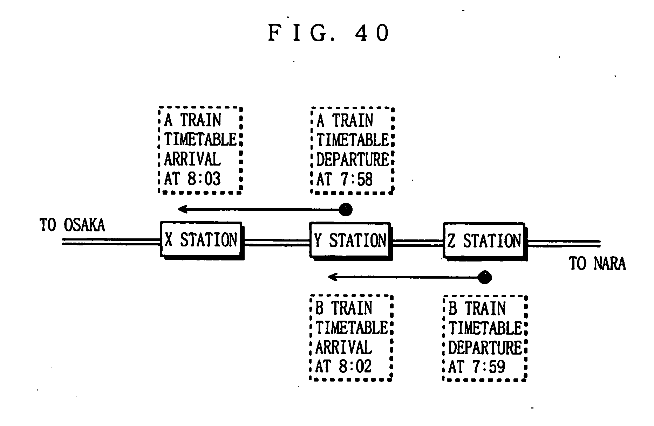

Assuming that now is 8:00 a.m., the map data arranging part 4 specifies any train which reaches at and departs from X, Y, and Z stations around 8:00 a.m. A technique therefor is specifically described by referring to FIG. 40.

FIG. 40 is a schematic map showing which train reaches at what station at what time. In FIG. 40, an *A* train is considered applicable as it leaves the *Y* station at 7:58 a.m., and reaches at the *X* station at 8:03 a.m. Similarly, a *B* train is also considered applicable as it leaves the *Z* station at 7:59 a.m., and reaches at the *Y* station at 8:02 a.m. As such, the map data arranging part 4 specifies every possible train passing through the map display area around 8:00 a.m. In this sense, limited express trains are better to be positionally specified also in the timetable around that time, that is, which limited express passes which station at what time. Here, such passing time for the limited express trains is not necessarily provided as is estimable from what time the train reaches at and departs from which station. Also, the train timetable may be a train diagram for controlling the train service, or represented in equations for defining every train by time and location.

In step S423 in FIG. 39, the map data arranging part 4 calculates display coordinates for every selected train from the corresponding time information. For example, the *A* train of FIG. 40 serves for a section between the *X* and *Y* stations, and the timetable tells that a required time therefor is 5 minutes. The timetable also tells that the *A* train is at a distance of 2/5 from the *Y* station at 8:00 a.m. as having left the *Y* station 2 minutes before. Accordingly, the map data arranging part 4 calculates the position in latitude and longitude, and defines there as the display coordinates for the *A* train. Display coordinates for the *B* train is calculated in a similar manner. Here, the above description is not surely restrictive, and the timetable may be of a type showing times previously calculated for each position. Further, in order to calculate display coordinates for a specific train, a train diagram and equation, for example, may be referred to. As such, the map data arranging part 4 generates display information such as train position and type.

Next, in subroutine step S13, thus generated display information and information stored in the object model display information storage part 6 are both referred to for creating an object model, which is arranged on the map data. The detailed process of subroutine step S13 is similar to that of subroutine step S13 in FIG. 5.

Specifically, in a case where the object model display information is about a train and represented in such functions as shown in FIGS. 9 and 10, the map data arranging part 4 also reads corresponding display information, and then accordingly calculates space coordinates on the map data. The map data arranging part 4 then creates a train polygon and sign applicable to the train type (e.g., which railway company, whether express or local) in an intermediate buffer, and arranges those in the map space.

The map data arranging part 4 then forwards a resultant map image to the display 5. The display 5 accordingly displays a map image showing object models in the shape of trains (e.g., train polygon and sign) at each appropriate position. Therefore, the user in an actual train can understand more intuitively, together with the map image, where his/her train is now and to which direction it is heading.

In the case that time information relevant to a map display area is externally available via the communications part 7, step S421 in FIG. 39 may be omitted. Further, when position information about trains, for example, is externally available via the communications part, steps S421 and S422 in FIG. 39 may be omitted.

Here, if the map display device of this embodiment is additionally provided with the position detection part 9, the route selection part 10, and the guiding part 11, realized is a navigation device functioning similar to the present map display device. Further, the time information storage part 8 provided to the present map display device may be also provided to the navigation device of the second embodiment, making the navigation device function similarly to the present map display device.

Note that, the map display device of the third embodiment may entirely or partially include the functions unique to the map display device of the first embodiment, or may not. Similarly, the navigation device having the present map display device applied may entirely or partially include the functions unique to the navigation device of the second embodiment, or may not.

### (Fourth Embodiment)

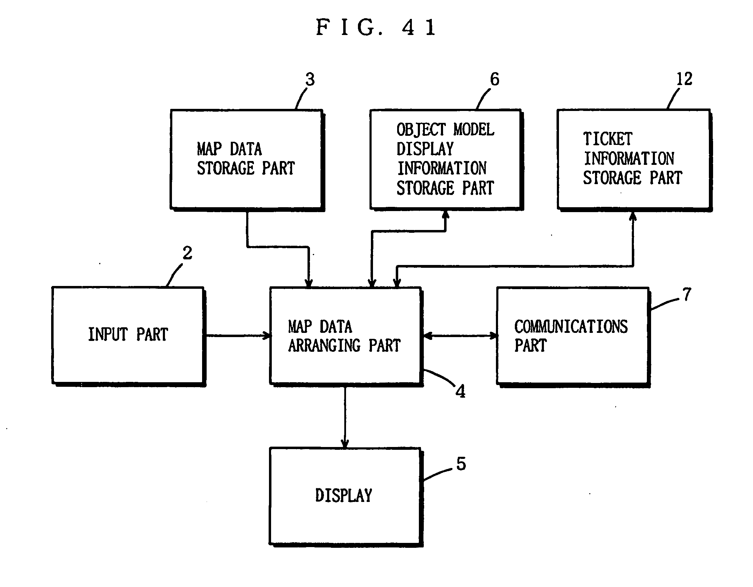

FIG. 41 is a block diagram showing the structure of a map display device according to a fourth embodiment of the present embodiment. In FIG. 41, the map display device includes the input part 2, the map data storage part 3, the map data arranging part 4, the display 5, the object model display information storage part 6, the communications part 7, and a ticket information storage part 12. Here, the ticket information storage part 12 may be implemented by a semiconductor card or magnetic card detachable/attachable to the map display device.

The map display device is similar in structure to that in FIG. 1 except additionally including the ticket information storage part 12. Thus, any constituent found in FIG. 1 is denoted by the same reference numeral, and not described again. Note herein that, unlike the map display device of FIG. 1 wherein communications is not necessarily two-way, communications between the communications part 7 and an external automated fare-collection center or faregate (both not shown) never fails to be two-way, and so is data communications between the map data arranging part 4 and the communications part 7. Also, the map display device herein operates as a terminal of an automated fare-collection system, and thus the map data arranging part 4 operates differently as described next below.

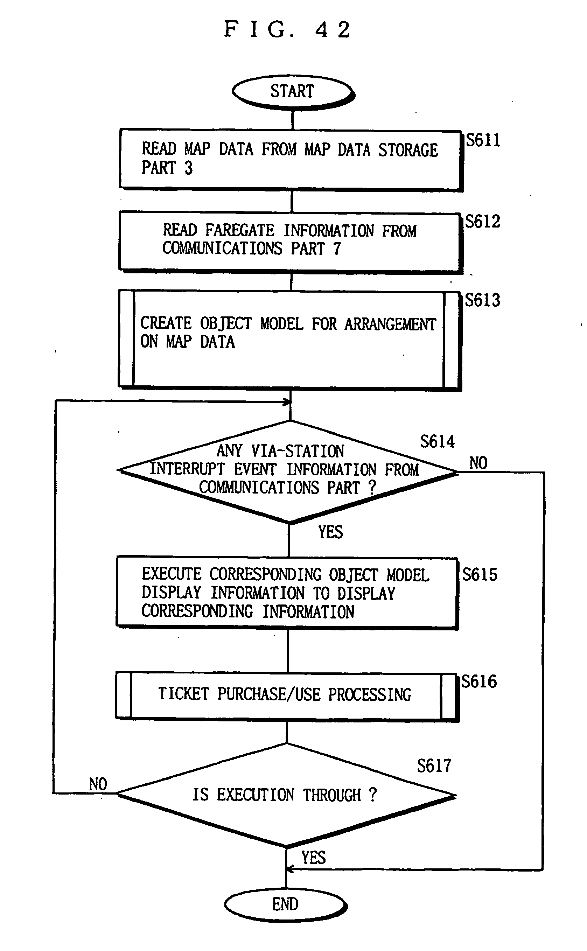

FIG. 42 is a flowchart showing the processing carried out by the map data arranging part 4, which operates as a terminal of an automated fare-collection system. In step S611 in FIG. 42, the map data arranging part 4 reads map data from the map data storage part 3. Then, in step S612, the map data arranging part 4 reads faregate information each transmitted from faregates or an automated fare-collection center. Typically, the faregate information includes faregate IDs and position coordinates for each of the faregates. In subroutine step S613, the map data arranging part 4 refers to thus read faregate information and information stored in the object model display information storage part 6, and creates a faregate polygon for arrangement on the map data.

Such processing as above each correspond to those in FIG. 3. That is, steps S611, S612, and S613 in FIG. 42 are the same as steps S11 and S12, and subroutine step S13 in FIG. 3, respectively, and are not described again.

Here, the faregate information in FIG. 42 may not necessarily be communications information but merely be general landmark information, or may include information about fares. Therefore, the faregate information is not necessarily read from the communications part 7, and an object model may be created only from the information found in the object model display information storage part 6 in subroutine step S613. In such case, step S612 is omitted.

Next, in step S614 in FIG. 42, the map data arranging part 4 determines whether any via-station interrupt event information is forwarded from the communications part 7. Specifically, once the map display device carried along by a user passed through a faregate at a station, transmitted is the via-station interrupt event information from the faregate or the automated fare-collection center. The via-station interrupt event information includes entrance event information or exit event information, which will be described later. The map data arranging part 4 determines whether the via-station interrupt event information is received by the communications part 7. If not yet, this is the end of the procedure. Note that, the processing in FIG. 42 is typically executed repeatedly at predetermined time intervals. If the information is received, on the other hand, the procedure goes to step S615.

In step S615, the map data arranging part 4 analyzes the received via-station interrupt event information. If analyzed that as the entrance event information, the map data arranging part 4 executes the corresponding object model display information stored in the object model display information storage part 6, and then displays a predetermined symbol or object model on the display 5. Typically, displayed is a faregate symbol carrying information about the user's traveling section, payment history, fare, and the like.

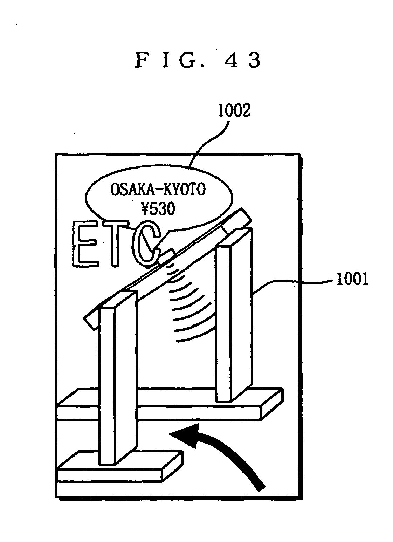

FIG. 43 is a diagram showing exemplary symbols to be displayed in step S615. In FIG. 43, shown are a faregate symbol 1001 and fare information symbol 1002. The faregate symbol 1001 is typically displayed together with a map image at a position of a faregate corresponding to the fare information symbol 1002. For example, when the exit event information is received, the fare information symbol 1002 indicates from which station to which the user traveled, and a fare for the section. Here, the fare may be calculated by the map display device with reference to a predetermined table, or the map display device may transmit information about the user's traveling section to the automated fare-collection center, for example, and receives a calculated result therefrom.

Note that, prior to displaying such symbols, a ticket purchase/use processing in subroutine step S616, which will be later described, may be carried out. That is, step S615 may be through before or at the same time as subroutine step S616.

Next, in subroutine step S616, when the entrance event information is received first and then the exit event information, and if a predetermined condition is satisfied, the map data arranging part 4 carries out the ticket purchase/use processing. Here, the ticket varies in type, and may be a pass, a ticket strip, and the like. The pass here is the right to travel in a predetermined section for a predetermined time period, or data indicating such right. The ticket strip is the right to travel in a predetermined fare section for the predetermined number of times, or data indicating such right. The map data arranging part 4 typically requests , via the communications part 7, the automated fare-collection center for a charge processing. The automated fare-collection center first identifies the user of the map display device, and then accordingly executes the charge processing in a predetermined manner. Described next is the process of subroutine step S616.

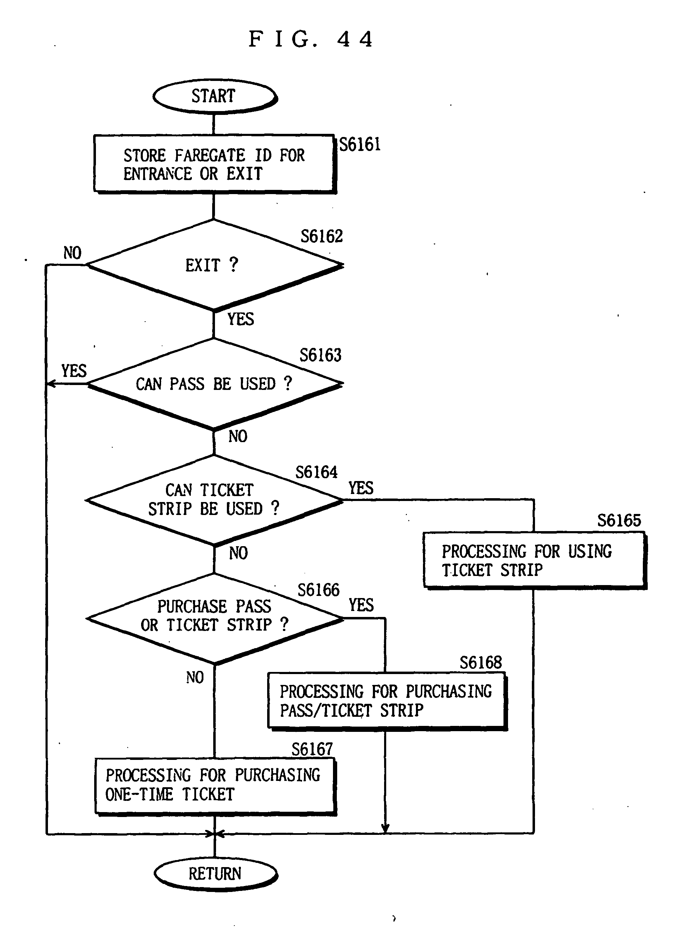

FIG. 44 is a flowchart showing the detailed process of subroutine step S616 in FIG. 42. In step S6161 in FIG. 44, the map data arranging part 4 stores in a predetermined region a faregate ID, which is assigned to each faregate. As described in the foregoing, the faregate ID is typically included in information received by the communications part 7.

In step S6162, the map data arranging part 4 determines whether the faregate having the faregate ID stored in step S6161 is used as an exit. If Yes, the procedure goes to step S6163, otherwise this is the end of subroutine step, and the procedure returns to process of FIG. 42.

In step S6163, the map data arranging part 4 refers to ticket information stored in the ticket information storage part 12 to see what is the user's traveling section indicated by the faregate ID. Determined thereby is whether a pass can be used for the section. If usable, this is the end of subroutine step, and the procedure returns to the process of FIG. 42. Displayed here may be a message and a cartoon telling that the pass was used. If not usable, the procedure goes to step S616. Here, considered may be a case that no pass has been purchased yet, the pass is not usable for the section, or the pass has been expired.

Specifically for the case that the pass has been expired, the map data arranging part 4 may encourage the user to purchase another with a message displayed on the display 5. Even if the pass is still valid but will expire soon, the map data arranging part 4 may warn the user also with a message.

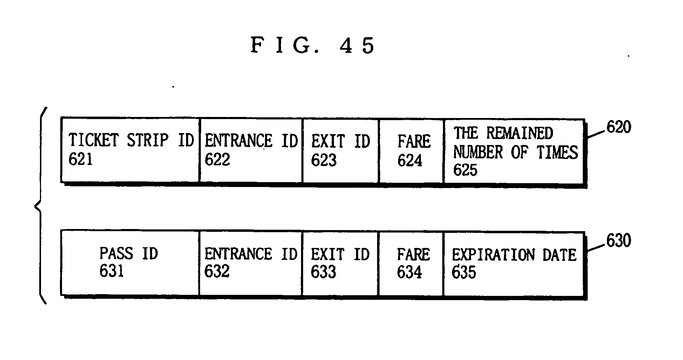

FIG. 45 is a diagram showing exemplary ticket information stored in the ticket information storage part 12. In FIG. 45, the ticket information includes ticket strip information 620 and pass information 630. For protection against tampering, such ticket information is preferably stored in a secured region where no user is accessible with normal operation. Alternatively, the ticket information may be encrypted, and a decryption key may be stored in the secured region. Typically, such secured region is provided in an ID card inserted into the device. Further, the faregates and automated fare-collection center may hold the ticket information for distribution in response to a request by the map display device.

Here, the ticket strip information 620 includes a ticket strip ID 621, an entrance ID 622, an exit ID 623, a fare 624, and the remained number of times 625. Here, the ticket strip information 620 may include an expiration date. The pass information 630 includes a pass ID 631, an entrance ID 632, an exit ID 633, a fare 634, and an expiration date 635. Here, the ticket strip ID 621 and the pass ID 631 are each identification number assigned to the ticket strip information and pass information, respectively, transmitted from the automated fare-collection center or the faregates. The entrance IDs 621 and 631 each correspond to the faregate ID as an entrance, and the exit ID 622 and 632 to the faregate ID as an exit.

The ticket information is not generated until pass/ticket strip purchase processing is not executed, and thus there is no data at device activation. The ticket information may be plurally included, and may include information about any other type of ticket.

Next, in step S6164 in FIG. 44, the map data arranging part 4 determines whether the ticket strip is usable for the section. If usable, the procedure goes to step S6165, otherwise the procedure jumps to step S6166. Here, considered may be a case that a fare for the section exceeds that of the ticket strip, or the ticket strip has been already expired.

In the case that the ticket strip has been expired or the remaining number of times is 0, the map data arranging part 4 may encourage the use to buy a pass with a message displayed on the display 5. Even if the ticket strip is still usable but will expire soon or the remaining number of times is approaching 0, the map data arranging part 5 may also display a message on the display 5.

In step S6165, the map data arranging part 4 executes processing for using a ticket strip. To be specific, the remaining number of times 625 in the ticket strip information 620 is decremented by 1. Here, once the remaining number of times reached 0, the ticket strip information 620 may be deleted or initiated. This is the end of subroutine step in FIG. 44, and the procedure returns to the process in FIG. 42. Here, as is for the pass, a message and a cartoon may tell that the ticket strip was used.

In step S6166, the map data arranging part 4 opens a dialog box through which the user can determine whether he/she purchases a pass or a ticket strip. If Yes, the procedure jumps to step S6168, otherwise goes to step S6187. Such dialog box is not restrictive, and the user may previously determine about his/her purchase, or a predetermined condition may be set in advance such as a pass is to be purchased with a higher priority.

In step S6167, the map data arranging part 4 goes through processing for purchasing a one-time ticket. To be specific, the map display device refers to a predetermined table so as to calculate a fare for the user's traveling section, and then transmits charge information for requesting the automated fare-collection center for charge processing. Alternatively, the map display device may transmit information about two applicable stations for the section (e.g., entrance ID 622 or 632 and exit ID 623 or 633 in FIG. 45) as charge information to the automated fare-collection center, and request for fare calculation and charge processing. Typically, the charge information includes a unique identification number for identifying the user of the map display device.

The automated fare-collection center responsively executes the charge processing in a predetermined manner after identifying the user from the identification number assigned to the map display device, for example. Here, as for the charge processing, a fare is charged the user's bank account every time the charge processing is executed or collectively at the end of month. Or, the charge information is written into an IC card or a prepaid card inserted into the map display device. The procedure then returns to the process in FIG. 42.

In step S6168, the map data arranging part 4 executes processing for purchasing the pass or ticket strip determined in step S6165. The fare calculation and charge processing are the same as those in step S6167, and thus not described again. The procedure then returns to the process in FIG. 42.

In step S616 in FIG. 42, the map data arranging part 4 determines whether every object model display information has been through. If not yet, the procedure returns to the process in step S614, otherwise, this is the end of procedure.

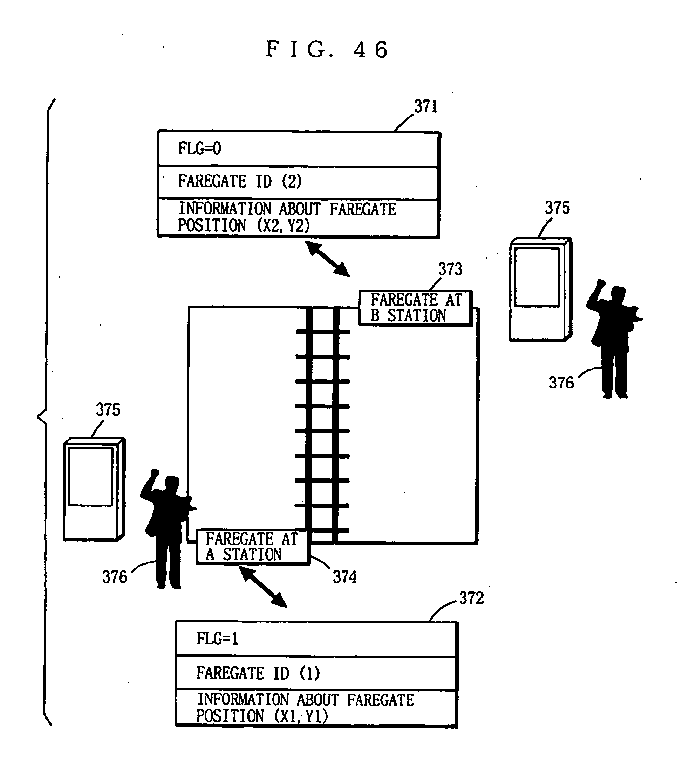

Described next is the operation of such map display device with reference to FIG. 46. FIG. 46 is a diagram showing information transmitted by the automated fare-collection center in a case where the user uses a train with the map display device carried along. In FIG. 46, reference numerals 376 each denote the user, and a reference numeral 375 denotes the map display device which is a take-it-with-you type computer.

In FIG. 46, presumably, the user 376 carrying along the map display device 375 enters an *A* station from a faregate 374 to catch a train. Then , entrance event information 372 is transmitted from the automated fare-collection center, the faregate, or the like. The entrance event information 372 includes flag information, a faregate ID, and information about faregate position. When the user enters the faregate, FLG = 1 is set to the flag information. Each faregate ID is assigned an identification number, and the one in the *A* station is set to 1. The information about faregate position includes coordinates (X1, Y1) defining the position by latitude and longitude. Once received such information, the map display device 375 makes the display 5 display predetermined information such as payment history and fare as already described in step S615.

Next, presumably, the user 376 carrying along the map display device 375 reaches his/her destination, that is, a *B* station, and exits the *B* station from a faregate 373. Then, exit event information 371 is transmitted from the automated fare-collection center, the faregate, or the like. The exit event information 371 is similar to the entrance event information 372, but flag information set thereto is FLG = 0, the faregate ID assigned to the *B* station is 2, and the information about the faregate position is coordinates (X2, Y2). Once received such information, the map display device 375 makes the display 5 display such information as described in step S615 and subroutine step S616, and executes the charge processing.

As is known from the above, the map display device of the fourth embodiment operates as a terminal of an automated fare-collection system so that better usability is offered to a user, and further, represents various information in more intuitive manner so that better viewability is also offered to the user.

Here, the map display device of this embodiment is described as being applied in an automated fare-collection system in stations. This is not restrictive, and any type of automated fare-collection system will be just fine, for example, an ETC (Electronic Toll Collection System) on highways.

Here, if the map display device of this embodiment is additionally provided with the position detection part 9, the route selection part 10, and the guiding part 11, realized is a navigation device functioning similar to the present map display device. That is, in the present map display device, differences from the navigation device of the second embodiment are that the communications part 7 performs two-way communications, and the map data arranging part 4 differently operates. Thus, by structuring the navigation device of the second embodiment as such, realized is a navigation device functioning similar to the present map display device. Described in a fifth embodiment below is a case where such navigation device is mounted in a vehicle, and is applied to ETC.

### (Fifth Embodiment)

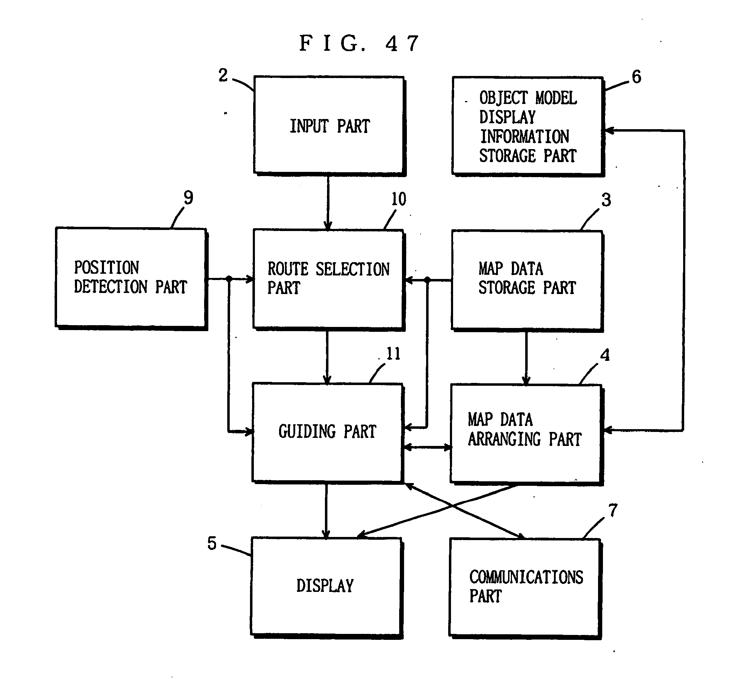

FIG. 47 is a block diagram showing the structure of a navigation device of the fifth embodiment of the present invention. In FIG. 47, the navigation device includes the input part 2, the map data storage part 3, the map data arranging part 4, the display 5, the object model display information storage part 6, the communications part 7, the position detection part 9, the route selection part 10, and the guiding part 11. Here, the navigation device of FIG. 47 is not provided with the ticket information storage part 12 as is the map display device of FIG. 41. However, when ticket type is estimable as is in the fourth embodiment, the ticket information storage part 12 may be included.

The navigation device of this embodiment is similar in structure to that in FIG. 33, and thus any constituent found in FIG. 33 is denoted by the same reference numeral, and not described again. A difference from the navigation device of FIG. 33 is that, in the present navigation
device, communications between the communications part 7 and an external automated toll-collection center or tollgate (both not shown) is two-way, and so is data communications between the guiding part 11 and the communications part 7. Also, the present navigation device differently operates as a terminal of the automated toll-collection system. Other than that, the present navigation device is similar in basic operation to that of the fourth embodiment. Next below, the operation of the present navigation device is described.

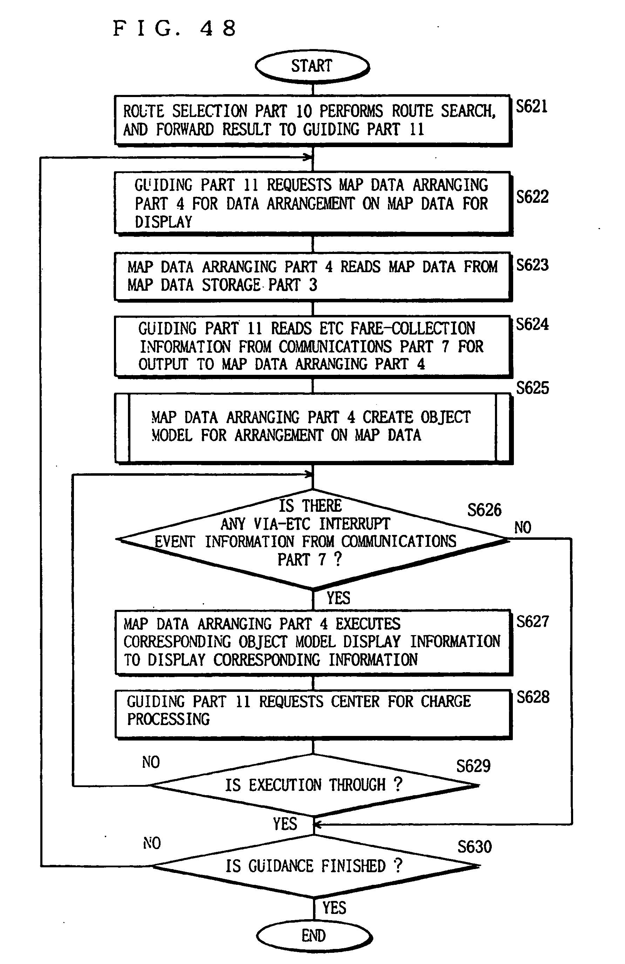

FIG. 48 is a flowchart showing the processing in the navigation device, operating as a terminal in an automated toll-collection system. In step S621 in FIG. 48, user-designated destination and map region to be displayed are provided by the input part 2. Then, in response to a vehicle position forwarded from the position detection part 9, the route selection part 10 performs route search, and a result obtained thereby is forwarded to the guiding part 11. Then, in step S622, the guiding part 11 requests the map data arranging part 4 for data arrangement.

In step S623, the map data arranging part 4 reads map data from the map data storage part 3. This step corresponds to step S611 in FIG. 42. In step S624, the guiding part 11 reads ETC toll collection information transmitted from the automated toll-collection center or tollgates. This step corresponds to step S612 in FIG. 42. In subroutine step S625, the map data arranging part 4 refers to thus read ETC toll-collection information and information stored in the object model display information storage part 6, and creates a tollgate polygon for arrangement on the map data. This step corresponds to subroutine step in FIG. 42.

Then, in step S626, the map data arranging part 4 determines whether there is any via-ETC interrupt event information from the communications part 7. To be specific, once the navigation device passed through an ETC gate, transmitted from the automated toll-collection center or each of the tollgates is via-ETC interrupt event information. The via-ETC interrupt event information is almost the same as the via-station interrupt event information described in the fourth embodiment, but will be later described. The map data arranging part 4 determines whether the via-ETC interrupt event information is received by the communications part 7. If not yet, this is the end of procedure. Note that, the processing in FIG. 48 is typically executed repeatedly at predetermined time intervals. If the information is received, on the other hand, the procedure goes to step S627. Here, step S627 corresponds to step S614 in FIG. 42.

In step S627, the map data arranging part 4 analyzes the received via-ETC interrupt event information. If analyzed that as the entrance event information, or both of the entrance and exit event information, the map data arranging part 4 executes the corresponding object model display information stored in the object model display information storage part 6, and then displays a predetermined symbol on the display 5. Typically, displayed is a tollgate symbol carrying information about payment history, cumulative amount of tolls, and the like. Here, this step corresponds to step S615 in FIG. 42.

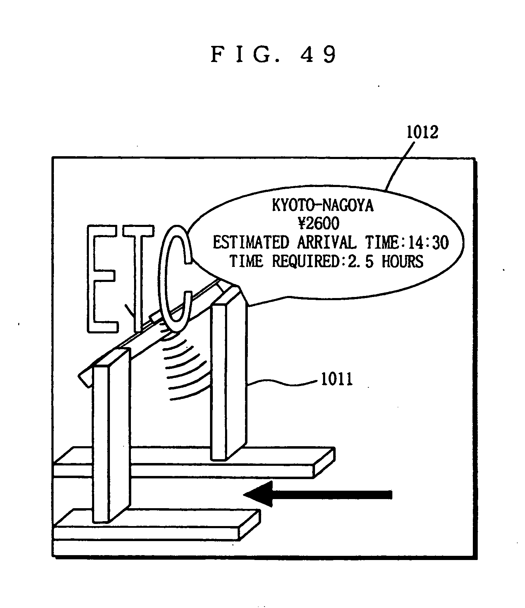

FIG. 49 is a diagram showing exemplary symbols to be displayed in step S627. In FIG. 49, similarly to FIG. 43, shown are a tollgate symbol 1011 and toll information symbol 1012. The tollgate symbol 1011 is typically displayed together with a map image at a position of a tollgate corresponding to the above-described ETC toll-collection information. For example, after the entrance event information is received, the toll information symbol 1012 indicates highway information about the vehicle's entrance and exit located on a guided route, a toll for the section, and estimated arrival time and required time. Here, the toll may be calculated by the navigation device with reference to a predetermined table, or the navigation device may transmit information about the user's driving section to the automated toll-collection center, for example, and receives a calculated result therefrom.

As such, the navigation device of the fifth embodiment is additionally provided with the position detection part 9, the route selection part 10, and the guiding part 11 to the map display device of the fourth embodiment. Accordingly, by utilizing a result obtained by route search, the navigation device can perform estimation as above so that the user can be informed in advance.

Next, in step S628, when received both the entrance and exit event information, the guiding part 11 typically requests, via the communications part 7, the automated toll-collection center for the charge processing. The automated toll-collection center first identifies the user of the navigation device, and then accordingly executes the charge processing in a predetermined manner. Here, this step corresponds to subroutine step S616 in FIG. 42.

In step S629, the map data arranging part 4 determines whether every object model display information has been through. If not yet, the procedure returns to the process in step S626. If Yes, the procedure goes to step S630. Here, this step corresponds to step S617 in FIG. 42.

In step S630, the guiding part 11 determines whether the guidance is now completed, for example, whether the vehicle has reached its destination. If not yet, the procedure returns to step S622 to repeat the processing until the guiding part 11 determines the vehicle having reached its destination.

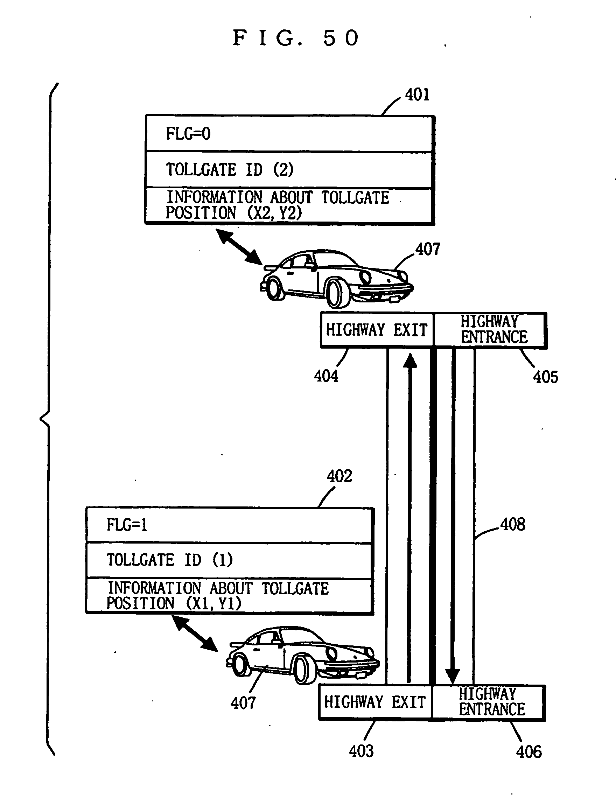

Described next is the specific operation of such navigation device with reference to FIG. 50. FIG. 50 is a diagram showing information transmitted by the automated toll-collection center in a case where the present navigation device is used as an ETC terminal. In FIG. 50, reference numerals 407 each denote the navigation device which is mounted on a vehicle. Here, the information transmitted from the automated toll-collection center in FIG. 50 is almost the same as the information transmitted from the automated fare-collection center in FIG. 46.

In FIG. 50, presumably, the vehicle-mounted navigation device 407 passes through a tollgate such as an ETC-dedicated gate to enter a toll highway 408 from a highway entrance 403. Then, entrance event information 402 is transmitted from the automated toll-collection center, the tollgate, or the like. Such communications is typically performed under radio frequency of 5.8GHz with a data transfer speed of 1Mbps. The entrance event information 402 is almost the same as the one in FIG. 46, and thus is not described here. Once received such information, the vehicle-mounted navigation device 407 makes the display 5 display predetermined information such as payment history and cumulative amount of tolls.

Next, presumably, the navigation device 407 reaches its destination, that is, a highway exit 404, and exits the highway 408 therefrom. Then, exit event information 401 is transmitted from the automated toll-collection center, the exit, or the like. When received such information, the navigation device 407 makes the display 5 display such predetermined information as described in steps S627 and S628, and then makes the automated toll-collection center execute the charge processing.

As such, the navigation device of the fifth embodiment operates as a terminal of an automated toll-collection system so that better usability is offered to a user, and further, represents various information in more intuitive manner so that better viewability is also offered to the user.

Here, the present navigation device is described as being applied in an ETC automated toll-collection system on highways. This is not restrictive, and any type of automated toll-collection system will be just fine, for example, such automated fare-collection system in stations as described in the fourth embodiment.

Further, the map display device of the fourth embodiment and the navigation device of the fifth embodiment are described as being used for fare and toll payment for any applicable section on railway and highway having faregates and tollgate placed at both ends, for example. This is not restrictive, and faregates and tollgates may be placed at entrance and exit of any chargeable area, or at any specific point where payment is charged by approaching and passing by the point.

### (Sixth Embodiment)

A navigation device of a sixth embodiment is similar in structure to that of the fifth embodiment in FIG. 47, and any identical component is not described again. The navigation device of this embodiment specifically serves as a taxi-call terminal by examining information about taxis scattered therearound. Described next is the operation of the present navigation device together with the structure and operation of a taxi call system.

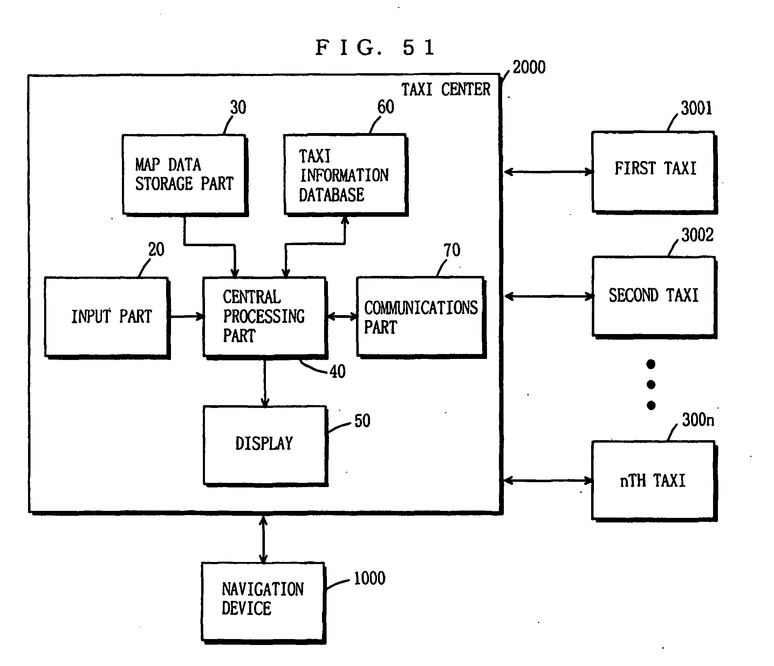

FIG. 51 is a diagram showing the entire structure of a taxi call system including a navigation device operating as a taxi call terminal. This taxi call system is provided with a navigation device 1000 which is user-operable for taxi call, a taxi center 2000 for dispatching a taxi on demand, and first to *n*th taxis 3001 to 300*n* which are locatable. Here, the number of taxis is surely not limited.

In FIG. 51, the taxi center 2000 includes an input part 20, a map data storage part 30, a central processing part 40, a display 50, a taxi information database 60, and a communications part 70. The structure of the taxi center 2000 can be realized by a general computer system. The structure of the taxi center 2000 realized as such is almost the same as the map display device realized also by a general computer system of FIG. 2, and thus only any difference therebetween is mainly described here.

In the taxi center 2000 of FIG. 51, the taxi information database 60 typically stores taxi information together with taxi control numbers. Here, the taxi information includes position information and type information, and covers every taxi under control. Such information may be updated in real time, at regular intervals, or responsively to an update request.

Also in the taxi center 2000, the central processing part 40 communicates, via the communications part 70, with the navigation device 1000, and the first to *n*th taxis 3001 to 300*n*, and accordingly dispatches a taxi at the user's request. Described next below is the operation of the central processing part 40.

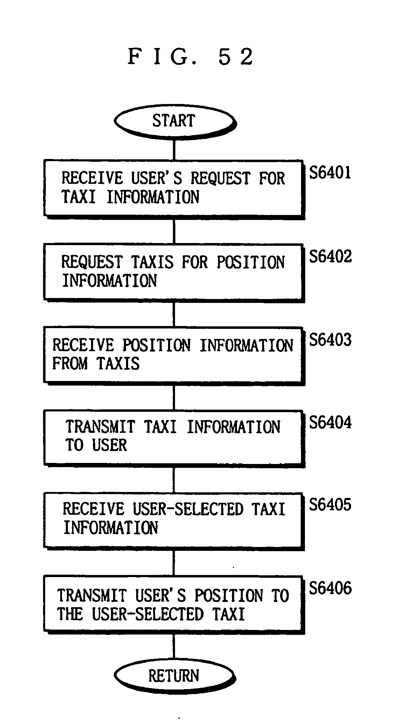

FIG. 52 is a flowchart showing the operation of the central processing part 40 for dispatching a taxi. In step S6401 in FIG. 52, the central processing part 40 receives, via the communications part 70, a user's request for taxi information transmitted from the user's navigation device 1000. The operation of the navigation device 1000 at this time is left for later description. Here, such request for taxi information is specifically asking for information about taxis scattering around the area where the user currently is, therefore the user' s current position is transmitted together therewith. Also, the user's specific request for a vehicle type, fare, allowable distance range, and the like, may be also transmitted together.

Next, in step S6402, the central processing part 40 communicates with, via the communications part 70, the first to *n*th taxis 3001 to 300*n*, and asks those to each transmit its position information, and the like. Here, the central processing part 40 may refer to the taxi information database 60 to selectively communicate with any taxi locating close to the user, or being unchanged in position for a predetermined time period. If the user's specific request for the taxi is found in the taxi information, the central processing part 40 may selectively communicate with any taxi applicable thereto.

Then, in step S6403, the central processing part 40 receives, via the communications part 70, the position information from the taxis having communicated with in step S6402. Since each of the taxis is typically equipped with a position detection device and a communications device, the detected position information is transmitted to the taxi center 2000 via the communications device. Thus received position information is then stored in the taxi information database 60 together with the corresponding taxi control number.

Note that, those steps S6402 and S6403 may be omitted if the taxis can be located without communications responding to the user's request. For example, if the position information of the first to *n*th taxis 3001 to 300*n* is updated at regular intervals, or if the taxi center 2000 can locate those taxis due to a transmitter provided to each thereof, those steps may be omitted. In such case, the position information of the taxis is stored in the taxi information database 60 as appropriate.

Then, in step S6404, the central processing part 40 refers to the taxi information database 60, and then transmits the taxi information at the user's request to the navigation device 1000 via the communications part 70. Here, the taxi information includes the current position of the taxis. The taxi information may also include various other types of information about a taxi's company name, vehicle type, fare, estimated arrival time to the user, and the like. To calculate the estimated arrival time, the central processing part 40 refers to map data stored in the map data storage part 30, and then searches for a route from the taxi's current position to the user's to calculate a required time therefor. When the taxi center 2000 does not have to search for any route, the map data storage part 30 may not be provided.

In step S6405, the central processing part 40 receives , from the navigation device 1000 via the communications part 70, information about which taxi the user has selected. Such selected taxi information typically indicates where the user currently is. Here, the operation of the navigation device 1000 for taxi selection while referring to the taxi information transmitted in step S6404 will be described later.

Next, in step S6406, the central processing part 40 communicates with the user-selected taxi via the communications part 70, and transmits thereto information about the user's current position, and the like. At this time, the central processing part 40 may guide the taxi to the user along a route searched by referring to the map data in the map data storage part 30.

As is known from the above, the taxi center 2000 can dispatch the user-requested taxi through communications with the navigation device 1000 and the first to nth taxis 3001 to 300n.

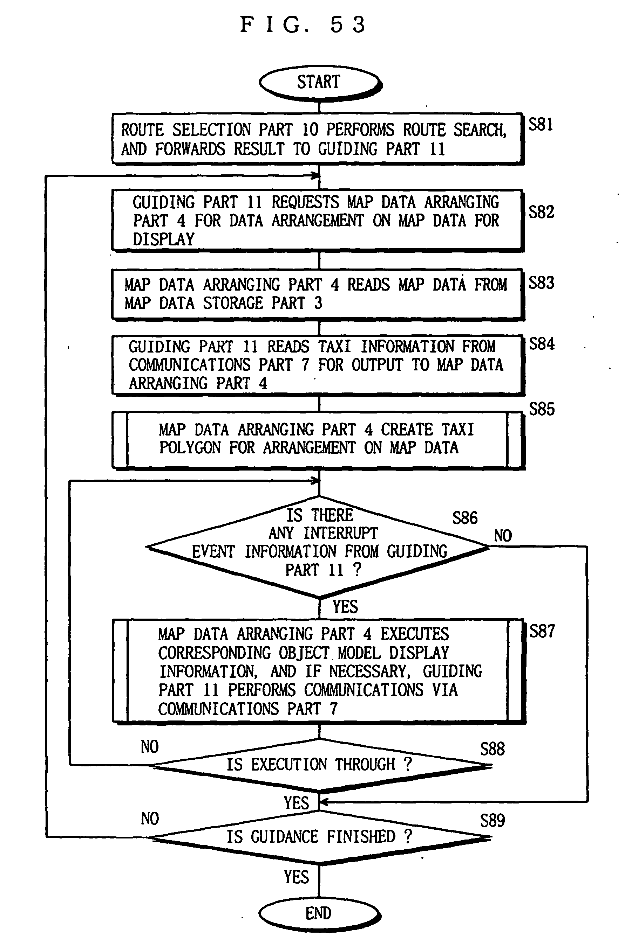

Described next is the operation of the navigation device 1000. FIG. 53 is a flowchart showing the processing executed by the navigation device, which operates as a taxi call terminal. In step S81 in FIG. 53, a user-designated destination and map region are provided by the input part 2, and the user's current position is provided by the position detection part 9. In response, the route selection part 10 performs route search, and forwards a result to the guiding part 11. In step S82, the guiding part 11 then requests the map data arranging part 4 for data arrangement.

In step S83, the map data arranging part 4 reads the map data from the map data storage part 3. Then, in step S84, the guiding part 11 typically responds to the user's instruction to communicate with the taxi center 2000 in FIG. 51 via the communications part 7, and reads taxi information for the area. The taxi information is forwarded to the map data arranging part 4. The taxi information includes a taxi ID, taxi company name, vehicle type, fare, for example. The process in this step corresponds to that in steps S6401 to S6404 in FIG. 52. Here, the taxi information may be automatically read at arbitrary intervals.

In subroutine step S85, the map data arranging part 4 refers to thus read communications information (taxi information) and information stored in the object model display information storage part 6, and creates taxi object models for arrangement on the map data. The process in subroutine step S85 is the same as that in subroutine step S13 in FIG. 3, and thus is not described again. However, taxi object model display information will be described later about the details and display example thereof.

Next, in step S86, the map data arranging part 4 determines whether there is any interrupt event information from the guiding part 11. The interrupt event information is typically generated by user's input operation (e.g., sorting and selection by vehicle size and/or taxi company, operation for information request), and by a predetermined condition being set. In order to make a request for information, the user may put a cursor on any one of the taxi polygons on a screen, for example. If there is no interrupt event information, this is the end of procedure. Here, since the processing in FIG. 53 is typically executed repeatedly at predetermined time intervals, such determination in step S86 is also repeatedly made. If the information is received, on the other hand, the procedure goes to subroutine step S87.

In subroutine step S87, the map data arranging part 4 analyzes the received interrupt event information, and executes the corresponding object model display information stored in the object model display information storage part 6. If required, the guiding part 11 performs communications via the communications part 7.

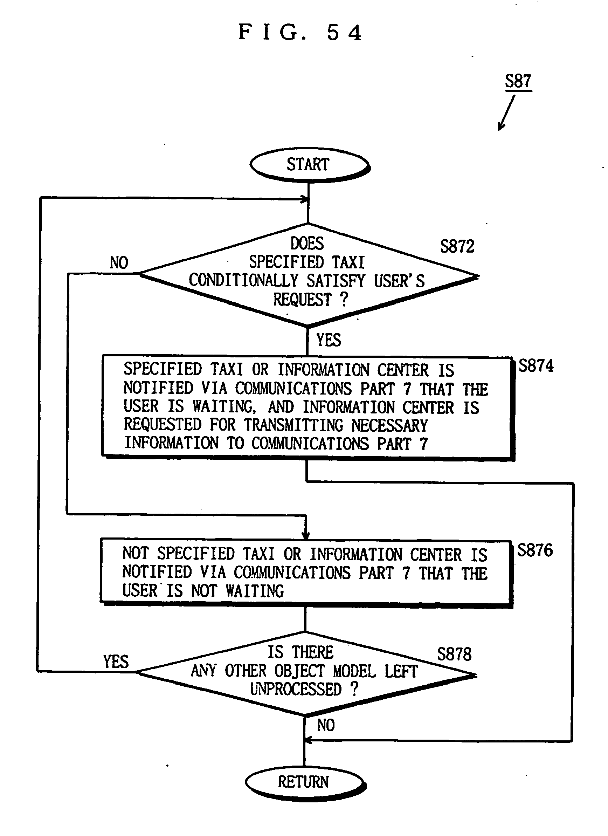

Described here is the process in subroutine step S87 in detail. FIG. 54 is a flowchart showing the detailed process in subroutine step S87. In step S872 in FIG. 54, the guiding part 11 determines whether any specified taxi satisfies the user's request. Considered here is a case where taxis are specified according to a user-designated condition or predetermined condition, for example. If any taxi satisfies, the procedure goes to step S874, otherwise, goes to step S876.

Here, such specification may be done directly by the user, and also by an auction among several taxis, and if so, specified is a taxi being the cheapest bidder.

In step S874, the guiding part 11 informs, via the communications part 7, the taxi satisfying the condition that the user is waiting, and asks the taxi center 2000 to forward necessary information via the communications part 7. To inform the taxi, transmitted is the selected taxi information including a taxi ID, position information obtained from the position detection part 9, and the like, for specifying which taxi is the selected one. Surely, the guiding part 11 may communicate with both the selected taxi and the taxi center 2000 to inform the user is waiting. Or, the guiding part 11 may ask the selected taxi to transmit any required information, including a time to reach the location where the user is waiting, fare, any specific service, and if any, what service, and the like. Surely, such information is preferably already at the user's hand as part of the taxi information. After such processing, the procedure goes to the process in FIG. 53.

In step S876, the guiding part 11 informs, via the communications part 7, any other taxi not satisfying the condition that the user is not waiting. If this operation is unnecessary, this processing is omissible. Next, in step S878, the guiding part 11 determines whether there is any other object model left for processing. If No, the procedure returns to the process in FIG. 53. If there is any left, the procedure returns to step S872.

After step subroutine step S87, the procedure goes to step S88 in FIG. 53. In step S88, the map data arranging part 4 determines whether every object model display information has been through. If not yet, the procedure returns to step S86, otherwise goes to step S89.

In step S89, the guiding part 11 determines whether the guidance has been completed. If not yet, the procedure returns to step S82, otherwise this is the end of procedure.

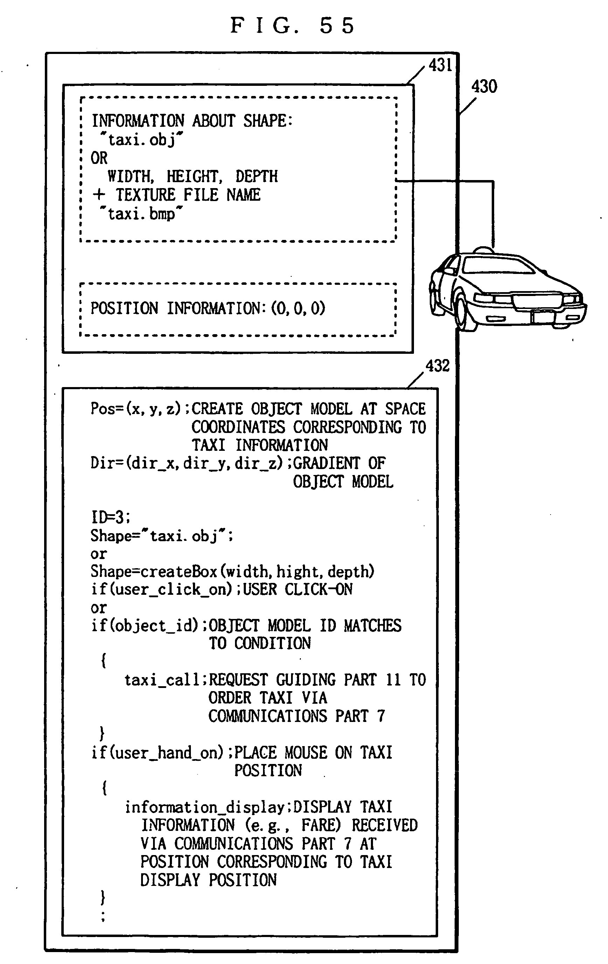

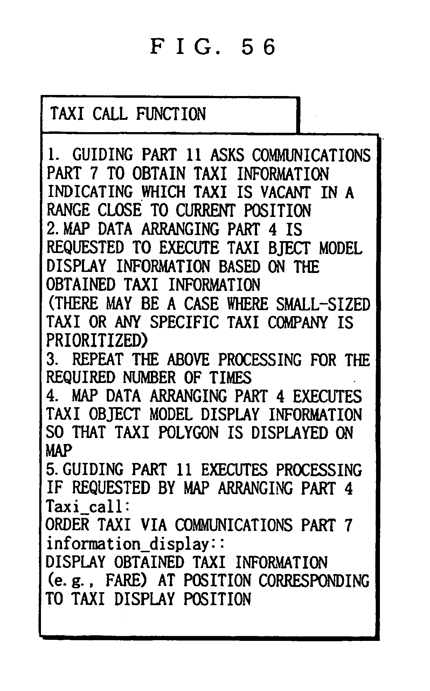

Described next is the details of the taxi object model display information, and the processing carried out by the guiding part 11 with reference to FIGS. 55 and 56. FIG. 55 is a diagram showing a specific example of taxi object model display information 430.

In FIG. 55, the taxi object model display information 430 includes information about shape 431 and information about behavior in time and space 432 as in the case shown in FIG. 7. The information about shape 431 may be 3D shape information stored in a file named "taxi.obj", for example. Or, the information about shape 431 may include information for defining a polygon by width, height, and depth, and a file named "taxi.bmp" specifying a texture mapped to the polygon, for example. Here, the information about shape 431 includes position information. In FIG. 55, the position information is 3D coordinates at which an object model is displayed. A graphic on the right upper side is an example drawn according to the information exemplified in FIG. 55.

The information about behavior in time and space 432 is typically described in an object-oriented interpreter language having no need for compilation as already described in FIG. 7. Once methods in the information are executed, taxi polygons are drawn at each currently applicable position on a map image. The user's click thereon or condition matching leads to the operation for taxi call. If the user puts a cursor on any one of the taxi polygons, the corresponding taxi information (e.g., fare) is displayed in the vicinity thereof (in this example, on the right upper side).

By referring to FIG. 56, described next is a case where the information about behavior in time and space is represented in a format including a function name and contents thereof. FIG. 56 exemplarily shows a function name and contents thereof for taxi call, stored in the object model display information storage part 6. Next below, the contents of the function are described step by step.

A first step is, by the guiding part 11, requesting the communications part 7 for obtaining taxi information specifically to know which taxi is vacant in an area close to the user. A second step is, by the guiding part 11, requesting the map data arranging part 4 for executing the taxi display object model information based on the obtained taxi information. Here, there may be a case where small-sized taxi or any specific taxi company is prioritized, for example. A third step is, also by the guiding part 11, repeating such processing as above for the required number of times. A four step is, by the map data arranging part 4, executing taxi object model display information and displaying taxi polygons in a map image. A fifth step is, by the guiding part 11, executing any processing requested by the map data arranging part 4. Such processing may include, for example, ordering a taxi via the communications part 7, or displaying taxi information.

After those steps are through, taxi polygons are created in a map space, and each appropriately arranged on a road image. Thereafter, if the user clicks any one of the polygons, for example, a taxi call is accordingly made via the communications part 7. Also, if the user puts a cursor on the polygon, the corresponding taxi information such as fare is displayed as an object model separately from taxi polygons.

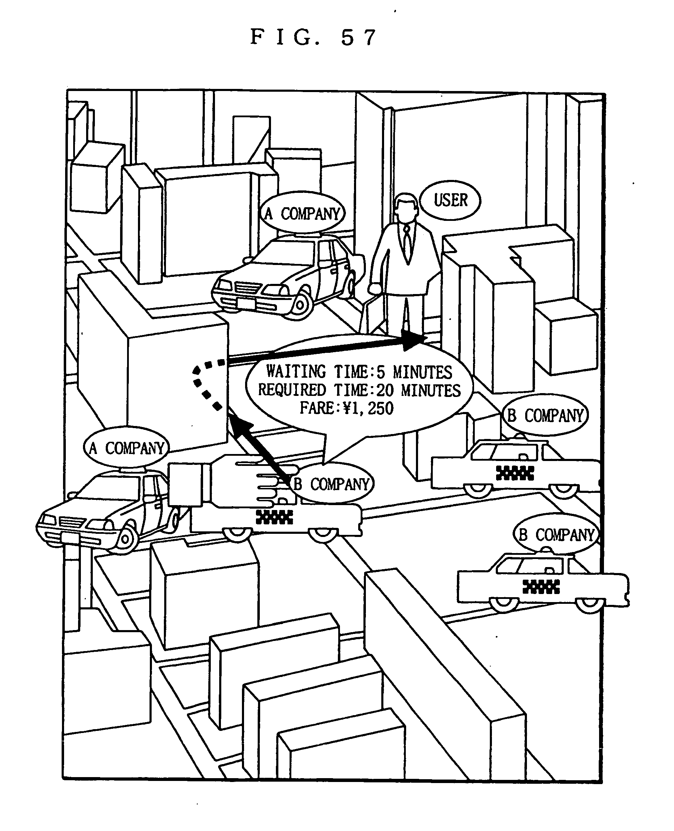

FIG. 57 is a diagram showing the operation of the navigation device of the sixth embodiment. In FIG. 57, displayed on a 3D map image are taxi polygons each denoted by A or B depending on which taxi company together with a user's figure. Herein, a hand-shaped graphic with a pointing finger extended denotes a cursor, and thereby, the user points or clicks any specific object model with a mouse, for example.

Assuming here that the user selects the B's taxi located in the middle of the map image. If the user brings the cursor close thereto, created is an object model of speech bubble displaying the corresponding taxi information therein. In this example, a waiting time is 5 minutes, a required time for the user's destination is 20 minutes, and the fare is ¥1,250. Here, it is not restrictive what taxi information is displayed how. Thus, the taxi information is not necessarily displayed in the same window, and any information will be just fine as long as the information is considered relevant to taxis, for example. Then, once the user clicks any one of the taxi polygons, the taxi call is made specifically therefor. Then, the taxi takes a route denoted by an arrow in the image to the user.

Herein, if the position detection part 9, the route selection part 10, and the guiding part 11 are omitted from the navigation device of this embodiment, realized is a map display device functioning similarly thereto. This is because, the navigation device of the present embodiment is similar in structure to that of the fifth embodiment in FIG. 47, except for operating as a taxi call terminal. Therefore, the map display device of the fourth embodiment is so structured as to operate as a taxi call terminal, realizing a map display device functioning similar to the present navigation device.

### (Seventh Embodiment)

A navigation device of a seventh embodiment is similar in structure to that of the fifth embodiment in FIG. 47, and any identical component is not described again. The navigation device of this embodiment specifically serves as a terminal for notifying buses of a user's intention of riding while examining information about buses scattered therearound. Described next is the operation of the present navigation device together with the structure and operation of a bus riding system.

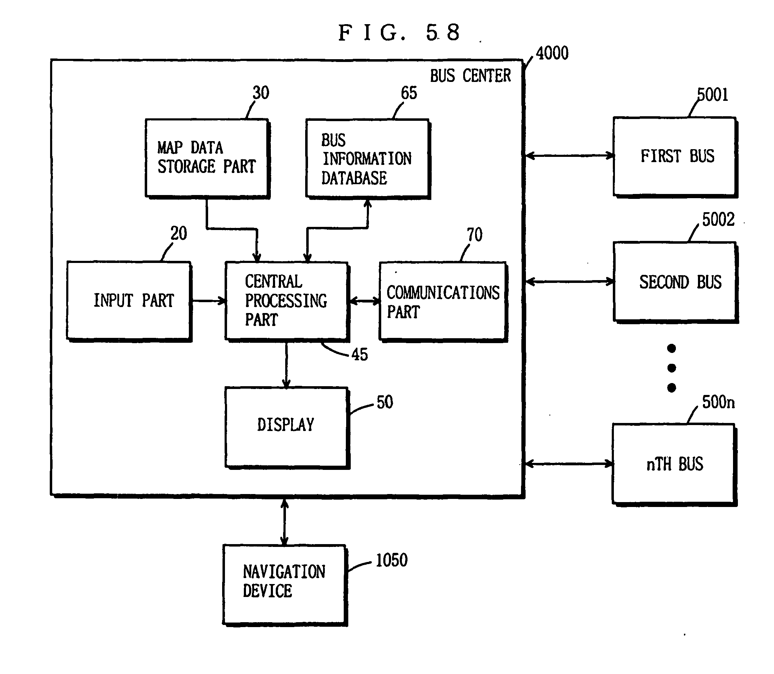

The entire structure of a bus riding system including the present navigation device is almost similar to the above described taxi call system of the sixth embodiment. FIG. 58 is a diagram showing the entire structure of a bus riding system including a navigation device 1050, which operates as a terminal for notifying a bus of a user's intention of riding. The system of FIG. 58 is almost similar to that of FIG. 51, and any difference therebetween is mainly described below. In FIG. 58, a bus center 4000 is similar in structure but not in operation to the taxi center 2000 of FIG. 51. A bus information database 65 is similar in structure to the taxi information database 60 of FIG. 51, and a first to *n*th buses 5001 to 500n to the first to nth taxis 3001 to 300*n* of FIG. 51.

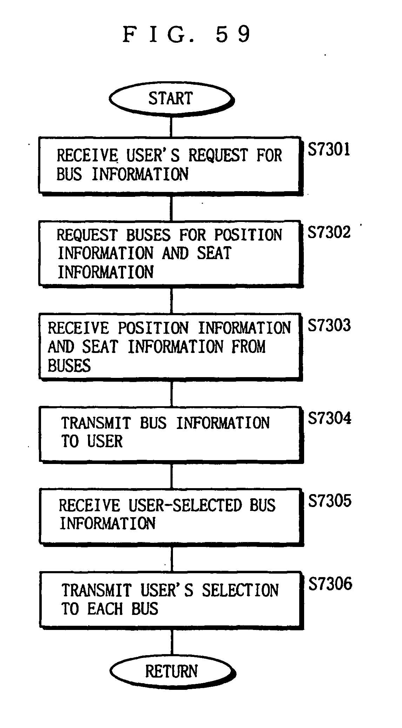

Described next is the operation of a central processing part 45 included in the bus center 4000. FIG. 59 is a flowchart showing such operation. In step S7301 in FIG. 59, the central processing part 45 receives, via the communications part 70, a user's request for bus information transmitted from the user' s navigation device 1050. The operation of the navigation device 1050 at this time is left for later description. Here, such request for bus information is specifically asking for information about buses scattering around the area where the user currently is, therefore the user's current position and his/her destination are transmitted together therewith. Also, the user's specific request for a vehicle type, fare, required time for the destination, waiting time, and the like, may be also transmitted together. Here, if the user's request for bus information is made for every bus scattering around in his/her close distance range, transmitted together may be only the user's position information. In such case, bus selection is to be done on the user side.

Next, in step S7302, the central processing part 45 selects any bus which brings the user to his/her destination among from those buses 5001 to 500*n*, and asks those to each transmit its position information, vacancy information, and the like. Here, for bus selection, the central processing part 45 refers to map data stored in the map data storage part 30, and compares bus routes with the user's route to his/her destination. When the bus center 4000 does not have to search for any route or make such comparison, the map data storage part 30 may not be provided. The central processing part 45 refers to a bus timetable or schedule stored in the bus information database 65 to selectively communicate with any bus locating close to the user, or being unchanged in position for a predetermined time period. If the user's specific request for the bus is found in the bus information, the central processing part 40 may selectively communicate with any taxi applicable thereto.

Then, in step S7303, the central processing part 45 receives, via the communications part 70, the position information and vacancy information from the buses having communicated with in step S7302. Since each of the buses is typically equipped with a position detection device and a communications device, the detected position information and vacancy information (for example, full or not) are transmitted to the bus center 4000 via the communications device. Thus received position information is then stored in the bus information database 65 together with the corresponding bus control number.

Note that, those steps S7302 and S7303 may be omitted if the buses can be located without communications responding to the user's request. For example, if the position information of the first to *n*th buses 5001 to 500*n* is updated at regular intervals, or if the bus center 4000 can locate those buses due to a transmitter provided to each thereof, those steps may be omitted. In such case, the position information of the buses is stored in the bus information database 65 as appropriate. Alternatively, the bus timetable or schedule in the bus information database 65 may be referred to for automatically selecting any bus locating closer to the user' s current position without communications. If this is the case, it is preferable to additionally obtain vacancy information.

Next, in step S7304, the central processing part 45 refers to the bus information database 65, and then transmits the bus information at the user's request to the navigation device 1050 via the communications part 70. Here, the bus information includes the current position of the buses. The bus information may also include various other types of information about a bus ' s company name, bus route, vehicle type, fare, estimated arrival time and required time to the user, and the like.

In step S7305, the central processing part 45 receives, from the navigation device 1050 via the communications part 70, information about which bus the user has selected. Such selected bus information typically includes the bus control number assigned to the user-selected bus. Here, the operation of the navigation device 1050 for bus selection while referring to the bus information transmitted in step S7304 will be described later.

Next, in step S7306, the central processing part 45 communicates with the user-selected bus via the communications part 70, and transmits thereto information about the user's current position, and the like. Instead, transmitted may be a control number assigned to a bus stop located close to the user. The central processing part 45 then notifies other buses that the user is not waiting. To be specific, the central processing part 45 refers to the map data stored in the map data storage part 30, searches for a bus stop at which currently the user is standing, and to any bus passing by the bus stop, notifies that the user is not waiting. In this manner, even if the bus finds the user standing at the bus stop, the bus can pass by without stopping as is informed in advance that he/she is not waiting for it.

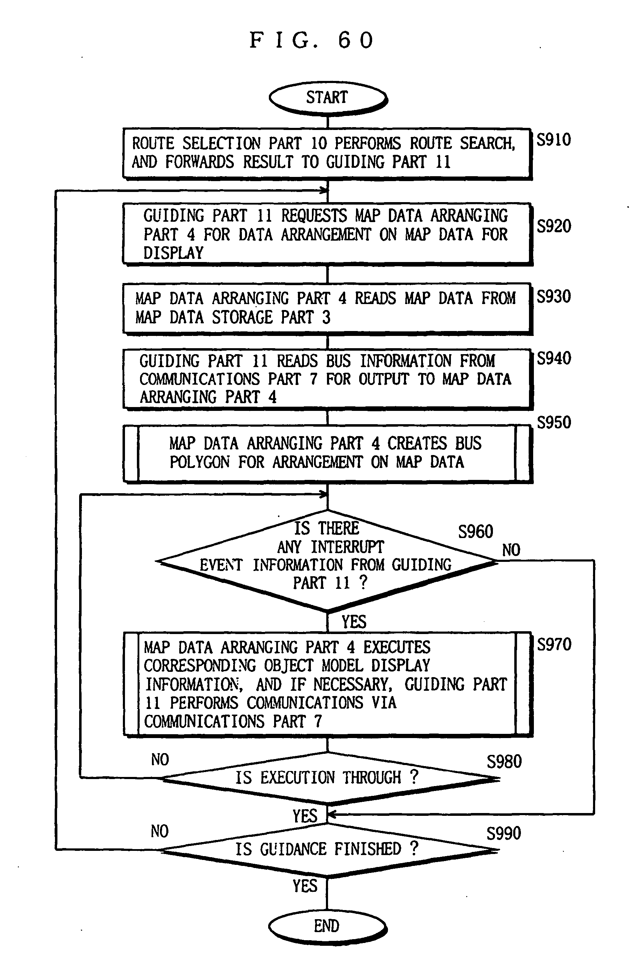

Described next is the operation of the navigation device 1050. FIG. 60 is a flowchart showing the processing executed by the navigation device, which operates as a terminal for examining bus information. In step S910 in FIG. 60, a user-designated destination and map region are provided by the input part 2, and the user's current position is provided by the position detection part 9. In response, the route selection part 10 performs route search, and forwards a result to the guiding part 11. In step S920, the guiding part 11 then requests the map data arranging part 4 for data arrangement.

In step S930, the map data arranging part 4 reads the map data from the map data storage part 3. Then, in step S940, the guiding part 11 reads via the communications part 7 bus information for the area. The bus information is then forwarded to the map data arranging part 4. The taxi information includes a bus ID, bus company name, bus route, fare, for example. The process in this step corresponds to that in steps S7301 to S7304 in FIG. 59. Here, the bus information may be automatically read at arbitrary intervals.

In subroutine step S950, the map data arranging part 4 refers to thus read communications information (bus information) and information stored in the object model display information storage part 6, and creates bus object models for arrangement on the map data. The process in subroutine step S950 is the same as that in subroutine step S13 in FIG. 3, and thus is not described again. However, bus object model display information will be described later about the details and display example thereof.

Next, in step S960, the map data arranging part 4 determines whether there is any interrupt event information from the guiding part 11. The interrupt event information is typically generated by user's input operation (e.g., operation for information request), and by a predetermined condition being set. If there is no interrupt event information, this is the end of procedure. Here, since the processing in FIG. 60 is typically executed repeatedly at predetermined time intervals, such determination in step S960 is also repeatedly made. If the information is received, on the other hand, the procedure goes to subroutine step S970.

In subroutine step S970, the map data arranging part 4 analyzes the received interrupt event information, and executes the corresponding object model display information stored in the object model display information storage part 6. If required, the guiding part 11 performs communications via the communications part 7.

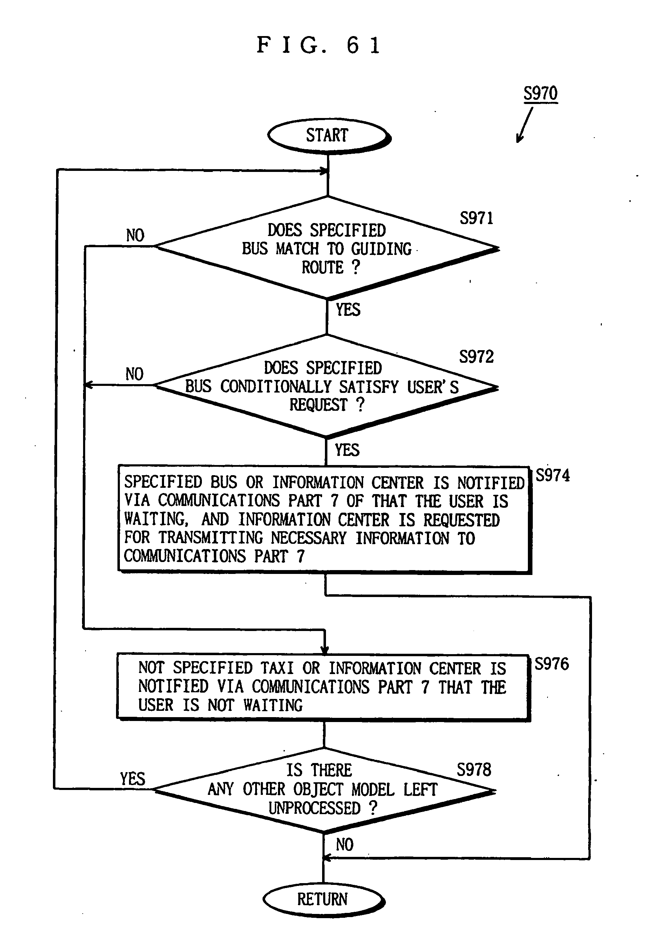

Described here is the process in subroutine step S970 in detail. FIG. 61 is a flowchart showing the detailed process in subroutine step S970. In step S971 in FIG. 61, the guiding part 11 determines whether any specified bus is suitable for a guiding route. That is, the guiding part 11 determines whether the specified bus appropriately brings the user to his/her destination. If determined Yes , the procedure goes to step S972, otherwise goes to step S976. Here, the bus route may be the one included in the object model display information, or a result found by the guiding part 11. In the case that the user's destination is forwarded to the bus center 4000 for comparison with the bus routes therein, the process in this step is omitted since thus specified bus is always appropriate.

In step S972, the guiding part 11 then determines whether any specified bus satisfies the user's specific request. Considered here is a case where buses are specified according to a user-designated condition or predetermined condition, for example. If any bus satisfies, the procedure goes to step S974, otherwise goes to step S976. Here, such specification may be done directly by the user,

In step S974, the guiding part 11 informs, via the communications part 7, the bus satisfying the condition that the user is waiting, and asks the bus information center 4000 to forward necessary information via the communications part 7. To inform the bus, transmitted is the selected bus information including a bus ID, position information obtained from the position detection part 9, and the like, for specifying which bus is the selected one. Surely, the guiding part 11 may communicate with both the selected bus and the bus center 4000 to inform the user is waiting. Or, the guiding part 11 may ask the selected bus to transmit any required information, including a time to reach the location where the user is waiting, fare, vacancy information, and the like. Surely, such information is preferably already at the user's hand as part of the bus information. After such processing, the procedure goes to the main routine in FIG. 60.

In step S976, the guiding part 11 informs, via the communications part 7, any other bus not satisfying the condition that the user is not waiting. If this operation is unnecessary, this processing is omissible. Next, in step S978, the guiding part 11 determines whether there is any other object model left for processing. If No, the procedure returns to the process in FIG. 60. If there is any left, the procedure returns to step S972.

After step subroutine step S970, the procedure goes to step S980 in FIG. 60. In step S980, the map data arranging part 4 determines whether every object model display information has been through. If not yet, the procedure returns to step S960, otherwise goes to step S990.

In step S990, the guiding part 11 determines whether the guidance has been completed. If not yet, the procedure returns to step S920, otherwise this is the end of procedure.

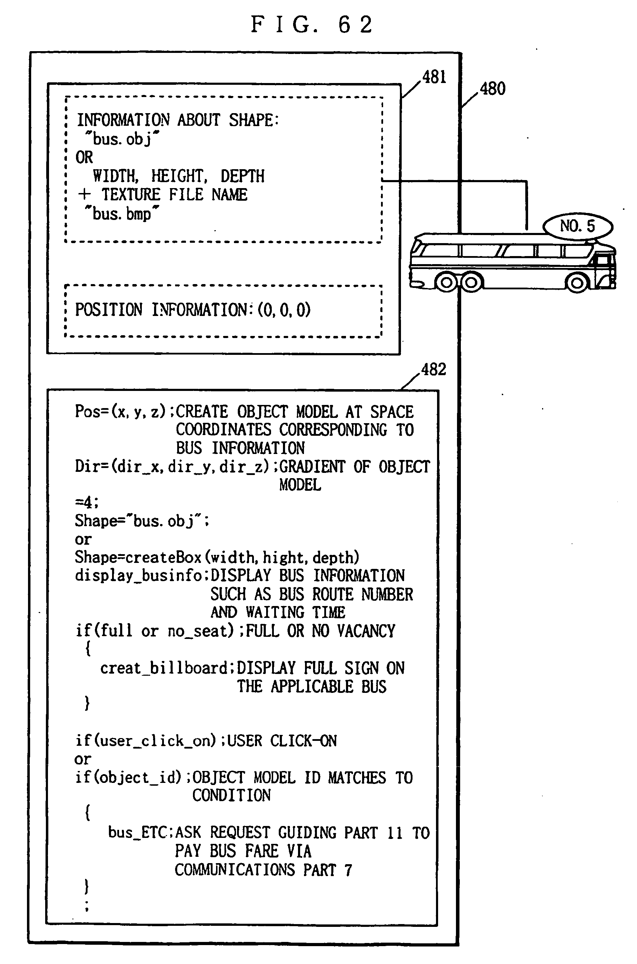

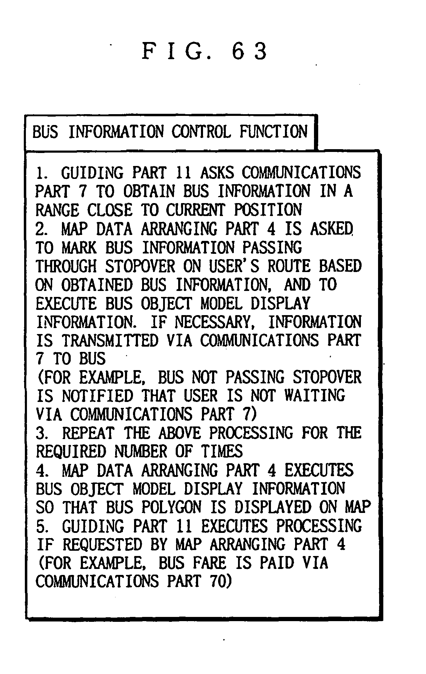

Described next is the details of the bus object model display information, and the processing carried out by the guiding part 11 with reference to FIGS. 62 and 63. FIG. 62 is a diagram showing a specific example of bus object model display information 480.

In FIG. 62, the bus object model display information 480 includes information about shape 481 and information about behavior in time and space 482 as in the case shown in FIG. 55. The information about shape 481 may be 3D shape information stored in a file named "bus.obj", for example. Or, the information about shape 481 may include information for defining a polygon by width, height, and depth, and a file named "bus.bmp" specifying a texture mapped to the polygon, for example. As in FIG. 55, the information about shape 481 includes position information.

The information about behavior in time and space 482 is similar to that of FIG. 55. Once methods in the information are executed, bus polygons are drawn at each currently applicable position on a map image, and shows corresponding bus information telling its route number, waiting time, and the like. If any bus is found full, an object model "Full" is displayed on the applicable bus polygon. The user's click on a specific bus polygon or condition matching leads to the operation for notifying the bus of riding. With the user rode on the bus, the guiding part 11 is asked via the communications part 7 to pay the bus fare. Such fare payment system includes ETC, for example.

By referring to FIG. 63, described next is a case where the information about behavior in time and space is represented in a format including a function name and contents thereof. FIG. 63 exemplarily shows a function name and contents thereof for bus call, stored in the object model display information storage part 6. Next below, the contents of the function are described step by step.

A first step is, by the guiding part 11, requesting the communications part 7 for obtaining bus information in a close distance range. A second step is, by the guiding part 11, requesting the map data arranging part 4 for executing the bus display object model information based on the obtained bus information. Here, without the user's instruction if necessary, the guiding part 11 notifies via the communications part 7 applicable buses that the user does not ride thereon. This is because, by doing so, the unselected bus has no need to stop by the bus stop where the user is standing alone. A third step is, also by the guiding part 11, repeating such processing as above for the required number of times. A four step is, by the map data arranging part 4, executing bus object model display information and displaying bus polygons in a map image. A fifth step is, by the guiding part 11, executing any processing requested by the map data arranging part 4. Such processing may include, for example, paying a bus fare via the communications part 7 if the user rides on the bus.

After those steps are through, bus polygons are created in a map space, and each appropriately arranged on a road image. Thereafter, if the user determines to take a bus and then clicks an applicable bus polygon, for example, a bus call is accordingly made via the communications part 7.

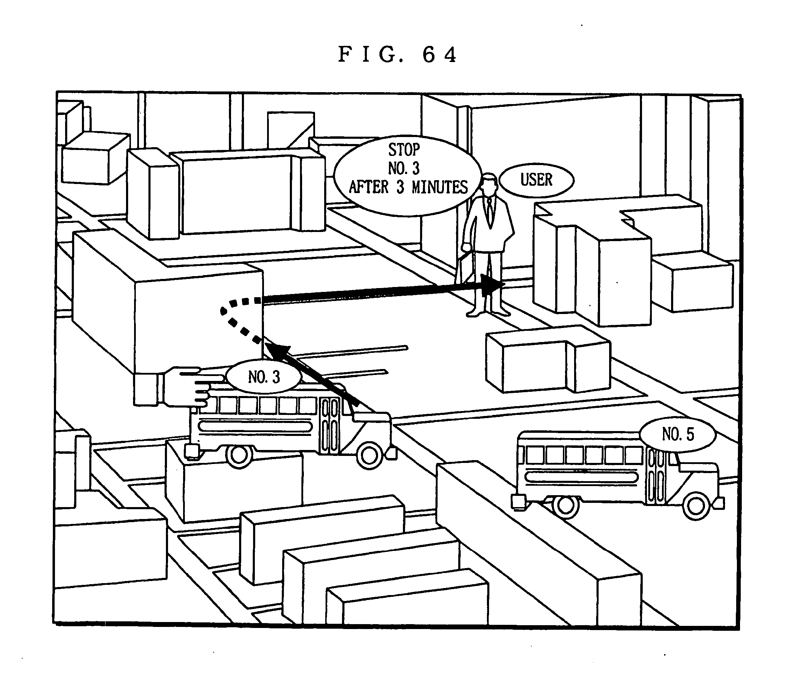

FIG. 64 is a diagram showing the operation of the navigation device of the seventh embodiment. In FIG. 64, displayed on a 3D map image are bus polygons each numbered 3 or 5 together with a user's figure. Herein, a hand-shaped graphic with a pointing finger extended denotes a cursor, and thereby, the user points or clicks any specific object model with a mouse, for example. If the user selects the bus No. 3 located in the middle of the map image, the bus is notified that the user is riding. Then, another object model indicating the number of the bus and the estimated arrival time on the left side of the user's object model. Here, the object model may be displayed on the map image at a position corresponding to a bus stop closest to the user. Then, the bus takes a route denoted by an arrow in the image to the user.

Herein, if the position detection part 9, the route selection part 10, and the guiding part 11 are omitted from the navigation device of this embodiment, realized is a map display device functioning similarly thereto. This is because, the navigation device of the present embodiment is similar in structure to that of the fifth embodiment in FIG. 47, except for operating as a bus call terminal. Therefore, the map display device of the fourth embodiment is so structured as to operate as a bus call terminal, realizing a map display device functioning similar to the present navigation device.

Such navigation devices of the sixth and seventh embodiments can be implemented in one device wherein two different functions are simultaneously achieved by including a traffic information center, for example, working as both the taxi center 2000 and the bus center 4000. If this is the case, such navigation device receives taxi information and bus information from the traffic information center. Then, selection about which taxi or bus to take is made, and the corresponding taxi or bus control number, for example, is transmitted to the traffic information center. In such manner, the user can intuitively understand information about taxis and buses on the way to his/her destination, and accordingly the user can be offered better usability.

Further, the navigation devices of the sixth and seventh embodiments can be so structured as to display other users' information only with a minor change in operation of the guiding part 11 or the map data arranging part 4. To be specific, the present navigation device exchanges via the communications part 7 position information with the traffic information center or with any other specific user's navigation device. Then, a specific object model indicating the other user's navigation device is arranged on the map image at the appropriate position.

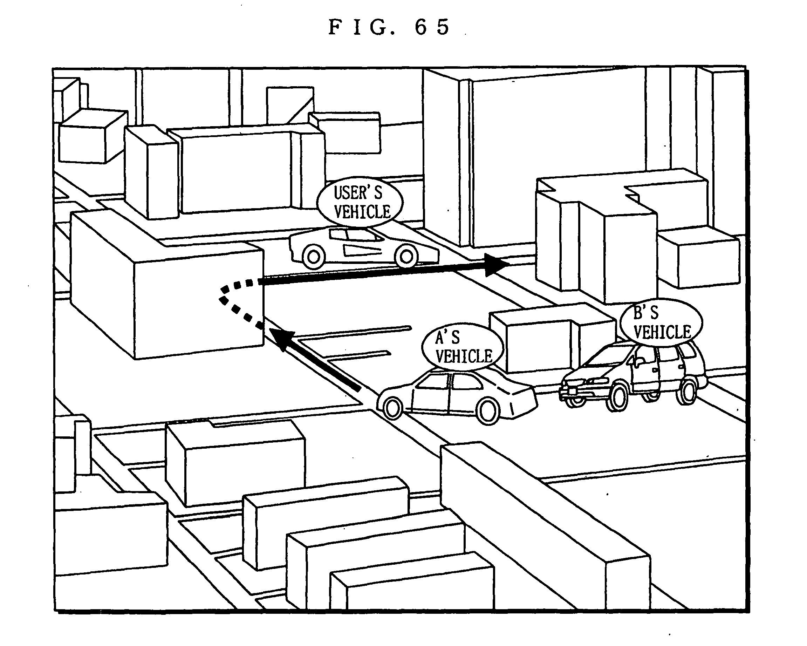

For example, by setting that the user of the present navigation device can receive position information of his/her friend's navigation device, the friend's position can be displayed on the map image. FIG. 65 shows an exemplary map image having friends' positions each displayed on the map image. As shown in FIG. 65, if other user's names, their vehicle types, and the like, are specifically registered in advance, the user can understand information more intuitively.

While the invention has been described in detail, the foregoing description is in all aspects illustrative and not restrictive. It is understood that numerous other modifications and variations can be devised without departing from the scope of the invention.

## Claims

1. A map display device for converting externally provided communications information into an applicable object model for arrangement on a map image, said device comprising:
an input part (2) for receiving a user's instruction;
a map data storage part (3) for previously storing map data;
an object model display information storage part (6) for storing object model display information for displaying said object model on said map image;
a communications part (7) for receiving said communications information; wherein said communications information includes time-varying information;
a map data arranging part (4) for creating said object model by interpreting said communications information and the object model display information provided by said object model display information storage part (6), and arranging the object model on said map; and
a display part (5) for displaying a resultant map image obtained by said map data arranging part (4); further comprising a time information storage part (8) for storing time information corresponding to a position of a mobile unit which moves according to schedule on a predetermined route, wherein
said map data arranging part (4) refers to said time information to create said object model corresponding to said mobile unit for arrangement on said map image.

2. The map display device according to claim 1, wherein
said time-varying information is plurally provided.

3. The map display device according to claim 1, wherein said communications information includes traffic information.

4. The map display device according to claim 1, wherein said communications information includes advertisement information.

5. The map display device according to claim 1, wherein said communications information includes position information corresponding to a predetermined position on said map image.

6. The map display device according to claim 1, wherein said object model display information comprises;
information about shape of said object model; and
information about behavior in time and space of said object model.

7. The map display device according to claim 6, wherein said information about behavior in tine and space of said object model is described in an object-oriented interpreter language having no need for compilation.

8. The map display device according to claim 6, wherein
said information about behavior in time and space of said object model includes an execution condition and an execution function.

9. The map display device according to claim 1, wherein said map data arranging part (4) appropriately arranges said object model on a road image of said map image.

10. The map display device according to claim 9, wherein said object model is plurally created and each appropriately arranged on said road image.

11. The map display device according to claim 1, wherein said map data arranging part (4) comprises;
an object model display information execution part (41) for interpreting and executing said communications information and said object model display information provided by said object model display information storage part (6);
an object model creation part (142, 145) for creating said object model responsively to a result obtained by said object model display information execution part (41); and
a data arranging part (143, 146) for arranging said object model on said map image.

12. The map display device according to claim 11, wherein said map data arranging part (4) further comprises a 3D map generation part (147) for generating a 3D map image based on 2D map data provided by said map data storage part (3) and
said data arranging part (143) arranges said object model on the map image generated by said 3D map creation part (147).

13. The map display device according to claim 12, wherein said map data arranging part (4) further comprises a 2D/3D coordinate transformation part (144) for transforming a 2D object model created by said object model creation part (145) into a 3D object model, and
said data arranging part (143) arranges the 3D object model transformed by said 2D/3D coordinate transformation part (144) on said map image.

14. The map display device according to claim 1, wherein said map data arranging part (4) refers to said time information to select only the object model corresponding to said mobile unit to be displayed on said map image, and calculates a position of the object model on said map image for data arrangement.

15. The map display device according to claim 1, wherein
said communications part (7) receives the communication information including information for specifying a faregate to be passed through, and if necessary, transmits charge information for a charge processing, and
said map data arranging part (4) creates, if necessary, said object model corresponding to said communications information for arrangement on said map image, and generates said charge information.

16. The map display device according to claim 15, wherein
said map data arranging part (4) generates said charge information by referring to said communications information related to said faregate placed at an entrance and an exit for a predetermined chargeable section, and creates an object model including a fare for said chargeable section for arrangement on said map image.

17. The map display device according to claim 16, further comprising a ticket information storage part (12) for storing ticket information corresponding to a ticket used for paying the fare for said chargeable section, wherein
said map data arranging part (4) generates said ticket information stored in said ticket information storage part (12) when said ticket is purchased, and if necessary, changes said communications information.

18. The map display device according to claim 17, wherein said ticket information includes information about an expiration date of said ticket, and
said map data arranging part (4) refers to the information about the expiration date of said ticket, and if necessary, creates a message for display on said display part (5).

19. The map display device according to claim 1, wherein
said communications part (7) receives the communications information including position information about any available vehicle, and when the user desires to take one of the available vehicles, transmits selected vehicle information including information for specifying which vehicle the user desires to take, and
said map data arranging part (4) creates said object model corresponding to said communications information for arrangement on said map image, and when the user desires to take one of the available vehicles, generates said selected vehicle information.

20. The map display device according to claim 19, wherein
said available vehicles are located within a predetermined area range close to a current position of the user.

21. The map display device according to claim 19, wherein said available vehicles move according to schedule on a predetermined route.

22. The map display device according to claim 19, wherein said communications part (7) transmits a request for vehicle information including the current position of the user for an externally provided information center, and receives the communications information including the position information of the available vehicles selected by said information center.

23. The map display device according to claim 19, wherein said map data arranging part (4) refers to said communications information, creates said object model each corresponding to said available vehicle, and if necessary, creates an object model including information about said available vehicles for arrangement on said map image.

24. A navigation device for converting externally provided communications information into an applicable object model for arrangement on a map image, and making a guidance to a destination, said device comprising:
an input part (2) for receiving a user's instruction; a position detection part (9) for detecting a current position;
a map data storage part (3) for previously storing map data;
an object model display information storage part (6) for storing object model display information in advance for displaying said object model on said map image;
a route selection part (10) for selecting a route to the destination based on said instruction provided by said input part (2), said current position detected by said position detection part (9), and said map data stored in said map data storage part (3);
a communications part (7) for receiving said communications information including time-varying information; a map data arranging part (4) for creating said object model by interpreting said communications information and the object model display information provided by said object model display information storage part (6), and arranging the object model on said map;
a guiding part (11) for making the guidance to the destination in response to said communications information received by said communications part (7), said route selected by said route selection part (10), said current position detected by said position detection part (9), and said map data provided by said map data storage part (3), and outputs a resultant map image obtained by said map data arranging part (4); and
a display part (5) for displaying said resultant map image outputted from said guiding part (11); and further comprising a time information storage part (8) for storing time information corresponding to a position of a mobile unit which moves according to schedule on a predetermined route, wherein
said map data arranging part (4) refers to said time information to create said object model corresponding to said mobile unit for arrangement on said map image.

25. The navigation device according to claim 24, wherein said object model display information comprises:
information about shape of said object model; and
information about behavior in time and space of said object model.

26. The navigation device according to claim 25, wherein said information about behavior in time and space of said object model is described in an object-oriented interpreter language having no need for compilation.

27. The navigation device according to claim 25, wherein said information about behavior in time and space of said object model includes an execution condition and an execution function.

28. The navigation device according to claim 24, wherein said map data arranging part (4) appropriately arranges said object model on a road image of said map image.

29. The navigation device according to claim 24, wherein said object model is plurally created and each appropriately arranged on said road image.

30. The navigation device according to claim 24, wherein said map data arranging part (4) comprises:
an object model display information execution part (41) for interpreting and executing said communications information and said object model display information inputted from said object model display information storage part (6);
an object model creation part (142, 145) for creating said object model responsively to a result obtained by said object model display information execution part (41); and
data arranging part (143, 146) for arranging said object model on said map image:

31. The navigation device according to claim 30, wherein said map data arranging part (4) further comprises a 3D map creation part (147) for generating a 3D map image based on 2D map data provided by said map data storage part (3), and
said data arranging part (143) arranges said object model on the map image generated by said 3Dmap creation part (147).

32. The navigation device according to claim 30, wherein said map data arranging part (4) further comprises a 2D/3D coordinate transformation part (144) for transforming a 2D object model created by said object model creation part (145) into a 3 D object model, and
said data arranging part (143) arranges the 3d object model transformed by said 2D/3D coordinate transformation part (144) on said map image.

33. The navigation device according to claim 24, wherein said map data arranging part (4) refers to said time information to select only the object model corresponding to said mobile unit to be displayed on said map image, and calculates a position of the object model on said map image for data arrangement.

34. The navigation device according to claim 24, wherein
said communications part (7) receives the communication information including information for specifying a faregate to be passed through, and if necessary, transmits charge information for a charge processing, and
said map data arranging part (4) creates, if necessary, said object model corresponding to said communications information for arrangement on said map image, and generates said charge information.

35. The navigation device according to claim 34, wherein said guiding part (11) generates said charge information by referring to said communications information related to said faregate placed at an entrance and an exit for a predetermined chargeable section, and
said map data arranging part (4) creates an object model including a fare for said chargeable section for arrangement on said map image.

36. The navigation device according to claim 34, further comprising a ticket information storage part (12) for storing ticket information corresponding to a ticket used for paying the fare for said chargeable section, wherein said guiding part (11) generates said ticket information stored in said ticket information storage part (12) when said ticket is purchased, and if necessary, changes said communications information.

37. The navigation device according to claim 36, wherein said ticket information includes information about an expiration date of said ticket, and
said map data arranging part (4) refers to the information about the expiration date of said ticket, and if necessary, creates a message for display on said display part (5).

38. The navigation device according to claim 24, wherein
said communications part (7) receives the communications information including position information about any available vehicle, and when the user desires to take one of the available vehicles, transmits selected vehicle information including information for specifying which vehicle the user desires to take,
said map data arranging part (4) creates said object model corresponding to said communications information for arrangement on said map image, and
said guiding part (11) generates said selected vehicle information when the user desires to take one of the available vehicles.

39. The navigation device according to claim 24, wherein
said communications part (7) receives the communications information including position information about any available vehicle moving on a pre-determined route, and when the user desires to take one of the available vehicles, transmits selected vehicle information including information for specifying which vehicle the user desires to take,
said map data arranging part (4) creates said object model corresponding to said communications information for arrangement on said map image, and
said guiding part (11) generates said selected vehicle information when the user desires to take one of the available vehicles.

40. The navigation device according to claim 39, wherein said available vehicles are located within a predetermined area range dose to a current position of the user.

41. The navigation device according to claim 40, wherein said available vehicles move according to schedule on the predetermined route.

42. The navigation device according to claim 41, wherein said guiding part (11) compares, at least, said predetermined route on which said available vehicles move with the route to the destination selected by said route selection part (10), and determines whether the available vehicles are appropriate.

43. The navigation device according to claim 42, wherein said communications part (7) transmits a request for vehicle information including the current position for an externally provided information center, and receives the communications information including the position information of the available vehicles selected by said information center.

44. The navigation device according to claim 39, wherein said map data arranging part (4) refers to said communications information, creates said object model corresponding to said available vehicle, and if necessary, creates an object model each including information about said available vehicles for arrangement on said map image.

45. A map display method for converting externally provided communication information into an applicable object model for arrangement on a map image, said method comprising:
an input step of receiving a user's instruction;
a communications step of receiving said communications information including time-varying information;
a map data arranging step of creating said object model by interpreting said communications information and corresponding object model display information for displaying said object model on said map image; and
a display step of displaying a resultant map image obtained in said map data arranging step;
an object model display information execution step of interpreting and executing said communications information and said object model display information;
an object model creating step of creating said object model responsively to a result obtained in said object model display information execution step;
a data arranging step of arranging said object model on said map image;
and wherein, in said map data arranging step, time information corresponding to a position of a mobile unit moving on a predetermined route according to schedule is referred to for creating said object model corresponding to said mobile unit for arrangement on said map image.

46. The map display method according to claim 45, wherein said map data arranging step further comprises a 3D map generating step of generating a 3D map image based on said map data being 2D, and in said data arranging step, said object model is arranged on the map image generated in said 3D map creating step.

47. The map display method according to claim 45, wherein said map data arranging step further comprises a 2D/3 D coordinates transformation step of transforming a 2D object model created in said object model creating step into a 3D object model, and
in said data arranging step, the 3D object model transformed in said 2D/3D coordinates transformation step is arranged on said map image.

48. The map display method according to claim 45, wherein in said communications step, the communication information including information for specifying a faregate to be passed through is received, and if necessary, charge information for a charge processing is transmitted, and
in said map data arranging step, if necessary, said object model corresponding to said communications information is created for arrangement on said map image, and said charge information is generated.

49. The map display method according to claim 45, wherein in said communications step, the communications information including position information about any available vehicle is received, and when the user desires to take one of the available vehicles, selected vehicle information including information for specifying which vehicle the user desires to take is transmitted, and
in said map data arranging step, said object model corresponding to said communications information is crated for arrangement on said map image, and when the user desires to take one of the available vehicles, said selected vehicle information is generated.

## Patentansprüche

1. Kartenanzeigevorrichtung zum Umwandeln extern zur Verfügung gestellter Kommunikationsinformationen in ein anwendbares Objektmodel zur Anordnung auf einem Kartenbild, wobei die Vorrichtung umfasst:
einen Eingabeteil (2) zum Empfangen einer Benutzeranweisung;
einen Kartendatenspeicherteil (3) zum vorherigen Speichern von Kartendaten;
einen Objektmodell-Anzeigeinformations-Speicherteil (6) zum Speichern von Objektmodellanzeigeinformationen zum Anzeigen des Objektmodells auf dem Kartenbild;
einen Kommunikationsteil (7) zum Empfangen der Kommunikationsinformationen;
wobei die Kommunikationsinformationen über die Zeit variierende Informationen umfassen;
einen Kartendatenanordnungsteil (4) zum Erzeugen des Objektmodells durch Interpretieren der Kommunikationsinformationen und der Objektmodell-Anzeigeinformationen, die vom Objektmodell-Anzeigeinformations-Speicherteil (6) zur Verfügung gestellt werden, und Anordnen des Objektmodells auf der Karte; und
einen Anzeigeteil (5) zum Anzeigen eines resultierenden Kartenbilds, das durch den Kartendatenanordnungsteil (4) erhalten wird; weiterhin umfassend einen Zeitinformations-Speicherteil (8) zum Speichern von Zeitinformationen, die einer Position einer mobilen Einheit entsprechen, die sich gemäß einem Plan auf einer vorbestimmten Route bewegen, wobei
der Kartendatenanordnungsteil (4) auf die Zeitinformationen Bezug nimmt, um das Objektmodell zu erzeugen, das der mobilen Einheit entspricht, zur Anordnung auf dem Kartenbild.

2. Kartenanzeigevorrichtung gemäß Anspruch 1, wobei die über die Zeit variierenden Informationen mehrfach zur Verfügung gestellt werden.

3. Kartenanzeigevorrichtung gemäß Anspruch 1, wobei die Kommunikationsinformationen Verkehrsinformationen enthalten.

4. Kartenanzeigevorrichtung gemäß Anspruch 1, wobei die Kommunikationsinformationen Werbeinformationen enthalten.

5. Kartenanzeigevorrichtung gemäß Anspruch 1, wobei die Kommunikationsinformationen Positionsinformationen enthalten, die einer vorbestimmten Position auf dem Kartenbild entsprechen.

6. Kartenanzeigevorrichtung gemäß Anspruch 1, wobei die Objektmodell-Anzeigeinformationen umfassen:
Informationen über die Form des Objektmodells; und
Informationen über das Verhalten des Objektmodells in Zeit und Raum.

7. Kartenanzeigevorrichtung gemäß Anspruch 6, wobei die Informationen über das Verhalten des Objektmodells in Zeit und Raum in einer Objektorientierten Interpretersprache beschrieben ist, die nicht kompiliert zu werden braucht.

8. Kartenanzeigevorrichtung gemäß Anspruch 6, wobei die Informationen über das Verhalten des Objektmodells in Zeit und Raum eine Ausführungsbedingung und eine Ausführungsfunktion enthalten.

9. Kartenanzeigevorrichtung gemäß Anspruch 1, wobei der Kartendatenanordnungsteil (4) das Objektmodell in geeigneter Weise auf einem Straßenbild des Kartenbildes anordnet.

10. Kartenanzeigevorrichtung gemäß Anspruch 9, wobei das Objektmodell mehrfach erstellt wird und jeweils in geeigneter Weise auf dem Straßenbild angeordnet wird.

11. Kartenanzeigevorrichtung gemäß Anspruch 1, wobei der Kartendatenanordnungsteil (4) umfasst:
einen Objektmodell-Anzeigeinformations-Ausführungsteil (41) zum Interpretieren und Ausführen der Kommunikationsinformationen und der Objektmodell-Anzeigeinformationen, die durch den Objektmodell-Anzeigeinformations-Speicherteil (6) zur Verfügung gestellt werden;
einen Objektmodell-Erzeugungsteil (142, 145) zum Erzeugen des. Objektmodells in Antwort auf ein Ergebnis, das durch den Objektmodell-Anzeigeinformations-Ausführungsteil (41) erhalten wird; und
einen Datenanordnungsteil (143, 146) zum Anordnen des Objektmodells auf dem Kartenbild.

12. Kartenanzeigevorrichtung gemäß Anspruch 11, wobei der KartendatenAnordnungsteil (4) weiterhin einen 3D Kartenerzeugungsteil (147) umfasst, zum Erzeugen eines 3D Kartenbildes, das auf 2D Kartendaten basiert, die durch den Kartendaten-Speicherteil (3) zur Verfügung gestellt werden, und
der Datenanordnungsteil (143) das Objektmodell auf dem Kartenbild anordnet, das durch den 3D Kartenerzeugungsteil (147) erzeugt wird.

13. Kartenanzeigevorrichtung gemäß Anspruch 12, wobei der KartendatenAnordnungsteil (4) weiterhin einen 2D/3D Koordinatentransformationsteil (144) umfasst, zum Transformieren eines 2D Objektmodells, das durch den Objektmodell-Erzeugungsteil (145) erzeugt wurde, in ein 3D Objektmodell, und
der Datenanordnungsteil (143) das 3D Objektmodell auf dem Kartenbild anordnet, das durch den 2D/3D Koordinatentransformationsteil (144) transformiert wird.

14. Kartenanzeigevorrichtung gemäß Anspruch 1, wobei der Kartendatenanordnungsteil (4) auf die Zeitinformationen Bezug nimmt, um nur das Objektmodell auszuwählen, das der mobilen Einheit entspricht, die auf dem Kartenbild anzuzeigen ist, und eine Position des Objektmodells auf dem Kartenmodell zur Datenanordnung berechnet.

15. Kartenanzeigevorrichtung gemäß Anspruch 1, wobei
der Kommunikationsteil (7) die Kommunikationsinformationen einschließlich Informationen zum Spezifizieren einer zu passierenden Mautstelle empfängt und wenn nötig Abrechnungsinformationen zur Abrechnungsverarbeitung überträgt, und
der Kartendatenanordnungsteil (4) wenn nötig, das Objektmodell erzeugt, das den Kommunikationsinformationen entspricht, zur Anordnung auf dem Kartenbild, und die Abrechnungsinformationen erzeugt.

16. Kartenanzeigevorrichtung gemäß Anspruch 15, wobei
der Kartendatenanordnungsteil (4) die Abrechungsinformationen durch Bezugnahme auf die Kommunikationsinformationen erzeugt, die sich auf die Mautstelle beziehen, die an einem Eingang und an einem Ausgang für einen vorbestimmten entgeltpflichtigen Abschnitt aufgestellt sind, und ein Objektmodell erzeugt, das eine Maut für den mautpflichtigen Abschnitt erzeugt, zur Anordnung auf dem Kartenbild.

17. Kartenanzeigevorrichtung gemäß Anspruch 16, weiterhin umfassend einen Ticketinformations-Speicherteil (12) zum Speichern von Ticketinformationen, die einem Ticket entsprechen, das zum Zahlen der Maut für den entgeltpflichtigen Abschnitt verwendet wird, wobei
der Kartendatenanordnungsteil (4) die Ticketinformationen, die im Ticketinformations-Speicherteil (12) gespeichert sind, erzeugt, wenn das Ticket erworben wird, und wenn nötig die Kommunikationsinformationen ändert.

18. Kartenanzeigevorrichtung gemäß Anspruch 17, wobei die Ticketinformationen Informationen über ein Verfallsdatum des Tickets umfassen, und
der Kartendatenanordnungsteil (4) auf die Informationen über das Verfallsdatum des Tickets Bezug nimmt und wenn nötig eine Nachricht zur Anzeige an den Anzeigeteil (5) erzeugt.

19. Kartenanzeigevorrichtung gemäß Anspruch 1, wobei der Kommunikationsteil (7) die Kommunikationsinformationen einschließlich Positionsinformationen über jedes beliebige verfügbare Fahrzeug empfängt, und wenn der Benutzer wünscht, eines der verfügbaren Fahrzeuge zu nehmen, die Informationen über das ausgewählte Fahrzeug einschließlich Informationen zum Spezifizieren welches Fahrzeug der Benutzer zu nehmen wünscht überträgt, und
der Kartendatenanordnungsteil (4) das Objektmodell erzeugt, das den Kommunikationsinformationen zur Anordnung auf dem Kartenbild entspricht, und wenn der Benutzer eines der verfügbaren Fahrzeuge zu nehmen wünscht, die Informationen über das ausgewählte Fahrzeug erzeugt.

20. Kartenanzeigevorrichtung gemäß Anspruch 19, wobei
die verfügbaren Fahrzeuge sich innerhalb eines vorbestimmten Gebietsbereichs in der Nähe einer aktuellen Position des Benutzers befinden.

21. Kartenanzeigevorrichtung gemäß Anspruch 19, wobei sich die verfügbaren Fahrzeuge gemäß einem Plan auf einer vorbestimmten Route bewegen.

22. Kartenanzeigevorrichtung gemäß Anspruch 19, wobei der Kommunikationsteil (7) eine Anfrage für Fahrzeuginformationen einschließlich der aktuellen Position des Benutzers für ein extern zur Verfügung gestelltes Informationszentrum überträgt und die Kommunikationsinformationen einschließlich der Positionsinformationen über die verfügbaren Fahrzeuge, die durch das Informationszentrum ausgewählt werden, empfängt.

23. Kartenanzeigevorrichtung gemäß Anspruch 19, wobei der KartendatenAnordnungsteil (4) auf die Kommunikationsinformationen Bezug nimmt, das Objektmodell erzeugt, das jeweils dem verfügbaren Fahrzeug entspricht, und wenn notwendig ein Objektmodell erzeugt, das Informationen über die verfügbaren Fahrzeuge enthält, zur Anordnung auf dem Kartenbild.

24. Navigationsvorrichtung zum Umwandeln extern zur Verfügung gestellter Kommunikationsinformationen in ein anwendbares Objektmodell zur Anordnung auf einem Kartenbild, und Durchführen einer Leitung zu einem Ziel, wobei die Vorrichtung umfasst:
einen Eingabeteil (2) zum Empfangen einer Benutzeranweisung;
einen Positionserkennungsteil (9) zum Erkennen einer aktuellen Position;
einen Kartendaten-Speicherteil (3) zum vorherigen Speichern von Kartendaten;
einen Objektmodell-Anzeigeinformations-Speicherteil (6) zum Speichern von Objektmodell-Anzeigeinformationen im Voraus zum Anzeigen des Objektmodells auf dem Kartenbild;
einen Routenauswahlteil (10) zum Auswählen einer Route zum Ziel auf der Grundlage der Anweisungen, die durch den Eingabeteil (2) zur Verfügung gestellt werden, wobei die aktuelle Position durch den Positionserkennungsteil (9) erkannt wird, und der Kartendaten, die im Kartendatenspeicherteil (3) gespeichert sind;
einen Kommunikationsteil (7) zum Empfangen der Kommunikationsinformationen einschließlich über die Zeit variierender Informationen;
einen Kartendatenanordnungsteil (4) zum Erzeugen des Objektmodells durch Interpretieren der Kommunikationsinformationen und der Objektmodell-Anzeigeinformationen, die durch den Objektmodell-Anzeigeinformations-Speicherteil (6) zur Verfügung gestellt werden und Anordnen des Objektmodells auf der Karte;
einen Leitteil (11) zum Durchführen der Leitung zum Ziel in Antwort auf die Kommunikationsinformationen, die durch den Kommunikationsteil (7) empfangen werden, die durch den Routenauswahlteil (10) ausgewählte Route, die aktuelle Position, die durch den Positionserkennungsteil (9) erkannt wird und die Kartendaten, die vom Kartendatenspeicherteil (3) zur Verfügung gestellt werden, und Ausgeben eines resultierenden Kartenbilds, das durch den Kartendatenanordnungsteil (4) erhalten wird; und
einen Anzeigeteil (5) zum Anzeigen des resultierenden Kartenbilds, das vom Leitteil (11) ausgegeben wird; und weiterhin aufweisend einen Zeitinformations-Speicherteil (8) zum Speichern von Zeitinformationen, die einer Position einer mobilen Einheit entsprechen, die sich gemäß einem Plan auf einer vorbestimmten Route bewegt, wobei,
der Kartendatenanordnungsteil (4) auf die Zeitinformationen Bezug nimmt, um das Objektmodell zu erzeugen, das der mobilen Einheit entspricht, zur Anordnung auf dem Kartenbild.

25. Navigationsvorrichtung gemäß Anspruch 24, wobei die Objektmodell-Anzeigeinformationen umfassen:
Informationen über die Form des Objektmodells; und
Informationen über das Verhalten des Objektmodells in Zeit und Raum.

26. Navigationsvorrichtung gemäß Anspruch 25, wobei die Informationen über das Verhalten des Objektmodells in Zeit und Raum in einer objektorientierten Interpretersprache beschrieben werden, die nicht kompiliert zu werden braucht.

27. Navigationsvorrichtung gemäß Anspruch 25, wobei die Informationen über das Verhalten des Objektmodells in Zeit und Raum eine Ausführungsbedingung und eine Ausführungsfunktion umfassen.

28. Navigationsvorrichtung gemäß Anspruch 24, wobei der Kartendatenanordnungsteil (4) das Objektmodell in geeigneter Weise auf einem Straßenbild des Kartenbildes anordnet.

29. Navigationsvorrichtung gemäß Anspruch 24, wobei das Objektmodell mehrfach erstellt wird und jeweils in geeigneter Weise auf dem Straßenbild angeordnet wird.

30. Navigationsvorrichtung gemäß Anspruch 24, wobei der Kartendatenanordnungsteil (4) umfasst:
einen Objektmodell-Anzeigeinformations-Ausführungsteil (41) zum Interpretieren und Ausführen der Kommunikationsinformationen und der Objektmodell-Anzeigeinformationen, die durch den Objektmodell-Anzeigeinformations-Speicherteil (6) zur Verfügung gestellt werden;
einen Objektmodell-Erzeugungsteil (142, 145) zum Erzeugen des Objektmodells in Antwort auf ein Ergebnis, das durch den Objektmodell-Anzeigeinformations-Ausführungsteil (41) erhalten wird; und
einen Datenanordnungsteil (143, 146) zum Anordnen des Objektmodells auf dem Kartenbild.

31. Navigationsvorrichtung gemäß Anspruch 30, wobei der KartendatenAnordnungsteil (4) weiterhin einen 3D Kartenerzeugungsteil (147) umfasst, zum Erzeugen eines 3D Kartenbildes, das auf 2D Kartendaten basiert, die durch den Kartendaten-Speicherteil (3) zur Verfügung gestellt werden und
der Datenanordnungsteil (143) das Objektmodell auf dem Kartenbild anordnet, das durch den 3D Kartenerzeugungsteil (147) erzeugt wird.

32. Navigationsvorrichtung gemäß Anspruch 30, wobei der KartendatenAnordnungsteil (4) weiterhin einen 2D/3D Koordinatentransformationsteil (144) umfasst, zum Transformieren eines 2D Objektmodells, das durch den Objektmodell-Erzeugungsteil (145) erzeugt wurde, in ein 3D Objektmodell, und
der Datenanordnungsteil (143) das 3D Objektmodell auf dem Kartenbild anordnet, das durch den 2D/3D Koordinatentransformationgsteil (144) transformiert wird.

33. Navigationsvorrichtung gemäß Anspruch 24, wobei der Kartendatenanordnungsteil (4) auf die Zeitinformationen Bezug nimmt, um nur das Objektmodell auszuwählen, das der mobilen Einheit entspricht, die auf dem Kartenbild anzuzeigen ist, und eine Position des Objektmodells auf dem Kartenmodell zur Datenanordnung berechnet.

34. Navigationsvorrichtung gemäß Anspruch 24, wobei
der Kommunikationsteil (7) die Kommunikationsinformationen einschließlich Informationen zum Spezifizieren einer zu passierenden Mautstelle empfängt und wenn nötig Abrechnungsinformationen zur Abrechnungsverarbeitung überträgt, und
der Kartendatenanordnungsteil (4) wenn nötig, das Objektmodell erzeugt, das den Kommunikationsinformationen entspricht, zur Anordnung auf dem Kartenbild, und die Abrechnungsinformationen erzeugt.

35. Navigationsvorrichtung gemäß Anspruch 34, wobei
der Leitteil (11) die Abrechungsinformationen durch Bezugnahme auf die Kommunikationsinformationen erzeugt, die sich auf die Mautstelle beziehen, die an einem Eingang und an einem Ausgang für einen vorbestimmten entgeltpflichtigen Abschnitt aufgestellt sind, und der Kartendatenanordnungsteil (4) ein Objektmodell erzeugt, das eine Maut für den mautpflichtigen Abschnitt erzeugt, zur Anordnung auf dem Kartenbild.

36. Navigationsvorrichtung gemäß Anspruch 34, weiterhin umfassend einen Ticketinformations-Speicherteil (12) zum Speichern von Ticketinformationen, die einem Ticket entsprechen, das zum Zahlen der Maut für den entgeltpflichtigen Abschnitt verwendet wird, wobei
der Leitteil (11) die Ticketinformationen, die im Ticketinformations-Speicherteil (12) gespeichert sind, erzeugt, wenn das Ticket erworben wird, und wenn nötig die Kommunikationsinformationen ändert.

37. Navigationsvorrichtung gemäß Anspruch 36, wobei die Ticketinformationen Informationen über ein Verfallsdatum des Tickets umfassen, und
der Kartendatenanordnungsteil (4) auf die Informationen über das Verfallsdatum des Tickets Bezug nimmt und wenn nötig eine Nachricht zur Anzeige an den Anzeigeteil (5) erzeugt.

38. Navigationsvorrichtung gemäß Anspruch 24, wobei
der Kommunikationsteil (7) die Kommunikationsinformationen einschließlich Positionsinformationen über jedes beliebige verfügbare Fahrzeug empfängt, und wenn der Benutzer eines der verfügbaren Fahrzeuge zu nehmen wünscht, Informationen über das ausgewählte Fahrzeug überträgt, einschließlich Informationen zum Spezifizieren, welches Fahrzeug der Benutzer zu wählen wünscht,
wobei der Kartendatenanordnungsteil (4) das Objektmodell erzeugt, das den Kommunikationsinformationen entspricht, zur Anordnung auf dem Kartenbild, und
der Leitteil (11) die Informationen über das ausgewählte Fahrzeug erzeugt, wenn der Benutzer eines der verfügbaren Fahrzeuge zu nehmen wünscht.

39. Navigationsvorrichtung gemäß Anspruch 24, wobei
der Kommunikationsteil (7) die Kommunikationsinformationen einschließlich Positionsinformationen über jedes beliebige verfügbare Fahrzeug empfängt, das sich auf einer vorbestimmten Route bewegt, und wenn der Benutzer eines der verfügbaren Fahrzeuge zu nehmen wünscht, Informationen über das ausgewählte Fahrzeug überträgt, einschließlich Informationen zum Spezifizieren, welches Fahrzeug der Benutzer zu nehmen wünscht,
wobei der Kartendatenanordnungsteil (4) das Objektmodell erzeugt, das den Kommunikationsinformationen entspricht, zur Anordnung auf dem Kartenbild, und
der Leitteil (11) die Informationen über das ausgewählte Fahrzeug erzeugt, wenn der Benutzer eines der verfügbaren Fahrzeuge zu nehmen wünscht.

40. Navigationsvorrichtung gemäß Anspruch 39, wobei
die verfügbaren Fahrzeuge sich innerhalb eines vorbestimmten Gebietsbereichs in der Nähe einer aktuellen Position des Benutzers befinden.

41. Navigationsvorrichtung gemäß Anspruch 40, wobei sich die verfügbaren Fahrzeuge gemäß einem Plan auf einer vorbestimmten Route bewegen.

42. Navigationsvorrichtung gemäß Anspruch 41, wobei der Leitteil (11) mindestens die vorbestimmte Route, auf der sich das verfügbare Fahrzeug bewegt, mit der Route zum Ziel vergleicht, das durch den Routenauswahlteil (10) ausgewählt wurde, und bestimmt, ob die verfügbaren Fahrzeuge geeignet sind.

43. Navigationsvorrichtung gemäß Anspruch 42, wobei der Kommunikationsteil (7) eine Anfrage für Fahrzeuginformationen einschließlich der aktuellen Position des Benutzers für ein extern zur Verfügung gestelltes Informationszentrum überträgt und die Kommunikationsinformationen einschließlich der Positionsinformationen über die verfügbaren Fahrzeuge, die durch das Informationszentrum ausgewählt werden, empfängt.

44. Navigationsvorrichtung gemäß Anspruch 39, wobei der KartendatenAnordnungsteil (4) auf die Kommunikationsinformationen Bezug nimmt, das Objektmodell erzeugt, das jeweils dem verfügbaren Fahrzeug entspricht, und wenn notwendig ein Objektmodell erzeugt, das Informationen über die verfügbaren Fahrzeuge enthält, zur Anordnung auf dem Kartenbild.

45. Kartenanzeigeverfahren zum Umwandeln extern zur Verfügung gestellter Kommunikationsinformationen in ein anwendbares Objektmodell zur Anordnung auf einem Kartenbild, wobei das Verfahren umfasst:
einen Eingabeschritt des Empfangens einer Benutzeranweisung;
einen Kommunikationsschritt des Empfangens der Kommunikationsinformationen einschließlich mit der Zeit variierender Informationen;
einen Kartendatenanordnungsschritt des Erzeugens des Objektmodells durch Interpretieren der Kommunikationsinformationen und der entsprechenden Objektmodell-Anzeigeinformationen zum Anzeigen des Objektmodells auf dem Kartenbild; und
einen Anzeigeschritt des Anzeigens eines resultierenden Kartenbilds, das im Kartendatenanordnungsschritt erhalten wurde;
einen Objektmodell-Anzeigeinformations- Ausführungsschritt des Interpretierens und Ausführens der Kommunikationsinformationen und der Objektmodell-Anzeigeinformationen;
einen Objektmodell-Erzeugungsschritt des Erzeugens des Objektmodells in Antwort auf ein Ergebnis, das im Objektmodell-Anzeigeinformations-Ausführungsschritt erhalten wurde;
einen Datenanordnungsschritt des Anordnens des Objektmodells auf dem Kartenbild;
und wobei in dem Kartendatenanordnungsschritt auf Zeitinformationen, die einer Position einer mobilen Einheit entsprechen, die sich auf einer vorbestimmten Route gemäß einem Plan bewegt, Bezug genommen wird, um das Objektmodell zu erzeugen, das der mobilen Einheit entspricht, zur Anordnung auf dem Kartenbild.

46. Kartenanzeigeverfahren gemäß Anspruch 45, wobei der Kartendatenanordnungsschritt weiterhin einen 3D Kartenerzeugungsschritt des Erzeugens einer 3D Karte auf der Grundlage der Kartendaten umfasst, die 2D sind, und
in dem Datenanordnungsschritt das Objektmodell auf dem Kartenbild angeordnet wird, das in dem 3D Kartenerzeugungsschritt erzeugt wird.

47. Kartenanzeigeverfahren gemäß Anspruch 45, wobei der Kartendatenanordnungsschritt weiterhin einen 2D/3D Koordinatentransformationsschritt des Transformierens eines 2D Objektmodells, das in dem Objektmodellerzeugungsschritt erzeugt wurde, in ein 3D Objektmodell umfasst, und
in dem Datenanordnungsschritt das 3D Objektmodell, das in dem 2D/3D Koordinatentransformationsschritt transformiert wurde, auf dem Kartenbild angeordnet wird.

48. Kartenanzeigeverfahren gemäß Anspruch 45, wobei in dem Kommunikationsschritt die Kommunikationsinformationen einschließlich Informationen zum Spezifizieren einer zu passierenden Mautstelle empfangen werden und wenn nötig Abrechnungsinformationen für eine Abrechnungsverarbeitung übertragen werden und
in dem Kartendatenanordnungsschritt, wenn nötig, das Objektmodell erzeugt wird, das den Kommunikationsinformationen entspricht, zur Anordnung auf dem Kartenbild, und die Abrechnungsinformationen erzeugt werden.

49. Kartenanzeigeverfahren gemäß Anspruch 45, wobei im Kommunikationsschritt die Kommunikationsinformationen einschließlich Positionsinformationen über jedes beliebige verfügbare Fahrzeug empfangen werden, und wenn der Benutzer eines der verfügbaren Fahrzeuge zu nehmen wünscht, Informationen über das ausgewählte Fahrzeug übertragen werden, einschließlich Informationen zum Spezifizieren, welches Fahrzeug der Benutzer zu nehmen wünscht, und
im Kartendatenanordnungsschritt das Objektmodell erzeugt wird, das den Kommunikationsinformationen entspricht, zur Anordnung auf dem Kartenbild, und wenn der Benutzer eines der verfügbaren Fahrzeuge zu nehmen wünscht, die Informationen über das ausgewählte Fahrzeug erzeugt werden.

## Revendications

1. Dispositif d'affichage de carte pour convertir des informations de communications pourvues de l'extérieur en un modèle d'objet applicable pour l'agencement sur une image de carte, ledit dispositif comprenant :
une partie d'entrée (2) destinée à recevoir une instruction d'un utilisateur;
une partie de stockage (3) de données de carte destinée à stocker au préalable des données de carte;
une partie de stockage (6) d'informations d'affichage de modèle d'objet destinée à stocker des informations d'affichage de modèle d'objet pour afficher ledit modèle d'objet sur ladite image de carte;
une partie de communications (7) destinée à recevoir lesdites informations de communications; où lesdites informations de communications incluent des informations qui varient avec le temps;
une partie d'agencement (4) de données de carte destinée à créer ledit modèle d'objet en interprétant lesdites informations de communications et les informations d'affichage du modèle d'objet pourvues par ladite partie de stockage (6) d'informations d'affichage du modèle d'objet, et à agencer le modèle d'objet sur ladite carte; et
une partie d'affichage (5) destinée à afficher une image de carte résultante obtenue par ladite partie d'agencement (4) de données de carte; comprenant en plus une partie de stockage (8) d'informations temporelles destinée à stocker des informations temporelles correspondant à une position d'une unité mobile qui se déplace selon un programme sur une route prédéterminée, où
ladite partie d'agencement (4) de données de carte se rapporte auxdites informations temporelles pour créer ledit modèle d'objet correspondant à ladite unité mobile pour l'agencement sur ladite image de carte.

2. Dispositif d'affichage de carte selon la revendication 1, dans lequel
lesdites informations qui varient avec le temps sont fournies plusieurs fois.

3. Dispositif d'affichage de carte selon la revendication 1, dans lequel lesdites informations de communications incluent des informations concernant le trafic.

4. Dispositif d'affichage de carte selon la revendication 1, dans lequel lesdites informations de communications incluent des informations publicitaires.

5. Dispositif d'affichage de carte selon la revendication 1, dans lequel lesdites informations de communications incluent des informations de position correspondant à une position prédéterminée sur ladite image de carte.

6. Dispositif d'affichage de carte selon la revendication 1, dans lequel lesdites informations d'affichage du modèle d'objet comprennent :
des informations concernant la forme dudit modèle d'objet; et
des informations concernant le comportement dans le temps et dans l'espace dudit modèle d'objet.

7. Dispositif d'affichage de carte selon la revendication 6, dans lequel lesdites informations concernant le comportement dans le temps et dans l'espace dudit modèle d'objet sont décrites dans un langage d'interprétation orienté objet ne nécessitant pas de compilation.

8. Dispositif d'affichage de carte selon la revendication 6, dans lequel lesdites informations concernant le comportement dans le temps et dans l'espace dudit modèle d'objet incluent une condition d'exécution et une fonction d'exécution.

9. Dispositif d'affichage de carte selon la revendication 1, dans lequel ladite partie d'agencement (4) des données de carte agence de manière appropriée ledit modèle d'objet sur une image routière de ladite image de carte.

10. Dispositif d'affichage de carte selon la revendication 9, dans lequel ledit modèle d'objet est créé plusieurs fois et chacun est agencée de manière appropriée sur ladite image routière.

11. Dispositif d'affichage de carte selon la revendication 1, dans lequel ladite partie d'agencement (4) des données de carte comprend :
une partie d'exécution (41) d'informations d'affichage du modèle d'objet pour interpréter et exécuter lesdites informations de communications et lesdites informations d'affichage du modèle d'objet pourvues par ladite partie de stockage (6) d'informations d'affichage du modèle d'objet;
une partie de création du modèle d'objet (142, 145) pour créer ledit modèle d'objet en réponse à un résultat obtenu par ladite partie d'exécution (41) d'informations d'affichage du modèle d'objet; et
une partie d'agencement de données (143, 146) destinée à agencer ledit modèle d'objet sur ladite image de carte.

12. Dispositif d'affichage de carte selon la revendication 11, dans lequel ladite partie d'agencement (4) des données de carte comprend en plus une partie de génération de carte en 3D (147) destinée à générer une image de carte en 3D sur la base de données de carte en 2D pourvues par ladite partie de stockage (3) de données de carte et
ladite partie d'agencement de données (143) agence ledit modèle d'objet sur l'image de carte générée par ladite partie de création de carte en 3D (147).

13. Dispositif d'affichage de carte selon la revendication 12, dans lequel ladite partie d'agencement (4) des données de carte comprend en plus une partie de transformation de coordonnées 2D/3D (144) qui sert à transformer un modèle d'objet en 2D créé par ladite partie de création de modèle d'objet (145) en un modèle d'objet en 3D, et
ladite partie d'agencement de données (143) agence le modèle d'objet en 3D transformé par ladite partie de transformation de coordonnées 2D/3D (144) sur ladite image de carte.

14. Dispositif d'affichage de carte selon la revendication 1, dans lequel ladite partie d'agencement (4) des données de carte se rapporte auxdites informations temporelles pour ne sélectionner que le modèle d'objet correspondant à ladite unité mobile à afficher sur ladite image de carte, et calcule une position du modèle d'objet sur ladite image de carte pour l'agencement de données.

15. Dispositif d'affichage de carte selon la revendication 1, dans lequel ladite partie de communications (7) reçoit les informations de communication incluant des informations visant à spécifier une barrière de péage à franchir, et en cas de besoin, transmet des informations concernant des taxes à payer pour le traitement de paiement d'une taxe à payer, et
ladite partie d'agencement (4) de données de carte créée, en cas de besoin, ledit modèle d'objet correspondant auxdites informations de communications pour l'agencement sur ladite image de carte, et génère lesdites informations concernant des taxes à payer.

16. Dispositif d'affichage de carte selon la revendication 15, dans lequel ladite partie d'agencement (4) de données de carte génère lesdites informations concernant des taxes à payer en se rapportant auxdites informations de communication se rapportant à ladite barrière de péage placée au niveau d'une entrée et d'une sortie pour une section passible de taxes à payer prédéterminée, et crée un modèle d'objet incluant un tarif pour ladite section passible de taxes à payer pour l'agencement sur ladite image de carte.

17. Dispositif d'affichage de carte selon la revendication 16, comprenant en plus une partie de stockage d'informations de billet (12) destinée à stocker des informations de billet correspondant à un billet utilisé pour payer le tarif pour ladite section passible de taxes à payer, où
ladite partie d'agencement (4) de données de carte génère lesdites informations de billet stockées dans ladite partie de stockage d'informations de billet (12) lorsque ledit billet est acheté, et en cas de besoin, change lesdites informations de communications.

18. Dispositif d'affichage de carte selon la revendication 17, dans lequel lesdites informations de billet incluent des informations concernant une date d'expiration dudit billet, et
ladite partie d'agencement (4) de données de carte se rapporte aux informations concernant la date d'expiration dudit billet, et en cas de besoin, crée un message à afficher sur ladite partie d'affichage (5).

19. Dispositif d'affichage de carte selon la revendication 1, dans lequel
ladite partie de communications (7) reçoit les informations de communications incluant des informations de position concernant tout véhicule disponible, et lorsque l'utilisateur souhaite prendre l'un des véhicules disponibles, transmet des informations sur le véhicule sélectionné incluant des informations pour spécifier le véhicule que l'utilisateur souhaite prendre, et
ladite partie d'agencement (4) de données de carte crée ledit modèle d'objet correspondant auxdites informations de communications pour l'agencement sur ladite image de carte, et lorsque l'utilisateur souhaite prendre l'un des véhicules disponibles, génère lesdites informations sur le véhicule sélectionné.

20. Dispositif d'affichage de carte selon la revendication 19, dans lequel
lesdits véhicules disponibles sont situés dans une plage de zones prédéterminée proche d'une position actuelle de l'utilisateur.

21. Dispositif d'affichage de carte selon la revendication 19, dans lequel lesdits véhicules disponibles se déplacent selon un programme sur une route prédéterminée.

22. Dispositif d'affichage de carte selon la revendication 19, dans lequel ladite partie de communications (7) transmet une demande pour des informations sur le véhicule incluant la position actuelle de l'utilisateur pour un centre d'informations pourvu à l'extérieur, et reçoit les informations de communications incluant les informations de position des véhicules disponibles sélectionnés par ledit centre d'information.

23. Dispositif d'affichage de carte selon la revendication 19, dans lequel ladite partie d'agencement (4) de données de carte se rapporte auxdites informations de communications, crée ledit modèle d'objet correspondant chacun audit véhicule disponible, et en cas de besoin, crée un modèle d'objet incluant des informations concernant lesdits véhicules disponibles pour l'agencement sur ladite image de carte.

24. Dispositif de navigation destiné à convertir des informations de communications pourvues de l'extérieur en un modèle d'objet applicable pour l'agencement sur une image de carte, et à effectuer un guidage vers une destination, ledit dispositif comprenant :
une partie d'entrée (2) destinée à recevoir une instruction d'un utilisateur; une partie de détection de position (9) destinée à détecter une position actuelle;
une partie de stockage de données de carte (3) destinée à stocker au préalable des données de carte;
une partie de stockage (6) d'informations d'affichage du modèle d'objet destinée à stocker au préalable des informations d'affichage du modèle d'objet pour afficher ledit modèle d'objet sur ladite image de carte;
une partie de sélection de route (10) destinée à sélectionner une route vers la destination sur la base de ladite instruction pourvue par ladite partie d'entrée (2), ladite position actuelle détectée par ladite partie de détection de position (9), et lesdites données de carte stockées dans ladite partie de stockage de données de carte (3);
une partie de communications (7) destinée à recevoir lesdites informations de communications incluant des informations qui varient avec le temps; une partie d'agencement (4) de données de carte destinée à créer ledit modèle d'objet en interprétant lesdites informations de communications et les informations d'affichage du modèle d'objet pourvues par ladite partie de stockage (6) d'informations d'affichage du modèle d'objet, et à agencer le modèle d'objet sur ladite carte;
une partie de guidage (11) destinée à effectuer le guidage vers la destination en réponse auxdites informations de communications reçues par ladite partie de communications (7), ladite route sélectionnée par ladite partie de sélection de route (10), ladite position actuelle détectée par ladite partie de détection de position (9), et lesdites données de carte pourvues par ladite partie de stockage de données de carte (3), et délivre en sortie une image de carte résultante obtenue par ladite partie d'agencement (4) de données de carte; et
une partie d'affichage (5) pour afficher ladite image de carte résultante délivrée en sortie depuis ladite partie de guidage (11); et comprenant en plus une partie de stockage d'informations temporelles (8) destinée à stocker des informations temporelles correspondant à une position d'une unité mobile qui se déplace selon un programme sur une route prédéterminée, où
ladite partie d'agencement (4) de données de carte se rapporte auxdites informations temporelles pour créer ledit modèle d'objet correspondant à ladite unité mobile pour l'agencement sur ladite image de carte.

25. Dispositif de navigation selon la revendication 24, dans lequel lesdites informations d'affichage du modèle d'objet comprennent :
des informations concernant la forme dudit modèle d'objet; et
des informations concernant le comportement dans le temps et dans l'espace dudit modèle d'objet.

26. Dispositif de navigation selon la revendication 25, dans lequel lesdites informations concernant le comportement dans le temps et dans l'espace dudit modèle d'objet sont décrites dans un langage d'interprétation orienté objet ne nécessitant pas de compilation.

27. Dispositif de navigation selon la revendication 25, dans lequel lesdites informations concernant le comportement dans le temps et dans l'espace dudit modèle d'objet incluent une condition d'exécution et une fonction d'exécution.

28. Dispositif de navigation selon la revendication 24, dans lequel ladite partie d'agencement (4) de données de carte agence de manière appropriée ledit modèle d'objet sur une image routière de ladite image de carte.

29. Dispositif de navigation selon la revendication 24, dans lequel ledit modèle d'objet est créé plusieurs fois et chacun est agencé de manière appropriée sur ladite image routière.

30. Dispositif de navigation selon la revendication 24, dans lequel ladite partie d'agencement (4) de données de carte comprend :
une partie d'exécution (41) d'informations d'affichage du modèle d'objet destinée à interpréter et à exécuter lesdites informations de communications et lesdites informations d'affichage du modèle d'objet introduites depuis ladite partie de stockage (6) d'informations d'affichage du modèle d'objet;
une partie de création du modèle d'objet (142, 145) destinée à créer ledit modèle d'objet en réponse à un résultat obtenu par ladite partie d'exécution (41) d'informations d'affichage du modèle d'objet; et
une partie d'agencement de données (143, 146) destinée à agencer ledit modèle d'objet sur ladite image de carte.

31. Dispositif de navigation selon la revendication 30, dans lequel ladite partie d'agencement (4) de données de carte comprend en plus une partie de création de carte en 3D (147) destinée à générer une image de carte en 3D sur la base de données de carte en 2D pourvues par ladite partie de stockage de données (3), et
ladite partie d'agencement de données (143) agence ledit modèle d'objet sur l'image de carte générée par ladite partie de création de carte en 3D (147).

32. Dispositif de navigation selon la revendication 30, dans lequel ladite partie d'agencement (4) de données de carte comprend en plus une partie de transformation de coordonnées 2D/3D (144) destinée à transformer un modèle d'objet en 2D créé par ladite partie de création du modèle d'objet (145) en un modèle d'objet en 3D, et
ladite partie d'agencement de données (143) agence le modèle d'objet en 3D transformé par ladite partie de transformation de coordonnées 2D/3D (144) sur ladite image de carte.

33. Dispositif de navigation selon la revendication 24, dans lequel ladite partie d'agencement (4) de données de carte se rapporte auxdites informations temporelles pour ne sélectionner que le modèle d'objet correspondant à ladite unité mobile à afficher sur ladite image de carte, et calcule une position du modèle d'objet sur ladite image de carte pour l'agencement de données.

34. Dispositif de navigation selon la revendication 24, dans lequel ladite partie de communications (7) reçoit les informations de communication incluant des informations destinée à spécifier une barrière de péage à franchir, et en cas de besoin, transmet des informations concernant des taxes à payer pour un traitement de paiement de taxes à payer, et
ladite partie d'agencement (4) de données de carte crée, en cas de besoin, ledit modèle d'objet correspondant auxdites informations de communications pour l'agencement sur ladite image de carte, et génère lesdites informations concernant des taxes à payer.

35. Dispositif de navigation selon la revendication 34, dans lequel ladite partie de guidage (11) génère lesdites informations concernant des taxes à payer en se rapportant auxdites informations de communication se rapportant à ladite barrière de péage placée au niveau d'une entrée et d'une sortie pour une section passible de taxes à payer prédéterminée, et
ladite partie d'agencement (4) de données de carte crée un modèle d'objet incluant un tarif pour ladite section passible de taxes à payer pour l'agencement sur ladite image de carte.

36. Dispositif de navigation selon la revendication 34, comprenant en plus une partie de stockage d'informations de billet (12) destinée à stocker des informations de billet correspondant à un billet utilisé pour payer le tarif pour ladite section passible de taxes à payer, où
ladite partie de guidage (11) génère lesdites informations de billet stockées dans ladite partie de stockage d'informations de billet (12) lorsqu'on achète ledit billet, et en cas de besoin, change lesdites informations de communications.

37. Dispositif de navigation selon la revendication 36, dans lequel lesdites informations de billet incluent des informations concernant une date d'expiration dudit billet, et
ladite partie d'agencement (4) de données de carte se rapporte aux informations concernant la date d'expiration dudit billet, et en cas de besoin, crée un message à afficher sur ladite partie d'affichage (5).

38. Dispositif de navigation selon la revendication 24, dans lequel ladite partie de communications (7) reçoit les informations de communications incluant des informations de position concernant tout véhicule disponible, et lorsque l'utilisateur souhaite prendre l'un des véhicules disponibles, transmet des informations sur le véhicule sélectionné incluant des informations destinées à spécifier le véhicule que l'utilisateur souhaite prendre,
ladite partie d'agencement (4) de données de carte crée ledit modèle d'objet correspondant auxdites informations de communications pour l'agencement sur ladite image de carte, et
ladite partie de guidage (11) génère lesdites informations sur le véhicule sélectionné lorsque l'utilisateur souhaite prendre l'un des véhicules disponibles.

39. Dispositif de navigation selon la revendication 24, dans lequel ladite partie de communications (7) reçoit les informations de communications incluant des informations de position concernant tout véhicule disponible se déplaçant sur une route prédéterminée, et lorsque l'utilisateur souhaite prendre l'un des véhicules disponibles, transmet des informations sur le véhicule sélectionné incluant des informations destinées à spécifier le véhicule que l'utilisateur souhaite prendre,
ladite partie d'agencement (4) de données de carte crée ledit modèle d'objet correspondant auxdites informations de communications pour l'agencement sur ladite image de carte, et
ladite partie de guidage (11) génère lesdites informations sur le véhicule sélectionné lorsque l'utilisateur souhaite prendre l'un des véhicules disponibles.

40. Dispositif de navigation selon la revendication 39, dans lequel lesdits véhicules disponibles sont situés dans une plage de zones prédéterminée proche d'une position actuelle de l'utilisateur.

41. Dispositif de navigation selon la revendication 40, dans lequel lesdits véhicules disponibles se déplacent selon un programme sur la route prédéterminée.

42. Dispositif de navigation selon la revendication 41, dans lequel ladite partie de guidage (11) compare, au moins, ladite route prédéterminée sur laquelle lesdits véhicules disponibles se déplacent à la route vers la destination sélectionnée par ladite partie de sélection de route (10), et détermine si les véhicules disponibles sont appropriés.

43. Dispositif de navigation selon la revendication 42, dans lequel ladite partie de communications (7) transmet une demande pour des informations sur le véhicule incluant la position actuelle pour un centre d'informations pourvu de l'extérieur, et reçoit les informations de communications incluant les informations de position des véhicules disponibles sélectionnés par ledit centre d'informations.

44. Dispositif de navigation selon la revendication 39, dans lequel ladite partie d'agencement (4) de données de carte se réfère auxdites informations de communications, crée ledit modèle d'objet chacun correspondant audit véhicule disponible, et en cas de besoin, crée un modèle d'objet incluant chacun des informations concernant lesdits véhicules disponibles pour l'agencement sur ladite image de carte.

45. Procédé d'affichage de carte pour convertir des informations de communications pourvues de l'extérieur en un modèle d'objet applicable pour l'agencement sur une image de carte, ledit procédé comprenant :
une étape d'entrée pour la réception d'une instruction d'un utilisateur;
une étape de communications pour la réception desdites informations de communications, incluant des informations qui varient avec le temps;
une étape d'agencement de données de carte pour la création dudit modèle d'objet en interprétant lesdites informations de communications et des informations d'affichage du modèle d'objet correspondantes pour afficher ledit modèle d'objet sur ladite image de carte; et
une étape d'affichage destinée à afficher une image de carte résultante obtenue dans ladite étape d'agencement de données de carte;
une étape d'exécution d'informations d'affichage du modèle d'objet pour interpréter et exécuter lesdites informations de communications et lesdites informations d'affichage du modèle d'objet;
une étape de création du modèle d'objet pour créer ledit modèle d'objet en réponse à un résultat obtenu dans ladite étape d'exécution d'informations d'affichage du modèle d'objet;
une étape d'agencement de données destinée à agencer ledit modèle d'objet sur ladite image de carte;
et où, dans ladite étape d'agencement de données de carte, on se rapporte à des informations temporelles correspondant à une position d'une unité mobile se déplaçant sur une route prédéterminée selon un programme pour créer ledit modèle d'objet correspondant à ladite unité mobile pour l'agencement sur ladite image de carte.

46. Procédé d'affichage de carte selon la revendication 45, dans lequel ladite étape d'agencement de données de carte comprend en plus une étape de génération de carte en 3D pour générer une image de carte en 3D sur la base desdites données de carte qui sont en 2D, et
dans ladite étape d'agencement de données, ledit modèle d'objet est agencé sur l'image de carte générée dans ladite étape de création de carte en 3D.

47. Procédé d'affichage de carte selon la revendication 45, dans lequel ladite étape d'agencement de données de carte comprend en plus une étape de transformation de coordonnées 2D/3D destinée à transformer un modèle d'objet en 2D créé dans ladite étape de création du modèle d'objet en un modèle d'objet en 3D, et
dans ladite étape d'agencement de données, le modèle d'objet en 3D transformé dans ladite étape de transformation de coordonnées 2D/3D est agencé sur ladite image de carte.

48. Procédé d'affichage de carte selon la revendication 45, dans lequel dans ladite étape de communications, les informations de communications incluant des informations pour spécifier une barrière de péage à franchir sont reçues, et en cas de besoin, des informations concernant des taxes à payer pour un traitement de paiement de taxes à payer sont transmises, et
dans ladite étape d'agencement de données de carte, en cas de besoin, ledit modèle d'objet correspondant auxdites informations de communications est créé pour l'agencement sur ladite image de carte, et lesdites informations concernant des taxes à payer sont générées.

49. Procédé d'affichage de carte selon la revendication 45, dans lequel dans ladite étape de communications, les informations de communications incluant des informations de position concernant tout véhicule disponible sont reçues, et lorsque l'utilisateur souhaite prendre l'un des véhicules disponibles, des informations sur le véhicule sélectionné incluant des informations destinées à spécifier le véhicule que l'utilisateur souhaite prendre sont transmises, et
dans ladite étape d'agencement de données de carte, ledit modèle d'objet correspondant auxdites informations de communications est créé pour l'agencement sur ladite image de carte, et lorsque l'utilisateur souhaite prendre l'un des véhicules disponibles, lesdites informations sur le véhicule sélectionné sont générées.
